(19) Europäisches Patentamt European Patent Office Office européen des brevets

(11) **EP 2 284 528 A1**

(12) **EUROPEAN PATENT APPLICATION**

(43) Date of publication:
**16.02.2011 Bulletin 2011/07**

(51) Int Cl.:
***G01N 27/30*** (2006.01)   ***C12Q 1/00*** (2006.01)
***G01N 33/487*** (2006.01)

(21) Application number: **10187784.3**

(22) Date of filing: **15.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **18.01.2008 US 22218 P**
**15.02.2008 US 29301 P**
**07.04.2008 US 43080 P**
**07.04.2008 US 43086 P**
**07.05.2008 US 51285 P**
**10.06.2008 US 60353 P**

(62) Document number(s) of the earlier application(s) in accordance with Art. 76 EPC:
**09701641.4 / 2 245 445**

(71) Applicant: **Lifescan Scotland Limited Inverness-shire IV2 3ED (GB)**

(72) Inventors:
• **Macfie, Gavin**
  **Inverness, Highland IV2 5ES (GB)**
• **Marshall, Robert**
  **Ross-shire, Highland IV7 8AX (GB)**

• **Alvarez-Icaza, Manuel**
  **Inverness, Highland IV2 4AL (GB)**
• **Delaney, Kevin**
  **Nairn, Highland IV12 4SH (GB)**
• **Duffus, Keith**
  **Dunblane, Highland FK15 0GD (GB)**
• **Jarvis, Tim**
  **Inverness, Highland IV2 6GU (GB)**
• **Lamacka, Martin**
  **Inverness, Highland IV2 3EN (GB)**
• **Phippen, Nick**
  **Inverness, Highland IV2 5AT (GB)**
• **Russel, Robert**
  **Inverness, Highland IV2 5HY (GB)**

(74) Representative: **Tunstall, Christopher Stephen Carpmaels & Ransford One Southampton Row London WC1B 5HA (GB)**

Remarks:
This application was filed on 15-10-2010 as a divisional application to the application mentioned under INID code 62.

(54) **Method of manufacturing test strip lots having a predetermined calibration characteristic and system comprising such a test strip**

(57)    A technique in which test strip lots can be prepared that do not require a user to input any calibration information before performing a test measurement. In particular in a generally well-controlled test strip manufacturing process, a high percentage of test strip lots can be produced that have a relatively constant batch slope and batch intercept. In a first aspect, there is provided a method of manufacturing a plurality of test strips, the method comprising: adjusting a working electrode area to output a batch slope that falls within a predetermined target batch slope range; and/or adjusting an amount of mediator in a reagent ink, to output a batch intercept that falls within a predetermined target batch intercept. In a further aspect, there is provided a method of manufacturing a plurality of test strips, the method comprising: adjusting a working electrode area to output a batch slope that is substantially equal to a predetermined target batch slope value; and/or adjusting an amount of mediator in a reagent ink, to output a batch intercept that is substantially equal to a predetermined target batch intercept value.

FIG. 27A

**Description**

**CROSS-REFERENCE**

This application is related to the following copending patent applications: U.S. Patent Application Serial No. 61/022218 [Attorney Docket No. DDI5156USPSP], entitled "A Method of Manufacturing Test Strip Lots Having A Predetermined Calibration Characteristic" filed on January 18, 2008; and U.S. Patent Application Serial No. 61/ 029301 [Attorney Docket No. DDI5159USPSP], entitled "A Method of Preparing Test Strip Lots Having A Signal Response With A Reduced Variability" filed on February 15, 2008; U.S. Patent Application Serial No. 61/043080 [Attorney Docket No. DDI5165USPSP], entitled "Method and System of Manufacturing Test Strip Lots Having A Predetermined Calibration Characteristic" filed on April 7, 2008, U.S. Patent Application Serial No. 61/043086 [Attorney Docket No. DDI5166USPSP], entitled "Test Strips Having Low-Variability in Screen-Printing of Electrode Patterns with Method Therefore" filed on April 7, 2008, U.S. Patent Application Serial No. 61/051285 [Attorney Docket No. DDI5167USPSP], entitled "Method and System of Manufacturing Test Strip Lots Having a Predetermined Calibration Characteristic" filed on May 7, 2008, U.S. Patent Application Serial No. 61/060353 [Attorney Docket No. DDI5156USPSP1], entitled "Method and System of Manufacturing Test Strip Lots having a Predetermined Calibration Characteristic", filed on June 10, 2008 which are hereby incorporated herein by reference.

**BACKGROUND**

Electrochemical glucose test strips, such as those used in the OneTouch® Ultra® whole blood testing kit, which is available from LifeScan, Inc., are designed to measure the concentration of glucose in a blood sample from patients with diabetes. The measurement of glucose can be based on the selective oxidation of glucose by the enzyme glucose oxidase (GO). The reactions that can occur in a glucose test strip are summarized below in Equations 1 and 2.

$$\text{Eq. 1} \qquad \text{Glucose} + GO_{(ox)} \rightarrow \text{Gluconic Acid} + GO_{(red)}$$

$$\text{Eq. 2} \qquad GO_{(red)} + 2Fe(CN)_6^{3-} \rightarrow GO_{(ox)} + 2Fe(CN)_6^{4-}$$

As illustrated in Equation 1, glucose is oxidized to gluconic acid by the oxidized form of glucose oxidase ($GO_{(ox)}$). It should be noted that $GO_{(ox)}$ may also be referred to as an "oxidized enzyme." During the reaction in Equation 1, the oxidized enzyme $GO_{(ox)}$ is converted to its reduced state, which is denoted as $GO_{(red)}$ (i.e., "reduced enzyme"). Next, the reduced enzyme $GO_{(red)}$ is re-oxidized back to $GO_{(ox)}$ by reaction with $Fe(CN)_6^{3-}$ (referred to as either the oxidized mediator or ferricyanide) as illustrated in Equation 2. During the re-generation of $GO_{(red)}$ back to its oxidized state $GO_{(ox)}$, $Fe(CN)_6^{3-}$ is reduced to $Fe(CN)_6^{4-}$ (referred to as either reduced mediator or ferrocyanide).

When the reactions set forth above are conducted with a test voltage applied between two electrodes, a test current can be created by the electrochemical re-oxidation of the reduced mediator at the electrode surface. Thus, since, in an ideal environment, the amount of ferrocyanide created during the chemical reaction described above is directly proportional to the amount of glucose in the sample positioned between the electrodes, the test current generated would be proportional to the glucose content of the sample. A mediator, such as ferricyanide, is a compound that accepts electrons from an enzyme such as glucose oxidase and then donates the electrons to an electrode. As the concentration of glucose in the sample increases, the amount of reduced mediator formed also increases; hence, there is a direct relationship between the test current, resulting from the re-oxidation of reduced mediator, and glucose concentration. In particular, the transfer of electrons across the electrical interface results in the flow of a test current (2 moles of electrons for every mole of glucose that is oxidized). The test current resulting from the introduction of glucose can, therefore, be referred to as a glucose current.

Because it can be very important to know the concentration of glucose in blood, particularly in people with diabetes, test meters have been developed using the principals set forth above to enable the average person to sample and test their blood for determining their glucose concentration at any given time. The glucose current generated is detected by the test meter and converted into a glucose concentration reading using an algorithm that relates the test current to a glucose concentration via a simple mathematical formula. In general, the test meters work in conjunction with a disposable test strip that may include a sample-receiving chamber and at least two electrodes disposed within the sample-receiving chamber in addition to the enzyme (e.g. glucose oxidase) and the mediator (e.g. ferricyanide). In use, the user pricks their finger or other convenient site to induce bleeding and introduces a blood sample to the sample-receiving chamber, thus starting the chemical reaction set forth above.

In electrochemical terms, the function of the meter is two fold. Firstly, it provides a polarizing voltage (approximately 400 mV in the case of OneTouch® Ultra®) that polarizes the electrical interface and allows current flow at the carbon working electrode surface. Secondly, it measures the current that flows in the external circuit between the anode (working electrode) and the cathode (reference electrode). The test meter may, therefore be considered to be a simple electrochemical system that operates in a two-electrode mode although, in practice, third and, even fourth electrodes may be used to facilitate the measurement of glucose and/or perform other functions in the test meter.

As is known, a glucose test can be performed with the test strip to determine a blood glucose concentration using batch calibration information such as batch slope and batch intercept values determined from the manufacturing of a particular strip lot. Thereafter, when a user performs a glucose test using a particular strip lot, the batch slope and batch intercept information must be inputted into a test meter. In one scenario, a user can select a calibration code on a test meter using a button, where the calibration code corresponds to the batch slope and the batch intercept of the test strip. In another scenario, a user can input a computer chip into the test meter, where the computer chip has the corresponding batch slope and intercept of the test strip. In both scenarios, a user must remember to input the correct calibration information. If a user forgets to account for a change in calibration factors when using a new lot of test strips, there is a possibility that an inaccurate analyte result may occur.

Further background can be found in: PCT Publication Serial No. WO2004/040287 [Attorney Docket No. DDI5019PCT], entitled "Splicing/Unsplicing Substrate in a Process for the Manufacture of Electrochemical Sensors" filed on October 30, 2003; PCT Publication Serial No. WO2004/040948 [Attorney Docket No. DDI5020PCT], entitled "Apparatus and Method for Controlling Registration of Print Steps in a Continuous Process for the Manufacture of Electrochemical Sensors" filed on October 30, 2003; PCT Publication Serial No. WO2004/040005 [Attorney Docket No. DDI5021PCT], entitled "Cooling Stations for Use in a Web Process for the Manufacture of Electrochemical Sensors" filed on October 30, 2003; PCT Publication Serial No. WO2004/039600 [Attorney Docket No. DDI5022PCT] entitled "Enzyme Print Humidification in a Continuous Process for Manufacture of Electrochemical Sensors" filed on October 30, 2003; PCT Publication Serial No. WO2004/040290 [Attorney Docket No. DDI5023PCT] entitled "Moveable Flat Screen Printing for Use in a Web Process for the Manufacture of Electrochemical Sensors" filed on October 30, 2003; PCT Publication Serial No. WO2004/040285 [Attorney Docket No. DDI5024PCT] entitled "Pre-conditioning of a Substrate in a Continuous Process for Manufacture of Electrochemical Sensors" filed on October 30, 2003; PCT Publication Serial No. WO2004/039897 [Attorney Docket No. DDI5025PCT] entitled "Fast Ink Drying in a Continuous Process for Manufacture of Electrochemical Sensors" filed on October 30, 2003; and PCT Publication Serial No. WO2001/73109 [Attorney Docket No. DDI0010PCT] entitled "Continuous Process for Manufacture of Disposable Electrochemical Sensors" filed on March 28, 2001.

US Patent Application Serial No. US2008/0066305 filed on October 30, 2007 and published on March 20, 2008 describes a sensor, the sensor is calibration adjusted, and a method of making a sensor. US Patent Application Serial No. US2007/0045126 filed on February 4, 2005 describes oxidizable species as an internal reference for biosensors and a method of use.

## SUMMARY OF THE DISCLOSURE

Applicants have discovered various embodiments of a technique in which test strip lots can be prepared that do not require a user to input any calibration information before performing a test measurement. In particular, applicants have discovered that, in a generally well-controlled test strip manufacturing process, a high percentage of test strip lots can be produced that have a relatively constant batch slope and batch intercept.

Typically, a batch intercept and slope is established for each batch. If the established batch intercept and slope for a batch fall within ranges for batch slope and intercept associated with a particular calibration code, then that calibration code and associated calibration information can be assigned to that batch. The associated calibration information assigned to the batch typically includes typical batch slope and intercept information for that calibration code that can be used instead of the established batch slope and intercept.

Providing a user with test strips that have substantially the same batch slope and batch intercept values will obviate the need for a user to input calibration code information to the test meter. As a result, the risk of obtaining an inaccurate glucose concentration will be reduced because a user no longer has to remember to input the correct calibration code information when testing from a new lot of test strips.

In one embodiment, the test strips from the process have batch slope and batch intercept values that fall within predetermined target ranges for the batch slope and batch intercept, for example, within predetermined target ranges for the batch slope and batch intercept for a predetermined calibration code.

In another embodiment, the test strips from the process have a batch slope and batch intercept that is substantially the same as predetermined target batch slope and predetermined target batch intercept.

In one aspect, a method of manufacturing a test strip is provided. The method can be achieved by: adding a predetermined amount of reduced mediator to a reagent ink, the reagent ink being disposed on a working electrode, to output a batch intercept that falls within a predetermined target batch intercept range; and, adjusting a working electrode area to output a batch slope that falls within a predetermined target batch slope range.

In one aspect, a method of manufacturing a test strip is provided. The method can be achieved by: adding a predetermined amount of reduced mediator to a reagent ink, the reagent ink being disposed on a working electrode, to output a batch intercept that is substantially equal to a predetermined target batch intercept; and/or adjusting a working electrode area to output a batch slope that is substantially equal to a predetermined target batch slope.

In yet another aspect, a test strip is provided that includes first and, in one exemplary embodiment, second working electrodes and a reagent layer. The first and second working electrode (when provided) both have a width of about 0.55 millimeters to about 0.85 millimeters or from about 0.6 mm to about 0.8 mm. The reagent layer is disposed proximate the working electrode. The reagent layer includes an oxidized mediator, a reduced mediator, and an enzyme. The reduced mediator is not greater than about 0.6% by weight of a sum of the reduced mediator and the oxidized mediator, so that the test strip has a predetermined target batch slope and predetermined target batch intercept.

In a further aspect, a test strip is provided that includes first and, in one exemplary embodiment, second working electrodes and a reagent layer. The first and second working electrode (when provided) both have an area from about $0.44 \text{ mm}^2$ to about $0.68 \text{ mm}^2$ or from about $0.48 \text{ mm}^2$ to about $0.64 \text{ mm}^2$. The reagent layer is disposed proximate the working electrode. The reagent layer includes an oxidized mediator, a reduced mediator, and an enzyme. The reduced mediator is not greater than 0.8% by weight of a sum of the reduced mediator and the oxidized mediator, so that the test strip has a predetermined target batch slope and predetermined target batch intercept.

In still a further aspect, a method of manufacturing a plurality of test strips is provided. The method can be achieved by: manufacturing a first plurality of test strips, each test strip comprising a working electrode having a first area; calibrating the first plurality of test strips to determine a first slope and a first intercept; calculating a second area based on the first slope and a predetermined target slope; manufacturing a second plurality of test strips, each test strip comprising a working electrode having the calculated second area.

In a further aspect, applicants have discovered various embodiments of a technique in which test strips lots can be prepared that have a signal response with reduced variability. In particular, applicants have discovered that, a high percentage of test strip lots can be produced that have a relatively constant batch slopes by controlling the density of a reagent formulation. Reducing the variability in batch slopes will reduce the number of calibration codes needed to characterize the test strip lots.

In one embodiment, a method of manufacturing a reagent formulation can be achieved by (i) mixing a solution that includes a rheological control agent for a predetermined amount of time; (ii) measuring a density of the solution; (iii) if the density is not greater than a threshold, continuing to mix the reagent formulation for a predetermined amount of time such that the density is about equal to or greater than the threshold; and (iv) upon the density being about equal to or greater than the threshold, blending a mediator and an enzyme with the solution to form the reagent formulation.

In yet another embodiment, a method of manufacturing a plurality of test strips can be achieved by adjusting a density of a colloidal suspension to a targeted density; adding a mediator and an enzyme to the colloidal suspension to form a reagent formulation; disposing the reagent formulation on a working electrode for each test strip of the plurality of test strips; calibrating the plurality of test strips to determine a batch slope; and outputting a batch slope that is substantially equal to a targeted batch slope.

In a further embodiment, a method of manufacturing a reagent formulation can be achieved by (i) mixing a solution that includes a rheological control agent, a mediator and an enzyme for a predetermined amount of time; (ii) measuring a density of the solution; and (iii) if the density is not greater than a threshold, continuing to mix the solution for a predetermined amount of time such that the density is about equal to or greater than the threshold.

In yet another embodiment, a method of manufacturing a reagent formulation can be achieved by: (i) mixing a solution that includes a rheological control agent for a predetermined amount of time; (ii) measuring a density of the solution; (iii) if the density is not within a targeted range, continuing to mix the solution for a predetermined amount of time such that the density is within the targeted range; and (iv) upon the density being within the targeted range, blending a mediator and an enzyme with the solution to form the reagent formulation.

In a yet a further embodiment, a method of manufacturing a plurality of test strips can be achieved by: manufacturing a first plurality of test strips, each test strip comprising a working electrode coated with a reagent formulation having a first density; calibrating the first plurality of test strips to determine a first slope; calculating a second density based on the first slope and a targeted slope; manufacturing a second plurality of test strips, each test strip comprising a working electrode coated with a reagent formulation having the second density.

In yet a further exemplary embodiment, the step of adjusting the density by mixing or otherwise as herein described can be conducted in advance of use. Furthermore, in one exemplary embodiment, adding mediator and an enzyme can take place immediately (e.g. within 24 hours or preferably within 12 hours or more preferably within about 4 to 6 hours) of anticipated use of the reagent formulation. Thus, the applicants have appreciated that primary active ingredients (mediator and enzyme) have little impact on density enabling separation in time of the step of adjusting density and the step of adding ingredients. Since the lifetime of the reagent formulation is limited once the active ingredients are added, this ability to conduct half the reagent formulation manufacturing process in advance represents a benefit to the organization of the manufacturing process.

In a further aspect, applicants have discovered various embodiments of a technique in which test strip lots can be prepared that have a signal response with reduced variability. In particular, applicants have discovered that, a high percentage of test strip lots can be produced that have relatively constant batch slopes by controlling various parameters relating to the screen-print process, parameters and components for the carbon electrodes on the substrate of the test strip. Reducing the variability in batch slopes will reduce the number of calibration codes needed to characterize the test strip lots.

In one aspect, a method of manufacturing a test strip is provided. The method can be achieved by: (i) dispensing a conductive ink on a metallic screen; (ii) locating a substrate proximate to the metallic screen; (iii) transferring the conductive ink onto the substrate with a squeegee; (iv) calculating a working electrode area that causes the batch slope to be substantially equal to a predetermined target batch slope; (v) transferring an insulation ink onto the conductive layer to form a working electrode having the calculated working electrode area. In further embodiments, steps (vi) and (vii) below may be additional to, or alternative to, steps (iv) and (v) above; (vi) calculating an amount of reduced mediator that causes the batch intercept to be substantially equal to a predetermined target batch intercept; and (vii) transferring a reagent ink onto the working electrode, the reagent ink including the calculated amount of reduced mediator.

In another aspect, a method of manufacturing a test strip is provided. The method can be achieved by: (i) dispensing a conductive ink on a screen, the screen being made of a material that does not irreversibly deform when subjected to pressures greater than 4 bars (for example, from 4 bars up to the limit of the machine); (ii) locating a substrate proximate to the screen; (iii) transferring the conductive ink onto the substrate with a squeegee. Further steps may include (iv) calculating a working electrode area that causes the batch slope to be substantially equal to a predetermined target batch slope; (v) transferring an insulation ink onto the conductive layer to form a working electrode having the calculated working electrode area. Additional or alternative further steps may include (vi) calculating an amount of reduced mediator that causes the batch intercept to be substantially equal to a predetermined target batch intercept; and (vii) transferring a reagent ink onto the working electrode, the reagent ink including the calculated amount of reduced mediator. Here, the machine could include the screen, the frame, the squeegee, and the mechanical apparatus for applying pressure to the screen with the squeegee

In a further aspect, applicants have discovered various embodiments of a technique in which test strip lots can be prepared that have a signal response with reduced variability. In particular, applicants have discovered that, a high percentage of test strip lots can be produced that have relatively constant batch slopes by controlling various parameters relating to the screen-print process, parameters and components for the carbon electrodes on the substrate of the test strip. Reducing the variability in batch slopes will reduce the number of calibration codes needed to characterize the test strip lots.

In one aspect, a method of screen-printing conductive ink onto a substrate to form a test strip is provided. The method can be achieved by: (i) dispensing the conductive ink on a metallic screen; (ii) locating the substrate proximate to the metallic screen; and (iii) transferring the conductive ink onto the substrate with a squeegee having a hardness greater than 55 Shores Hardness A scale.

In yet another aspect, a method of screen-printing conductive ink onto a substrate to form a test strip is provided. The method can be achieved by: (i) dispensing the conductive ink on a screen, the screen being made of a material that does not irreversibly deform when subjected to pressures greater than 4 bars (for example, from 4 bars up to the limit of the machine); (ii) locating the substrate proximate the screen; and (iii) transferring the conductive ink onto the substrate with a squeegee having a hardness greater than 55 Shores Hardness A scale.

In yet a further aspect, a screen-printing device to print images onto a substrate is provided. The device includes a roller, metallic screen, carbon ink and a squeegee. The roller is configured to support and transport the substrate. Alternatively, a planar platten could be used instead of a roller. The metallic screen mesh has an image mask of electrode tracks formed thereon, the screen mesh being in contact with the substrate proximate the roller. Preferably, the carbon ink is disposed on the mesh, the ink having a viscosity of about 10,000 centistokes per second to about 40,000 centistokes per second. Preferably, the squeegee includes a material having a Shores Hardness A Scale characteristic greater than 55 and configured to force the carbon ink through the screen mesh by application of pressure to the squeegee greater than 4 bars to form an image of the electrode tracks on the substrate. Preferably, the device is configured to form an image of the electrode tracks such that any variations in a length of the carbon electrode track is less than about 3.5% or, in one embodiment less than about 2.5% from a predetermined length. For example, the length of the carbon working electrode can be a distance that is measured along a virtual line perpendicular to the two side edges of the carbon working electrode. Preferably, the device is alternatively or supplementally configured so that any minimum gap between any two working electrode tracks does not vary by more than about 30% from a predetermined gap.

In one exemplary embodiment, the squeegee has a hardness between 55 and 95 Shores Hardness A Scale, in another between 55 and 85 Shores Hardness A Scale, in yet another between 60 and 80 Shores Hardness A Scale, in yet another between 55 and 75 Shores Hardness A Scale.

In yet another aspect, an analyte test strip is provided that includes a substrate and carbon ink disposed on the substrate by a squeegee through a metallic screen to define carbon electrode tracks with each carbon electrode track extending along a longitudinal axis so that any variations in a length of the carbon electrode track as measured along a virtual line perpendicular to the longitudinal axis between two side edges of a carbon electrode track in one strip compared to a length of a carbon electrode track in other test strips, of a predetermined sample of test strips, is less than about 2.5%.

In a further aspect, an analyte test strip is provided that includes a substrate and a plurality of carbon electrode tracks disposed on the substrate via carbon ink deposition by a squeegee of greater than 55 Shore Hardness A scale through a metallic screen so that any minimum gap between any two working electrode tracks does not vary by more than 30% from a predetermined value. In yet a further aspect, an analyte test strip is provided that includes a substrate and carbon ink disposed on the substrate by a squeegee through a metallic screen to define at least one carbon electrode track having a length that extends along a virtual line perpendicular to the longitudinal axis between two side edges of the at least one track, in which any variations in the length compared to another length of another printed carbon track of at least one other test strip is less than about 2.5%.

In one aspect, a method of manufacturing a test strip batch is provided. The method can be achieved by: computing a working electrode area based on a target slope and a previous batch slope, the previous batch slope obtained from a previously made test strip batch; adjusting the working electrode area to be the calculated working electrode area. Preferably, the method also includes calculating an added amount of reduced mediator based on a target intercept, a percent reduced mediator impurity, and a background intercept; and adding the amount of reduced mediator to a reagent ink.

In yet another aspect, a method of manufacturing a plurality of test strip batches is provided where each test strip batch has a target slope and a target intercept. The method can be achieved by: preparing a first plurality of test strip batches over a period of time; calibrating the first plurality of test strip batches to determine a batch slope and a batch intercept for each test strip batch; calculating a first working electrode area based on the target slope and a previous batch slope, the previous batch slope obtained from a previously made test strip batch; calculating a first added amount of reduced mediator based on the target intercept, a percent reduced mediator impurity, and a background intercept; preparing a first reagent ink that includes the first added amount of reduced mediator; preparing a second plurality of test strips with the first calculated working electrode area and the first reagent ink; calibrating the second plurality of test strips to determine a second batch slope and a second batch intercept; if the second batch slope and the second batch intercept are substantially equal to the target slope and the target intercept, then prepare a third plurality of test strip batches using the first calculated working electrode area and the first reagent ink. In yet a further embodiment, if the second batch slope is not substantially equal to the target slope, then the method further includes calculating a second working electrode area based on a difference between the second batch slope and the target slope, and then preparing a fourth plurality of test strips to include the second calculated working electrode area. In a further embodiment, if the second batch intercept is not substantially equal to the target intercept, then the method further includes calculating a second added amount of reduced mediator based on a difference between the second batch intercept and the target intercept, and then preparing the fourth plurality of test strips to include a second reagent ink having the second added amount of reduced mediator.

In yet a further exemplary embodiment, if the second batch intercept is not substantially equal to the target intercept, then the method includes, alternatively, or in addition, calculating a second amount of reduced mediator based on the target intercept, a percent reduced mediator impurity and a back ground intercept. In a further embodiment, the background intercept and/or a coefficient constant, if required, are adjusted to take account of the second calculated working electrode area.

In yet another aspect, a method of manufacturing a plurality of test strip batches is provided where each test strip batch has a target slope. The method can be achieved by:

preparing a first plurality of test strip batches over a period of time; calibrating the first plurality of test strip batches to determine a batch slope for each test strip batch;
calculating a first working electrode area based on the target slope and a previous batch slope, the previous batch slope obtained from a previously made test strip batch; preparing a second plurality of test strips with the first calculated working electrode area; calibrating the second plurality of test strips to determine a second batch slope; if the second batch slope is substantially equal to the target slope, then prepare a third plurality of test strip batches using the first calculated working electrode area. In a further embodiment, if the second batch slope is not substantially equal to the target slope, then the method further includes calculating a second working electrode area based on a difference between the second batch slope and the target slope, and then preparing a fourth plurality of test strips to include the second calculated working electrode area.

In yet another aspect, a method of manufacturing a plurality of test strip batches is provided where each test strip batch as a target intercept. The method can be achieved by:

preparing a first plurality of test strip batches over a period of time; calibrating the first plurality of test strip batches to determine a batch intercept for each test strip batch;

calculating a first added amount of reduced mediator based on the target intercept, a percent reduced mediator impurity, and a background intercept; preparing a first reagent ink that includes the first added amount of reduced mediator; preparing a second plurality of test strips with the first reagent ink; calibrating the second plurality of test strips to determine a second batch intercept; if the second batch intercept is substantially equal to the target intercept, then prepare a third plurality of test strip batches using the first reagent ink. In a further embodiment, if the second batch intercept is not substantially equal to the target intercept, then the method further includes calculating a second added amount of reduced mediator based on a difference between the second batch intercept and the target intercept, and then preparing the fourth plurality of test strips to include a second reagent ink having the second added amount of reduced mediator.

In yet a further aspect, a method of manufacturing a test strip batch having a target slope and target intercept is provided. The method can be achieved by:(i) dispensing a conductive ink on a metallic screen; (ii) locating a substrate proximate to the metallic screen; (iii) transferring the conductive ink onto the substrate with a squeegee to form a conductive layer; (iv) computing a working electrode area based on the target slope and a previous batch slope, the previous batch slope obtained from a previously made test strip batch, so that the resulting batch slope is substantially equal to the target slope; (v) transferring an insulation ink onto the conductive layer to form a working electrode having the calculated working electrode area; (vi) calculating an added amount of reduced mediator based on the target intercept, a percent reduced mediator impurity, and a background intercept, so that the resulting batch intercept is substantially equal to the target intercept; (vii) preparing a reagent ink that includes the calculated added amount of reduced mediator; (viii) if the reagent ink does not have a density within a target range, adjusting the density of the reagent by mixing the reagent ink for a period of time and/or adding a rheological control agent; and (ix) transferring the reagent ink onto the working electrode.

In yet another aspect, a method of manufacturing enzyme ink is provided. The method can be achieved by: calculating an amount reduced mediator based on a target intercept, a percent reduced mediator impurity, and a background intercept; and adding the amount of reduced mediator to the enzyme ink.

In still a further aspect, a plurality of test strip batches is provided where each test strip includes a substrate, a conductive layer, and a reagent layer. The conductive layer is disposed on the substrate. The reagent layer is disposed on the conductive layer. The reagent layer includes an added amount of reduced mediator $F_{add}$ so that a batch intercept for each test strip batch is substantially equal to a target intercept $B_{target}$, the added amount of reduced mediator $F_{add}$ generally defined by a relationship of, where $B_0$ is a background intercept, $K_{int}$ is a constant, and $F_{imp}$ is an amount of reduced mediator associated with the oxidized mediator as an impurity.

In yet still a further aspect, a plurality of test strip batches in which each test strip includes a substrate, a conductive layer, and a reagent layer. The conductive layer is disposed on the substrate. The reagent layer is disposed on the conductive layer. The reagent layer includes an added amount of reduced mediator so that a batch intercept for each test strip batch of the plurality of test strip batches have a variation of less than about + or - 15%.

In a further aspect, a system is configured to measure an analyte. The system includes a test meter and a test strip. The test meter includes a strip port connector, a processor, a memory, and a display, in which the processor is coupled to the memory and the display. The test strip includes a substrate; a conductive layer disposed on the substrate; and a reagent layer disposed on the conductive layer, the reagent layer including an added amount of reduced mediator so that a plurality of batch intercepts has a variation of less than about + or - 15%.

A method of performing an analyte measurement is provided. The method can be achieved by: inserting a test strip into a test meter, the test meter configured to operate using at least one predetermined calibration value, the test strip having a calculated enzyme working area exposed to a blood sample and an added amount of reduced-mediator to the calculated enzyme working area so that the test strip is calibrated to the predetermined calibration value; measuring an analyte concentration once a blood sample is applied to an inlet of the test strip. Preferably, the method includes displaying an analyte concentration on a display of the test meter.

A method of performing an analyte measurement is provided. The method can be achieved by: inserting a test strip into a test meter, the test meter configured to operate using at least one predetermined calibration input, such as a calibration input value, the test strip having a calculated enzyme working area exposed to a blood sample and an added amount of reduced-mediator to the calculated enzyme working area so that the test strip is calibrated to the predetermined calibration input; measuring an analyte concentration once a blood sample is applied to an inlet of the test strip. Preferably, the method includes displaying an analyte concentration on a display of the test meter. Preferably, at least one calibration input is preset within the meter.

A system configured to measure analyte is provided. The system includes a meter and a test strip. The meter is configured to operate using at least one predetermined calibration input. The test strip has a calculated enzyme working area exposed to a blood sample and an added amount of reduced-mediator to the calculated enzyme working area so that the test strip is calibrated to the predetermined calibration input; measuring an analyte concentration once a blood sample is applied to an inlet of the test strip.

These and other embodiments, features and advantages will become apparent to those skilled in the art when taken with reference to the following more detailed description of the invention in conjunction with the accompanying drawings that are first briefly described.

In a first aspect, there is provided a method of manufacturing a plurality of test strips, the method comprising: adjusting a working electrode area to output a batch slope that falls within a predetermined target batch slope range; and/or adjusting an amount of mediator in a reagent ink, to output a batch intercept that alls within a predetermined target batch intercept.

In a further aspect, there is provided a method of manufacturing a plurality of test strips, the method comprising: adjusting a working electrode area to output a batch slope that is substantially equal to a predetermined target batch slope value; and/or adjusting an amount of mediator in a reagent ink, to output a batch intercept that is substantially equal to a predetermined target batch intercept value.

In any aspect of the invention, an example embodiment is provided in which, the target batch slope is a target batch slope value or a range of target batch slope values. In any aspect of the invention, an example embodiment is provided in which the target batch intercept is a target batch intercept value or a range of target batch intercept values.

In any aspect of the invention, the test strip comprises a plurality of layers and adjusting the working electrode area comprises in process adjustment of one layer of the plurality of layers.

In any aspect of the invention an example embodiment is provided, in which the step of adjusting comprises adding a predetermined amount of mediator to a reagent ink.

In any aspect of the invention an example embodiment is provided, in which the step of adjusting comprises adjusting a reduced mediator.

In any aspect of the invention, an example embodiment comprises: adding an amount of reduced mediator to a plurality of batches of test strips so that the plurality of batch intercepts has a variation of less than about +/- 15%.

In any aspect of the invention, an example embodiment comprises: calculating a working electrode area that causes the batch slope to be substantially equal to a predetermined target batch slope.

In any aspect of the invention, an example embodiment comprises transferring an insulation ink onto a conductive layer to form a working electrode having the calculated working electrode area.

In any aspect of the invention, an example embodiment comprises calculating an amount of reduced mediator that causes the batch intercept to be substantially equal to a predetermined target batch intercept.

In any aspect of the invention, an example embodiment comprises transferring the reagent ink onto the working electrode, the reagent ink including the calculated amount of reduced mediator.

In any aspect of the invention, an example embodiment comprises: manufacturing a first plurality of test strips, each test strip comprising a working electrode area having a first area; calibrating the first plurality of test strips to determine a first slope and a first intercept; calculating a second area based on the first slope and a predetermined target slope; manufacturing a second plurality of test strips, each test strip comprising a working electrode having the calculated second area.

In any aspect of the invention, an example embodiment comprises: calibrating a second plurality of test strips to determine a second slope and a second intercept in which the second slope is substantially equal to the predetermined target slope and the second intercept is substantially equal to the predetermined target intercept.

In any aspect of the invention an example embodiment is provided, in which a test strip batch has a target slope and a target intercept, the method further comprising: preparing a first plurality of test strip batches over a period of time; calibrating the first plurality of test strip batches to determine a batch slope and a batch intercept for each test strip batch; calculating a first working electrode area based on the target slope and a previous batch slope, the previous batch slope obtained from a previously made test strip batch; and/or calculating a first added amount of reduced mediator based on the target intercept, a percent reduced mediator impurity, and a background intercept; preparing a first reagent ink that includes the first added amount of reduced mediator; preparing a second plurality of test strips with the first calculated working electrode area and the first reagent ink; calibrating the second plurality of test strips to determine a second batch slope and a second batch intercept.

In any aspect of the invention an example embodiment is provided, in which, if the second batch slope and/or the second batch intercept are substantially equal to the target slope and/or the target intercept, then preparing a third plurality of test strip batches using the first calculated working electrode area and/or the first reagent ink.

In any aspect of the invention an example embodiment is provided, in which if the second batch slope is not substantially equal to the target slope, then calculating a second working electrode area based on a difference between the second batch slope and the target slope and then preparing a fourth plurality of test strips to include the second calculated working electrode area.

In any aspect of the invention, an example embodiment comprises: if the second batch intercept is not substantially equal to the target intercept, then calculating a second added amount of reduced mediator based on a target intercept, a percent reduced mediator impurity and a background intercept and then preparing a fourth plurality of test strips to include the second calculated working electrode area.

In any aspect of the invention, an example embodiment comprises: calculating an added amount of reduced mediator based on a target intercept, a percent reduced mediator impurity and a background intercept; and adding the amount of reduced mediator to the reagent ink.

In any aspect of the invention an example embodiment is provided, in which the step of calculating comprises determining the added amount of reduced mediator based on the target intercept, the percent reduced mediator impurity, the background intercept and a constant.

In any aspect of the invention, an example embodiment comprises adding an amount of reduced mediator determined by calculating a difference between the target intercept and the background intercept, dividing by a constant, and then subtracting the amount of reduced mediator impurity.

In any aspect of the invention an example embodiment is provided, in which the added amount of reduced mediator $F_{add}$ is generally defined by a relationship of $F_{add} = \dfrac{B_{t\,arg\,et} - B_0}{K_{int}} - F_{imp}$ \ where $B_{target}$ is the target intercept, $B_0$ is the background intercept, $K_{int}$ is a constant and $F_{imp}$ is an amount of reduced mediator associated with the oxidized mediator as an impurity.

In any aspect of the invention an example embodiment is provided, in which the added amount of mediator is adjusted to take account of the adjusted working electrode area.

In any aspect of the invention an example embodiment is provided, in which the background intercept and/or the constant are adjusted to take account of the adjusted working electrode area.

In any aspect of the invention an example embodiment is provided, in which the added mediator comprises ferrocyanide or potassium ferrocyanide.

In any aspect of the invention an example embodiment is provided, in which the second working electrode area is calculated based on the difference between the first slope and the predetermined target slope times a value correlating to a change in area per unit slope.

In any aspect of the invention, an example embodiment comprises the amount of reduced mediator impurity comprises an amount generally equal to an amount of oxidized mediator in the reagent ink multiplied by the percent reduced mediator impurity.

In any aspect of the invention an example embodiment is provided, in which the background intercept comprises an average based on a plurality of batch intercepts from previously made test strip batches.

In any aspect of the invention, an example embodiment comprises if the second batch intercept is not substantially equal to the target intercept, then calculating a second amount of reduced mediator based on a difference between second batch intercept and a target intercept and then preparing the fourth plurality of test strips to include a second reagent ink having the second added amount of mediator.

In any aspect of the invention an example embodiment is provided, in which one or both levers of adjusting a working electrode and adjusting an amount of mediator are preset for a cycle of runs, a cycle or run(s) comprising at least two runs.

In any aspect of the invention an example embodiment is provided, in which the reduced mediator in a reagent ink is not greater than 0.2% by weight of the reagent ink.

In any aspect of the invention, an example embodiment comprises a reduced mediator and an oxidized mediator where the reduced mediator is not greater than about 0.8% by weight of a sum of the reduced mediator and the oxidized mediator.

In any aspect of the invention an example embodiment is provided, in which the reduced mediator is not greater than about 0.6% by weight of a sum of the reduced mediator and the oxidized mediator.

In any aspect of the invention an example embodiment is provided, in which the working electrode area is adjusted by modifying a width of the working electrode.

In any aspect of the invention an example embodiment is provided, in which the width of the working electrode is from about 0.6 mm to about 0.8 mm.

In any aspect of the invention an example embodiment is provided, in which the area of the working electrode is from about 0.44 mm$^2$ to about 0.68 mm$^2$ or from about 0.48 mm$^2$ to about 0.64 mm$^2$.

In any aspect of the invention an example embodiment is provided, in which at least first and second working electrodes are provided and both have a width of about 0.55 mm to about 0.85 mm, or about 0.6 mm to about 0.8 mm.

In any aspect of the invention an example embodiment is provided, in which the target intercept is greater than the first intercept.

In any aspect of the invention, an example embodiment comprises: applying an insulation layer having an approximately rectangular or approximately square aperture on the working electrode of the second plurality of test strips to form the calculated second area.

In any aspect of the invention, an example embodiment comprises: adjusting a width of the shape in increments of about 25 microns; determining two increments that provide the two closest area values to the calculated second area; and selecting the increment that gives a larger area of the calculated second area.

In any aspect of the invention, an example embodiment comprises: adjusting a width of the shape in increments of about 25 microns; determining two increments that provide the two closest area values to the calculated second area; and selecting the increment that gives a smaller area of the calculated second area.

In any aspect of the invention an example embodiment is provided, in which the plurality of test strip batches comprises from about 10 batches to about 100 batches.

In any aspect of the invention an example embodiment is provided, in which a variation of 15% or less in batch intercepts is determined by calibrating about 500 to about 600 or more test strips.

In a first aspect, there is provided a method of preparing a reagent ink formulation for use in such a method comprising: a) preparing reagent ink; b) if the reagent ink does not have a density above a target threshold or within a target range, adjusting the density of the reagent ink.

In any aspect of the invention, an example embodiment comprises adjusting the density of the reagent ink by: mixing the reagent ink, or a component of the reagent ink, for a period of time; and/or adding a rheological control agent to the reagent ink, or to a component of the reagent ink; and/or subjecting the reagent ink, or a component of the reagent ink, to a reduced pressure.

In any aspect of the invention an example embodiment is provided, in which if the density is not greater than a threshold, or within a target range, continuing to adjust the density such that the density is about equal to or greater than the threshold, or within a target range.

In any aspect of the invention, an example embodiment comprises: i) mixing a solution that includes a rheological control-agent for a predetermined period of time; ii) measuring a density of the solution; iii) if the density is not greater than a threshold, or within a target range, continuing to mix the reagent formulation for a further predetermined amount of time such that the density is about equal to or greater than the threshold or within a target range.

In any aspect of the invention an example embodiment is provided, in which the step of mixing comprises mixing a solution that includes a rheological control agent, a mediator and an enzyme for a predetermined amount of time.

In a first aspect, there is provided a method of manufacturing a plurality of test strips, the method comprising: manufacturing a first plurality of test strips, each test strip comprising a working electrode coated with a reagent formulation having a first density; calibrating the first plurality of test strips to determine a first slope; calculating a second density based on the first slope and a targeted slope; manufacturing a second plurality of test strips, each test strip comprising a working electrode coated with a reagent formulation having a second density.

In any aspect of the invention, an example embodiment comprises preparing a first solution of a given density in advance, preparing a second solution comprising the first solution and an enzyme and mediator prior to use.

In any aspect of the invention an example embodiment is provided, in which the second solution is prepared between 1 to 24, 1 to 12, 1 to 6, 2 to 6 or 2 to 4 hours before use.

In any aspect of the invention, an example embodiment comprises the density being about equal to or greater than a threshold or within a target range, blending a mediator and an enzyme with the first solution to form the reagent formulation.

In any aspect of the invention, an example embodiment comprises: adjusting a density of the colloidal suspension to a targeted density; adding a mediator and an enzyme to the colloidal suspension to form a reagent formulation; disposing the reagent formulation on a working electrode for each test strip of the plurality of test strips; calibrating the plurality of test strips to determine a batch slope; and outputting a batch slope that is substantially equal to a targeted batch slope.

In any aspect of the invention, an example embodiment comprises: manufacturing a first plurality of test strips, each test strip comprising a working electrode coated with the reagent formulation having a first density; calibrating the first plurality of test strips to determine a first slope; calculating a second density based on the first slope and a targeted slope; manufacturing a second plurality of test strips, each test strip comprising a working electrode coated with a reagent formulation having a second density.

In any aspect of the invention an example embodiment is provided, in which the adjusting comprises changing a duration of a mixing time and/or adding an additional amount of rheological control agent.

In any aspect of the invention an example embodiment is provided, in which the targeted density is calculated by subtracting a second constant from a targeted batch slope and then dividing by a third constant.

In any aspect of the invention an example embodiment is provided, in which the targeted density ρ is calculated by an equation defined by $\rho = \dfrac{M_{cal} - k_2}{k_3}$, \, where ρ is the targeted density, $M_{cal}$ is the targeted batch slope, $k_2$ is a

second constant, and $k_3$ is a third constant.

In any aspect of the invention an example embodiment is provided, in which the rheological control agent comprises hydroxyl ethyl cellulose and/or a silica having hydrophilic and hydrophobic groups.

In any aspect of the invention an example embodiment is provided, in which the predetermined amount of mixing time is from about 3 to 30 minutes and/or is about 4 minutes or is about 16 minutes.

In any aspect of the invention an example embodiment is provided, in which the targeted density has a threshold of about 0.87 grams per $cm^3$ or the targeted density range is any value from about 0.7 grams per $cm^3$ to about 1.1 grams per $cm^3$ or is any value from about 0.92 grams per $cm^3$ to about 0.96 grams per $cm^3$ or is any value from about 1 gram per $cm^3$ to about 1.25 grams per $cm^3$, or is any value within a range of about 1.00 + or - about 0.015 grams per $cm^3$, or within a range of + or- about 0.015 grams per $cm^3$ or less of a targeted density value, such as any value between about 0.7 any 1.25 grams per $cm^3$.

In any aspect of the invention an example embodiment is provided, in which the step of mixing is performed with a propeller at about 3,000 rotations per minute.

In any aspect of the invention an example embodiment is provided, in which the targeted batch slope $M_{cal}$ is any value from about 16 nanoamperes per milligrams per deciliter to about 30 nanoamperes per milligram per deciliter and/or in which the second constant $k_2$ is any value from about 7 nanoamperes per milligram per deciliter to about 10 nanoamperes per milligram per deciliter and/or in which the third constant $k_3$ is any value from about 10 nanoamperes per milligram per deciliter per grams per $cm^3$ to about 12 nanoamperes per milligram per deciliter per grams per $cm^3$.

In a first aspect, there is provided a method of manufacturing a plurality of test strips according to any preceding claim or a method of screen printing a conductive ink onto a substrate to form a test strip, the method comprising: i) dispensing the conductive ink on a metallic screen and/or dispensing the conductive on a screen the screen being made of a material that does irreversibly deform when subjected to pressures greater than 4 bars by a squeegee; ii) locating the substrate proximate to the screen; iii) transferring the conductive ink onto the substrate with a squeegee.

In any aspect of the invention, an example embodiment comprises screen printing a conductive ink onto a substrate to form a test strip with a squeegee having a hardness greater than 55 Shores Hardness A scale.

In any aspect of the invention, an example embodiment comprises dispensing a conductive ink on a metallic screen.

In any aspect of the invention an example embodiment is provided, in which the squeegee comprises a material having a hardness in the range from about 60 to about 75 Shores Hardness A scale.

In any aspect of the invention an example embodiment is provided, in which the squeegee comprises a material having a hardness of about 65 Shores Hardness A scale or about 75 Shores Hardness A scale.

In any aspect of the invention an example embodiment, is provided, in which the squeegee comprises polyurethane.

In any aspect of the invention an example embodiment is provided, in which the transferring of the conductive ink comprises applying the squeegee to the screen with a pressure, the pressure being greater than about 4 bars or greater than 270N per meter of squeegee length e.g. for a squeegee blade of thickness of about 8 mm.

In any aspect of the invention an example embodiment is provided, in which the transferring of the conductive ink comprises applying the squeegee with a pressure, the pressure being greater than about 5 bars.

In any aspect of the invention an example embodiment is provided, in which the squeegee comprises a material with a low absorption of solvents contained in the conductive ink.

In any aspect of the invention an example embodiment is provided, in which the squeegee comprises a material that absorbs the solvents contained in the conductive at a rate less than about 2% in one hour or at a rate less than about 8% in 21 hours.

In any aspect of the invention an example embodiment is provided, in which the squeegee comprises a material that does not absorb any carbon material.

In any aspect of the invention an example embodiment is provided, in which the substrate and a frame of the screen are held at a fixed distance during the transferring of the conductive ink, the fixed distance ranging from about 0.6 millimeters to about 0.75 millimeters.

In any aspect of the invention an example embodiment is provided, in which the fixed distance is about 0.7 millimeters.

In any aspect of the invention an example embodiment is provided, in which the screen is coupled to a frame with a screen tension ranging from about 20 N/cm to about 30 N/cm.

In any aspect of the invention an example embodiment is provided, in which the material of the screen does not irreversibly deform when in contact with solvents in a carbon ink.

In any aspect of the invention an example embodiment is provided, in which the metallic screen mesh comprises a plurality of stainless steel wires each wire having a diameter of about 0.03 millimeters interwoven at a mesh angle of about 45 degrees to form a mesh with a mesh count of 125 per centimeter with mesh opening of 50 micrometers, open area of about 39%, and a mesh thickness of approximately 47 micrometers.

In any aspect of the invention an example embodiment is provided, in which the length (Y2) or a working electrode comprises approximately 0.84 millimeters and/or the predetermined gap between two or more working electrodes comprises approximately 150 microns.

In any aspect of the invention an example embodiment is provided in which, or in a first aspect, there is provided a test strip or an analyte test strip comprises the following: a substrate; and a carbon ink disposed on the substrate by a squeegee through a metallic screen to define carbon electrode tracks with each carbon electrode track so that any variations in a length (Y2) of the carbon electrode track as measured along a virtual line substantially perpendicular to the axis (L1 or L2) between two side edges (15A or 15B) of a carbon electrode track in one strip compared to a length of a carbon electrode track in other strips of the predetermined sample of test strips is less than about 3.5% or less than about 2.5%.

In any aspect of the invention an example embodiment is provided, in which the carbon electrode track is a carbon working electrode.

In any aspect of the invention an example embodiment is provided, in which any gap between any two carbon electrode tracks does not vary by more than about 30% from a predetermined gap.

In any aspect of the invention, an example embodiment comprises an arrangement such that any variations in a length of the carbon electrode track as measured along a virtual line perpendicular to an axis between two side edges of a carbon electrode track in a strip is less than about 3.5% or less than about 2.5% from a predetermined length.

In any aspect of the invention an example embodiment is provided in which or, in a first aspect, there is provided a screen printing device to print images on to a substrate, comprising: a metallic screen mesh having an image mask of an electrode pattern formed thereon; carbon ink disposed on the mesh, the ink having a viscosity of about 10,000 centistokes per second to about 40,000 centistokes per second; a squeegee to force the carbon ink through the screen mesh by application of pressure to the squeegee.

In a first aspect, there is provided a method of performing an analyte measurement, the method comprising: inserting a test strip into a test meter, the test meter configured to not receive a calibration input, the test strip manufactured to a method according to any preceding claim having a calculated enzyme working area and/or and added amount of reduced mediator in the reagent layer in the working electrode; measuring an analyte concentration upon application of a blood sample to an inlet of the test strip.

In any aspect of the invention, an example embodiment comprises: inserting a test strip into a test meter the test meter configured to operate using a predetermined calibration input, the test strip having a calculated working electrode area exposed to a blood sample and an added amount of reduced mediator to the reagent layer on the calculated working electrode area so that the test strip is calibrated to the predetermined calibration input; measuring an analyte concentration upon application of a blood sample to an inlet of the test strip.

In any aspect of the invention, an example embodiment comprises: a test meter including a strip port connector, a processor and a memory in which the processor is coupled to the memory, and test strip manufactured according to a method of any preceding claim comprising a substrate; a conductive layer disposed on the substrate; and a reagent layer disposed on the conductive layer, the reagent layer including an amount of reduced mediator so that a plurality of batch intercepts has a variation of less than about +/- 15%.

In any aspect of the invention, an example embodiment comprises a display, and in which the processor is coupled to the display.

In any aspect of the invention an example embodiment is provided, in which the calibration input comprises calibration information.

In any aspect of the invention an example embodiment is provided, in which the substrate comprises a polymer selected from a group consisting essentially of polyester, polyethylene terephthalate, and combinations thereof.

In any aspect of the invention an example embodiment is provided, in which a substrate is provided comprising a polymer in roll form having a thickness of about 350 microns by about 370 millimeters wide and about 660 meters in length.

In any aspect of the invention an example embodiment is provided, in which the substrate of the test strip comprises a generally planar configuration having a thickness of approximately 0.35 millimeters, a width of about 5.5 millimeters, and a length of about 27.5 millimeters.

In any aspect of the invention an example embodiment is provided, in which the conductive ink comprises carbon ink.

In any aspect of the invention an example embodiment is provided, in which the reagent comprises glucose oxidase enzyme.

## BRIEF DESCRIPTION OF THE DRAWINGS

The accompanying drawings, which are incorporated herein and constitute part of this specification, illustrate presently preferred embodiments of the invention, and, together with the general description given above and the detailed description given below, serve to explain features of the invention (wherein like numerals represent like elements), in which:

Figures 1 is a schematic diagram depicting eight sections of a web printing process.

Figure 2A is a schematic diagram depicting first and second sections of the web printing process.

Figure 2B is a schematic diagram depicting third, fourth, and fifth sections of the web printing process.

Figure 2C is a schematic diagram depicting sixth and seventh sections of the web printing process.

Figure 3A is a schematic diagram depicting a flood cycle.

Figure 3B is a schematic diagram depicting a print cycle.

Figure 4A is a perspective view of a squeegee.

Figure 4B is a top view of a screen having an artwork pattern.

Figure 4C is an expanded top view of the screen.

Figure 5 is a schematic diagram depicting 2 different squeegee angles.

Figure 6A is a schematic diagram depicting 2 different squeegee positions.

Figure 6B is a schematic diagram depicting a screen snap distance.

Figure 6C illustrates an exemplary frame to hold the mesh screen in relation to the artwork on the mesh.

Figure 7A is an example of a sensor sheet with first and second web view guides; first, second, third and fourth Y registration marks, and X registration marks.

Figure 7B is an exploded view of one row within a sensor sheet with a carbon X registration mark.

Figure 7C is an exploded view of one row within a sensor sheet with an insulation X registration mark over coating a carbon X registration mark.

Figure 8A illustrates an exemplary top exploded perspective view of an unassembled test strip.

Figure 8B illustrates an exemplary top plan view of the individual layers of the test strip of Figure 8A.

Figure 8C illustrates an exemplary top plan view of a proximal portion of a conductive layer of the test strip of Figure 8A.

Figure 8D illustrates an exemplary top plan view of a distal portion of the conductive layer of the test strip of Figure 8A.

Figure 8E illustrates an exemplary simplified top plan view of the distal portion of the conductive layer and an insulation layer in accordance with the test strip of Figure 8A.

Figure 8F illustrates an exemplary simplified top plan view of the distal portion of the conductive layer, the insulation layer, and an enzyme layer in accordance with the test strip of Figure 8A.

Figure 9 illustrates an exemplary simplified top plan view of the distal portion of the conductive layer and an insulation layer in accordance with the test strip of Figure 8A.

Figure 10 illustrates variation in the average length (Y2) of one working electrode, as measured proximate the insulation aperture of Figure 9 during a screen-printing run of 8 rolls of substrate, and the variation in batch slope (i.e. per roll) during the same run.

Figure 11 illustrates the variation in average length of the working electrode, in which the first eight rolls of substrates were screen printed using standard polyester screen and in which a new polyester screen was utilized after roll 8, and the variation in batch slope during the same run.

Figure 12 illustrates that the use of metallic screen ensures that variation in the average length of the working electrode over a ten rolls screen-print run is less than 2.5% from a desired width. The variation in slope during the same run is also shown.

Figure 13 illustrates that a potential problem arose with the use of metallic screen in that an image defect arose causing a gap between two working electrodes to be decreased, i.e., a "gap reduction" between the working electrodes.

Figure 14 illustrates various changes to the gap reduction when different techniques were utilized.

Figure 15 illustrates that the average gap between electrode tracks through a series of 16000 screen-printed cards. The average gap is not reduced whenever the pressure applied to the squeegee was greater than 4 bars or greater than about 270 Newtons of force per meter of squeegee length for a squeegee of given width such as about 8 mm or less. That is, whenever a lower squeegee pressure than 4 bars was utilized, the gap was decreased (i.e., gap reduction) and whenever a higher squeegee pressure was utilized, the gap did not decrease.

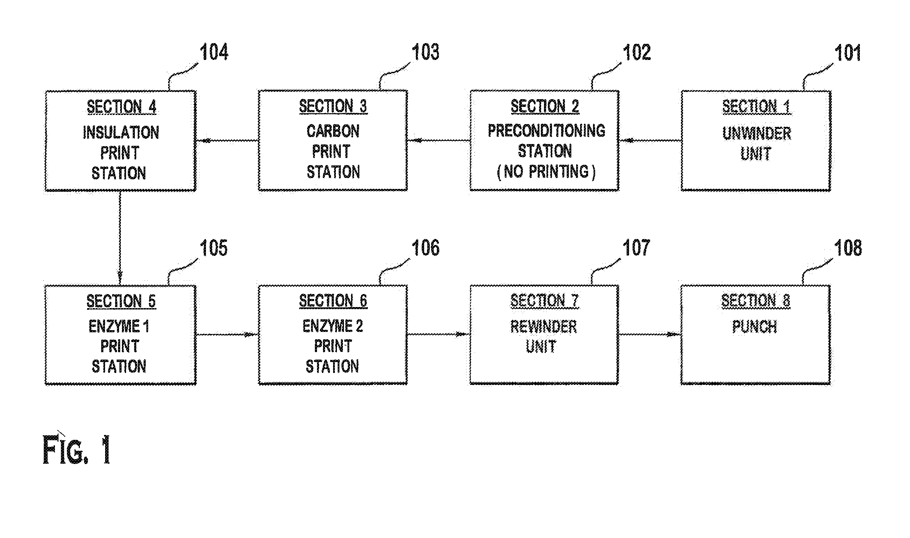

Figure 1 6 illustrates data from an experiment confirming that the higher squeegee pressure and a harder squeegee material allowed for the average gap to cluster around a predetermined gap of about 150 microns.

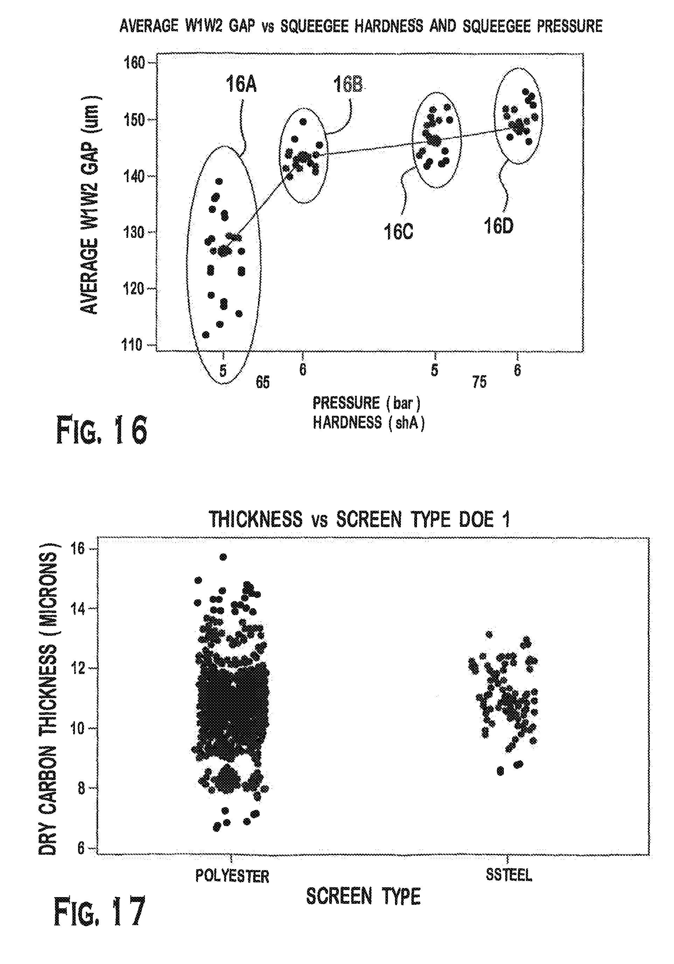

Figure 17 illustrates that the thickness variation of the carbon electrodes printed with a polyester screen was comparable to carbon electrodes printed with a stainless steel screen,

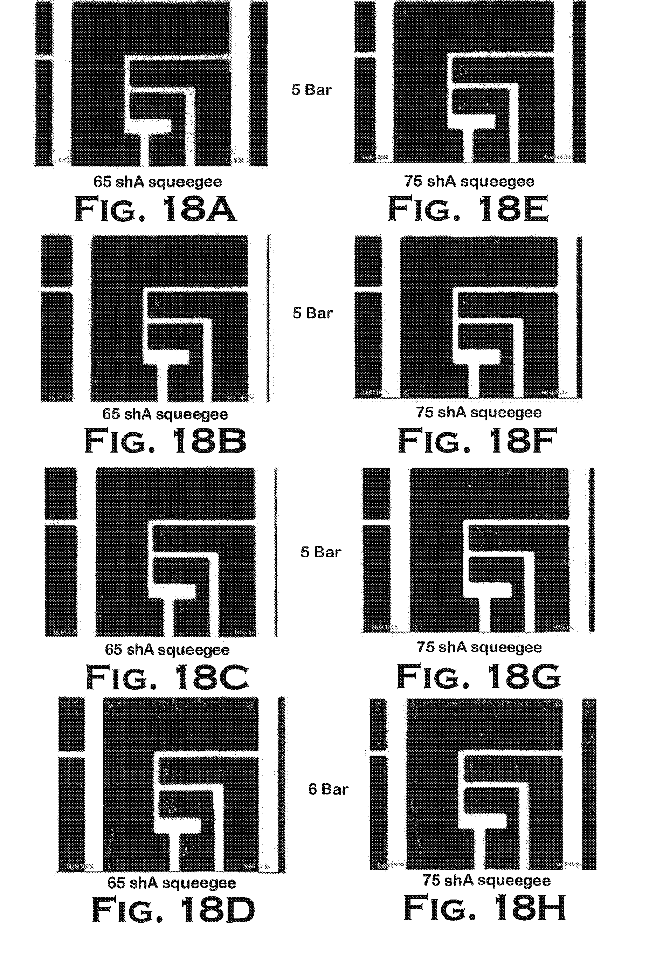

Figures 18A-18H are photomicrographs to illustrate the print quality from samples in various experiments.

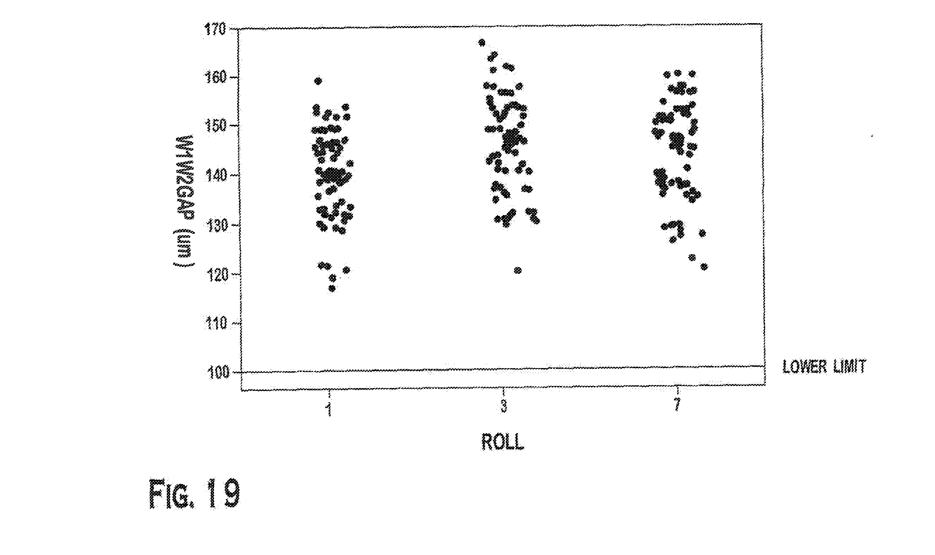

Figure 19 illustrates the data collected over a 7-roll run showing minimal reduction in the minimum gap between working electrode 1 and working electrode 2 with the techniques and components described herein.

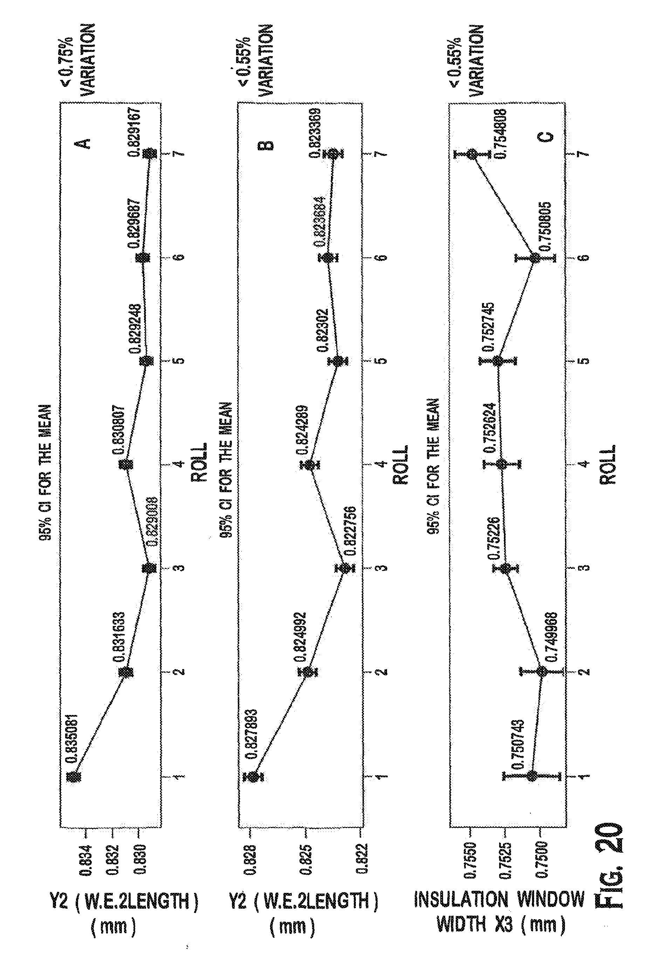

Figure 20 illustrates that variations in the length Y2, of working electrode 1, working electrode 2 and the insulation aperture width utilizing the metallic screen and squeegee operation parameters described herein were very low over a 7-roll run.

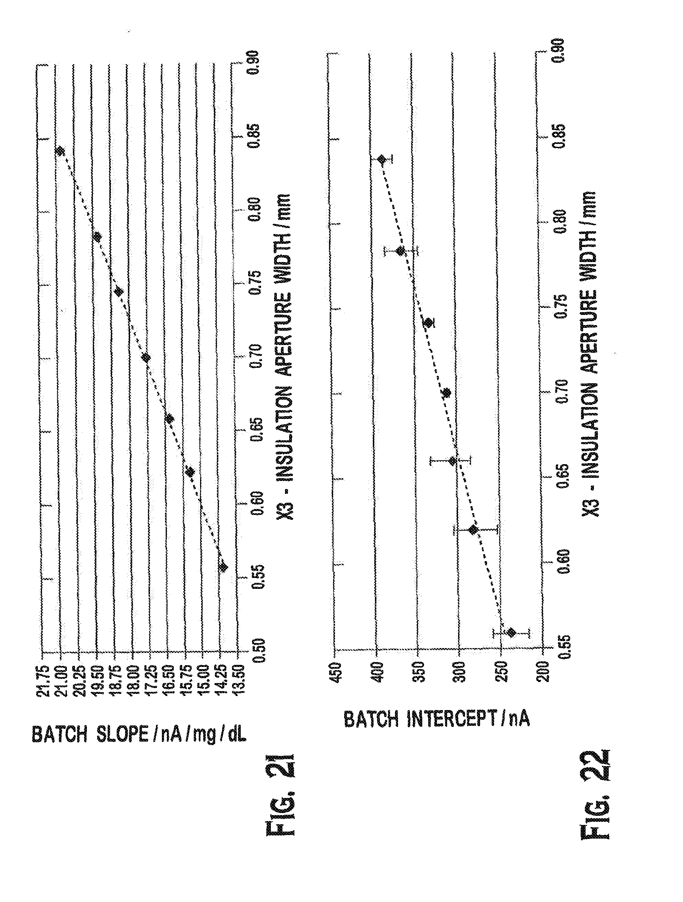

Figure 21 is an exemplary graph illustrating the effect of working electrode width (here equivalent to insulation aperture width X3) on a batch slope of a test strip lot.

Figure 22 is an exemplary graph illustrating the effect of working electrode width (here equivalent to insulation aperture width X3) on a batch intercept of the test strip lot.

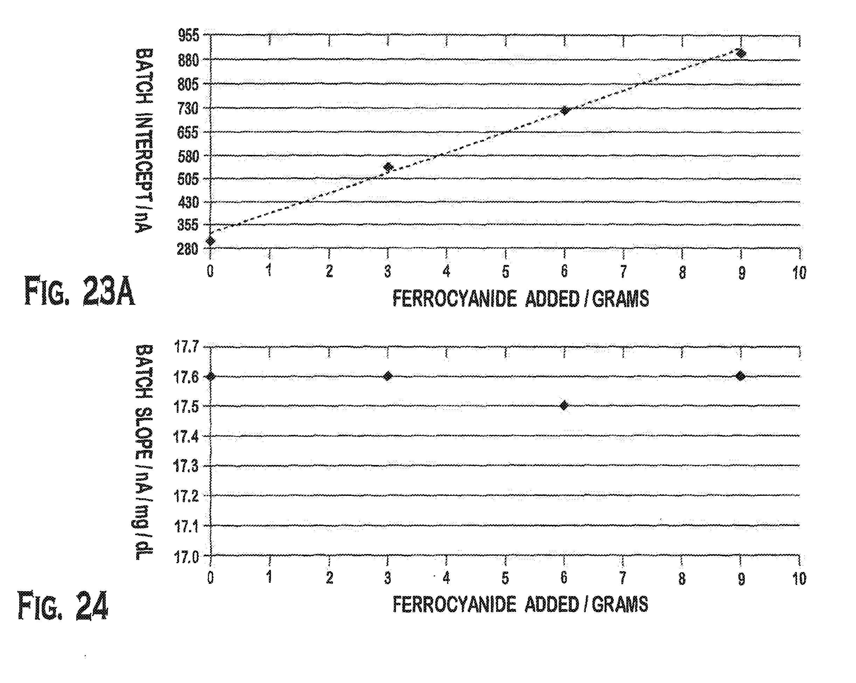

Figure 23A is an exemplary graph illustrating the effect of added reduced mediator on the batch intercept.

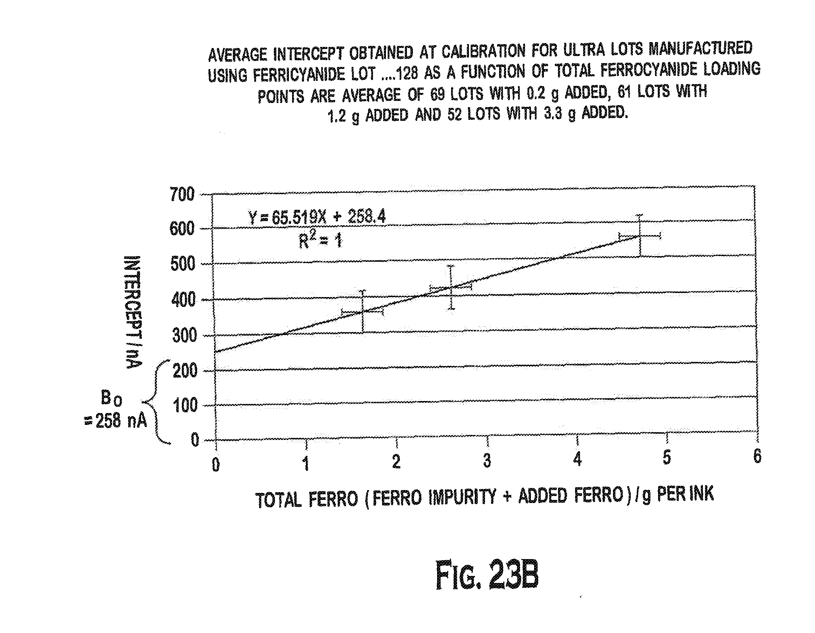

Figure 23B is an exemplary graph illustrating the effect of total reduced mediator (added and from impurities) on intercept extrapolating back to zero reduced mediator to give a baseline intercept $B_0$ for a given working electrode area (here for fixed length Y2 and insulation width X3 of 700 microns).

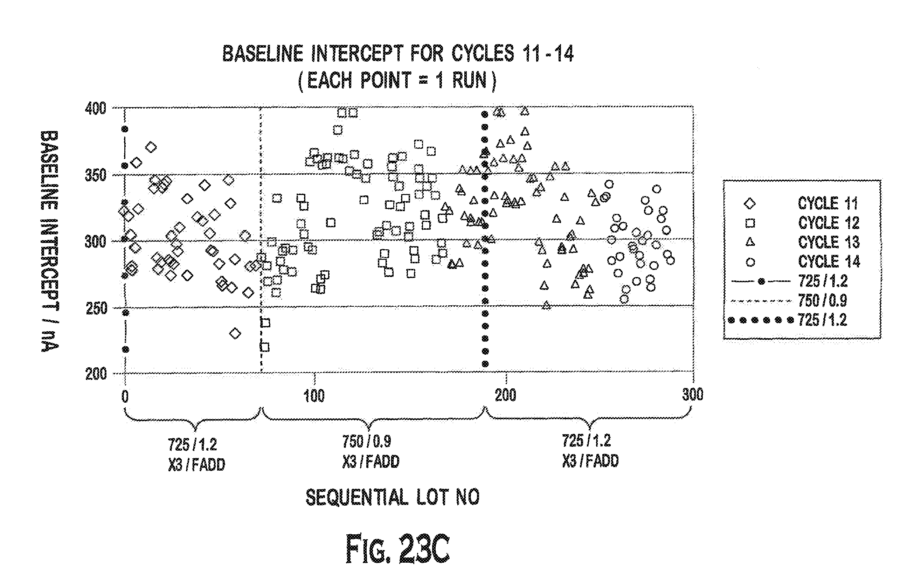

Figure 23C is a scatter plot showing baseline intercept for 300 lots over 4 cycles. Each point represents 1 run of 7 or 8 rolls. Insulation window width and added ferrocyanide were varied between lots.

Figure 24 is an exemplary graph illustrating that adding reduced mediator has essentially no effect on the batch slope.

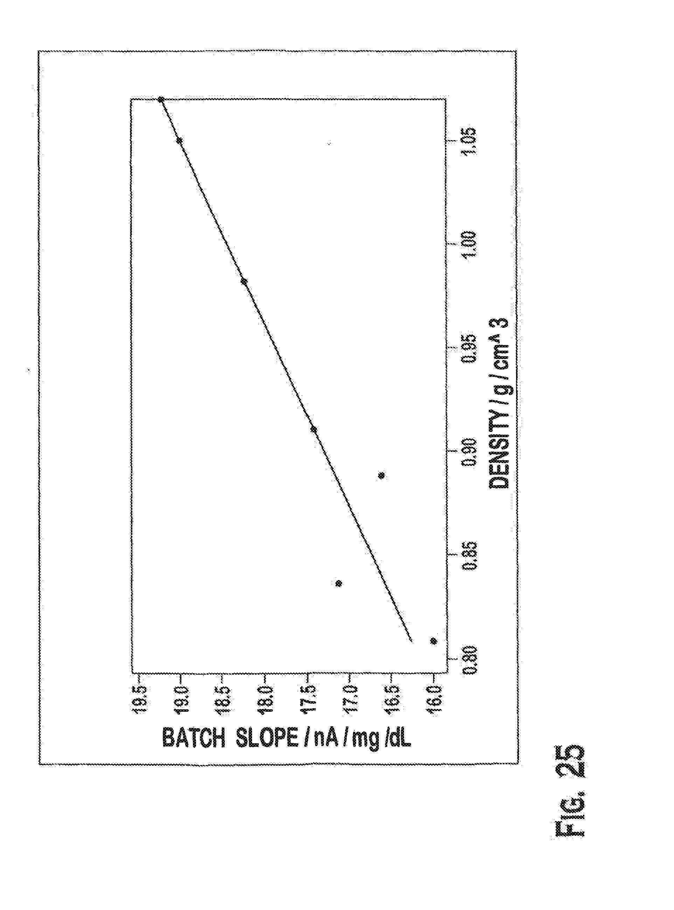

Figure 25 is an exemplary graph illustrating the effect of a density of a first solution on a batch slope,

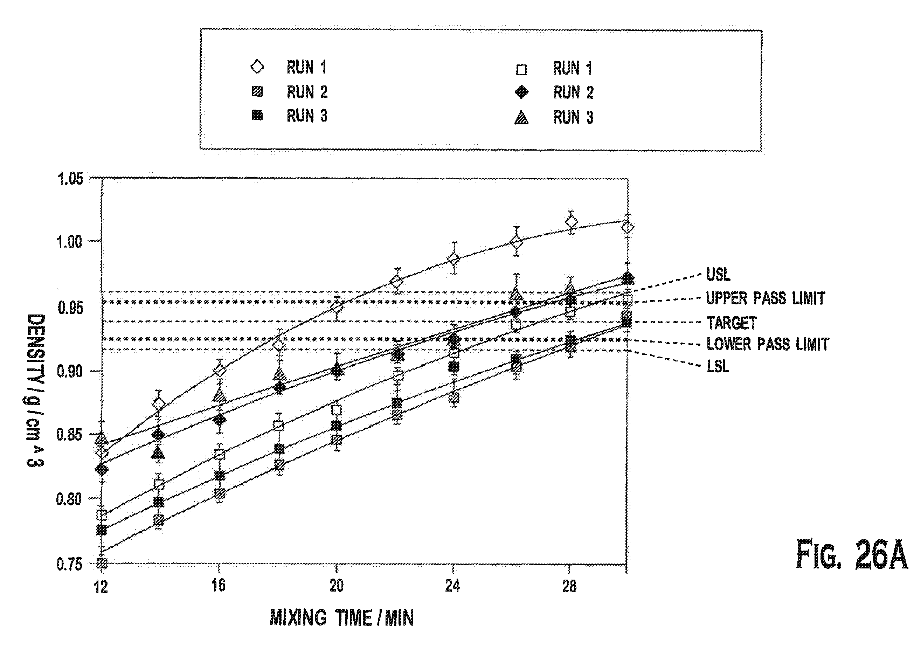

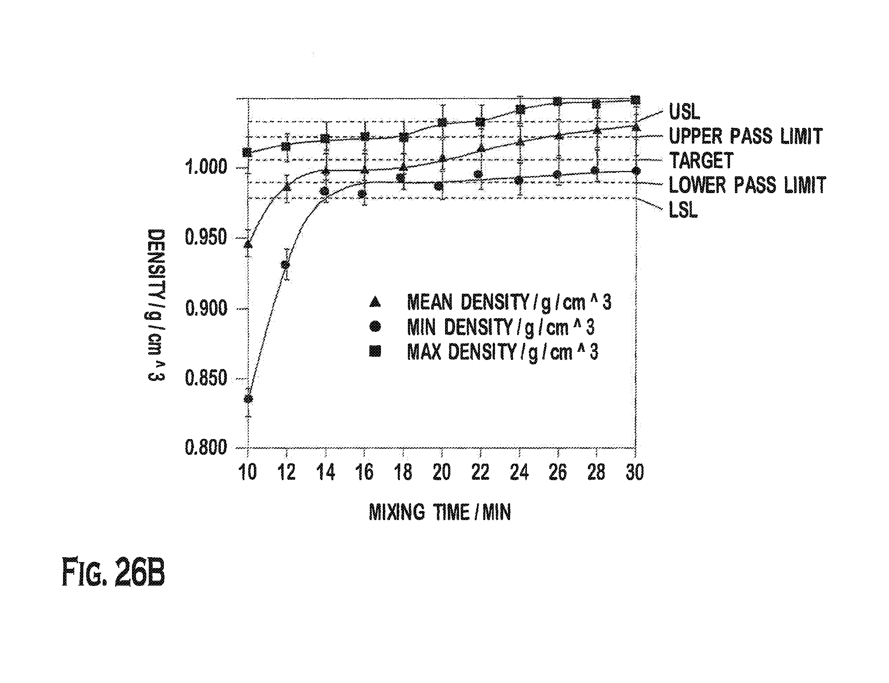

Figures 26A and 26B are exemplary graphs illustrating the effect of mixing time on a density of the first solution where several first solutions were prepared that contained different lots of silica having hydrophilic and hydrophobic groups. Figure 26A shows Cabosil silica. Figure 26B shows Wacker silica.

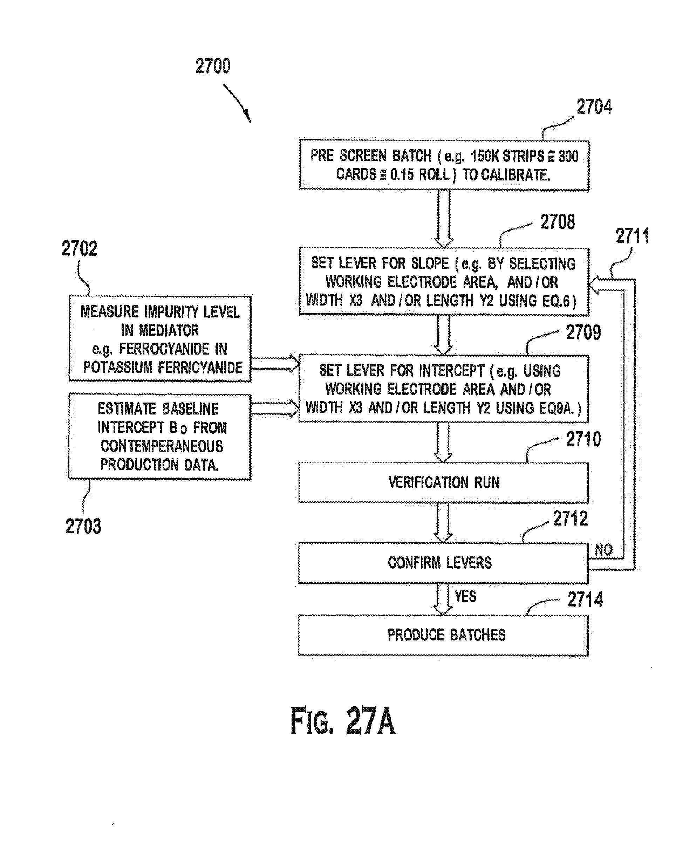

Figure 27A is an exemplary flow chart showing a method for manufacturing a plurality of test strip batches.

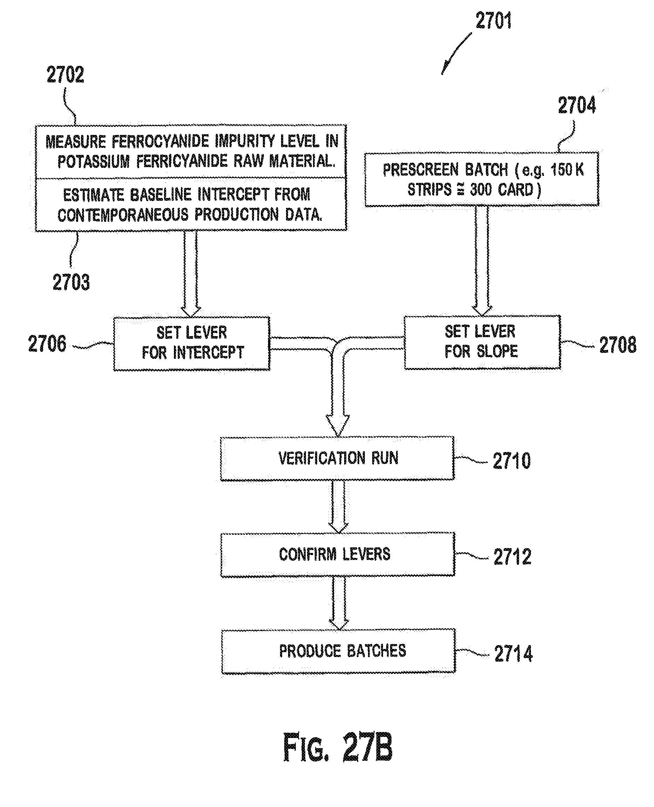

Figure 27B is an exemplary flow chart showing an alternative method of manufacturing a plurality of test strip batches.

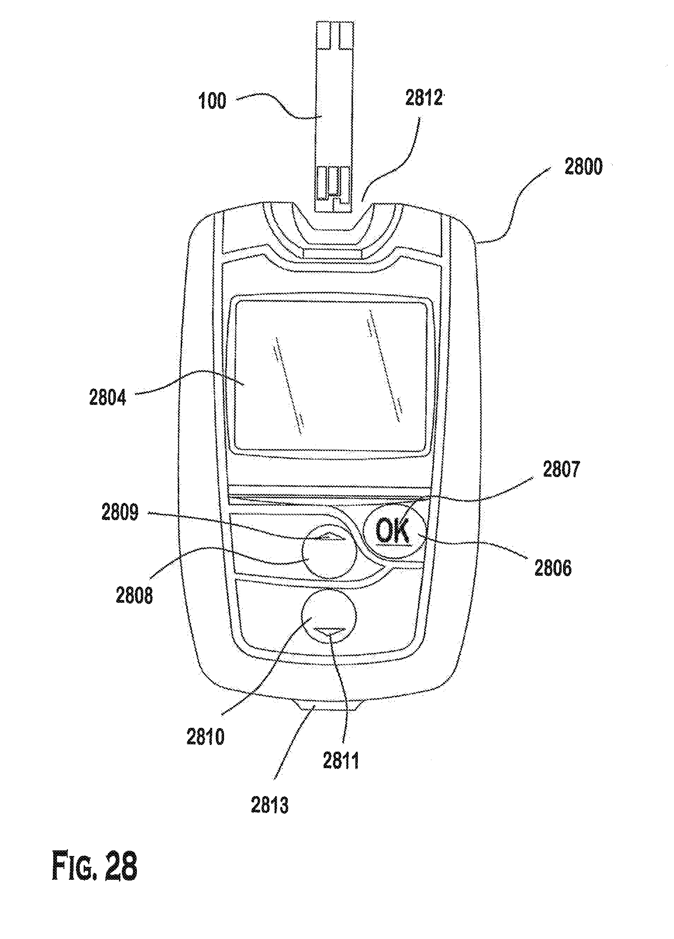

Figure 28 is an exemplary plan view of an embodiment of a test meter.

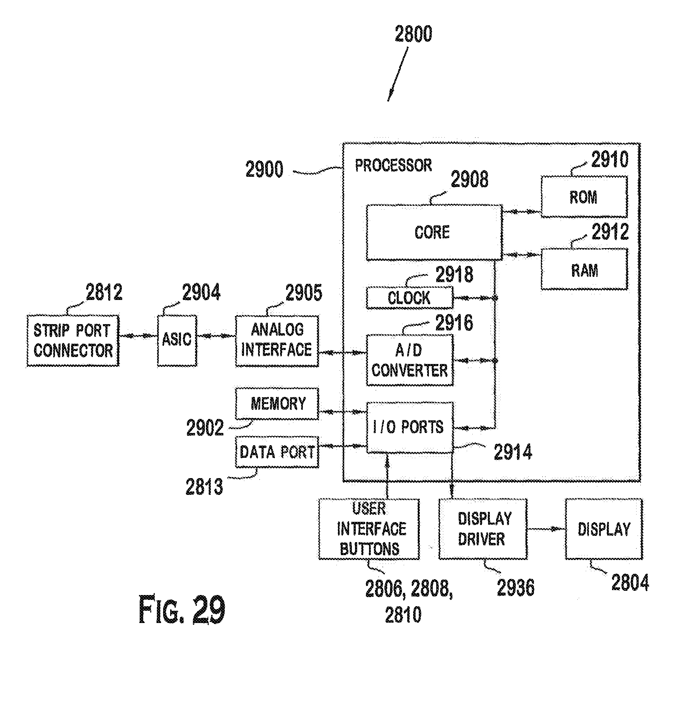

Figure 29 is an exemplary block diagram illustrating the principal internal components of the test meter.

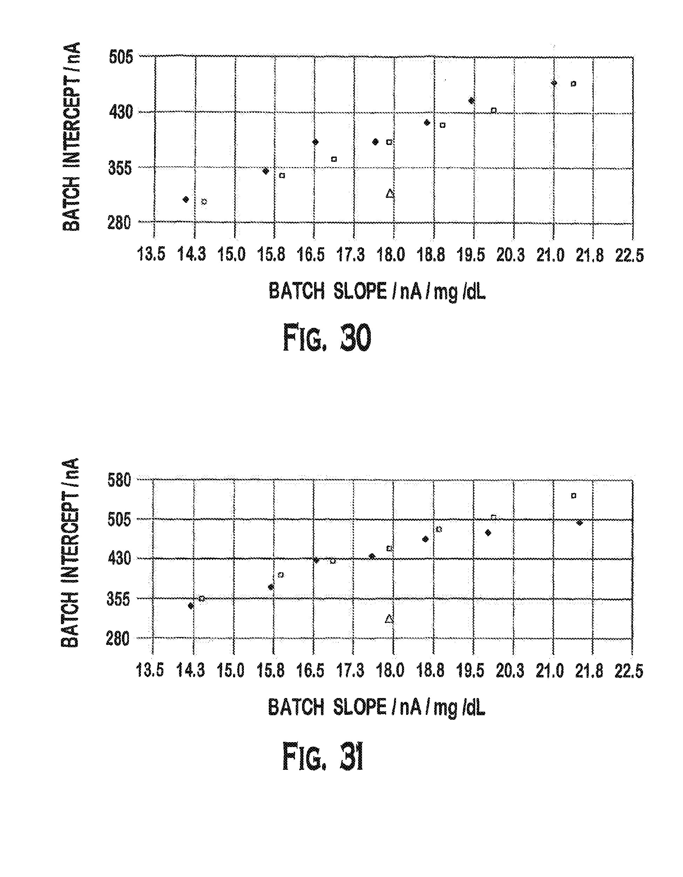

Figures 30 and 31 are exemplary graphs illustrating a plurality of actual batch slope and intercept values for test strip lots that were manufactured using a range of electrode widths and a fixed amount of added reduced mediator (diamonds), predicted batch slope and intercept values that correspond to the manufacture test strip lots (squares), and an actual batch slope and intercept value for a reference test strip lot (triangles).

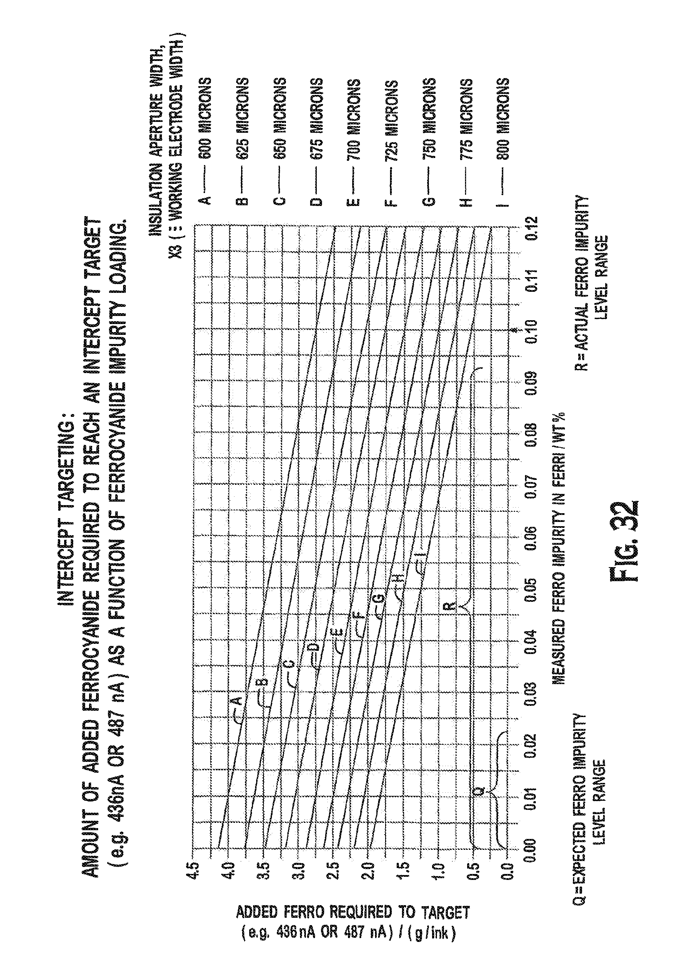

Figure 32 shows the amount of added ferrocyanide required to reach a target intercept as a function of ferrocyanide impurity loading for various working electrode widths (equivalent to insulation aperture width X3).

## DETAILED DESCRIPTION OF ILLUSTRATIVE EMBODIMENTS

The following detailed description should be read with reference to the drawings, in which like elements in different drawings are identically numbered. The drawings, which are not necessarily to scale, depict selected embodiments and are not intended to limit the scope of the invention. The detailed description illustrates by way of example, not by way of limitation, the principles of the invention. This description will clearly enable one skilled in the art to make and use the invention, and describes several embodiments, adaptations, variations, alternatives and uses of the invention, including what is presently believed to be the best mode of carrying out the invention.

As used herein, the terms "about" or "approximately" for any numerical values or ranges indicate a suitable dimensional tolerance that allows the part or collection of components to function for its intended purpose as described herein. In addition, as used herein, the terms "patient", "host" and "subject" refer to any human or animal subject and are not intended to limit the systems or methods to human use, although use of the subject invention in a human patient represents a preferred embodiment.

Hereinafter, a "roll" of substrate is a continuous piece of substrate that can be spliced with another "roll" of substrate to form a continuous web of substrate that can be later separated into cards and again into test strips. A set of test strips from one roll may be referred to as a "lot" or "batch", Conditions, such as settings and/or consumables such as ink, may be varied during the web printing process typically between "runs" or between "rolls" in a single "run". A "run" is a continuous operation of the web printing process until completion, regardless of the number of "rolls" within the "run". Indeed, typically a "run" may have between 1 and 16 "rolls", more typically between 1 and 10 and more typically between 6 and 8.

Figure 1 is a schematic diagram depicting eight sections of the web printing process. Section 1 is an unwinder unit 101. Section 2 is a preconditioning station 102. Section 3 is a carbon print station 103. Section 4 is an insulation print station 104. Section 5 is a first enzyme print station 105. Section 6 is a second enzyme print station 106. Section 7 is a rewinder unit 107. Section 8 is a punch 108. It will be understood by those skilled in the art that while the following description relates to a process and apparatus concerning these eight sections, the process and apparatus of the invention can be embodied in greater or fewer numbers of sections. For example while four print stations are utilized in this embodiment, one or more print stations could be used without departing from the scope of the invention. In one embodiment, there are a minimum of two print stations for printing an electrode layer and a reagent layer.

In an embodiment, Section 1 may be implemented using a substrate material unwind unit 101 such as, for example, a Martin Unwinder/Automatic Splice, which is available from Martin Automatic Inc. in Rockford, IL. Sections 2, 3,4, 5 and 6, may be implemented using a modified Kammann Printer, which is available from Werner Kammann Maschinefabrik Gmbh, model number 4.61.35, in Bünde, Germany. Preconditioning unit 102 can be used to precondition substrate 242 prior to printing and sections 3, 4, 5 and 6 can be used to screen print carbon, insulation, first enzyme and second enzyme inks onto a substrate. Section 7 may include rewinder unit 107 such as, for example, a Martin Rewinder, which is available from Martin Automatic Inc. in Rockford, IL. Rolls of substrate may be spliced together in either unwinder unit 101 or rewinder unit 107 using splicing tape such as, for example, PS-1 Splicing Flat back Paper Tape from Intertape Polymer Group. Section 8 may include a punch 108 such as, for example, a Preco punch which is available from Preco Press, in Lenexa, Kansas as model number 2024-P-40T XYT CCD CE. While specific models of apparatus are mentioned, these pieces of apparatus may be varied, replaced, omitted altogether without departing from the scope of the invention as will be understood by those skilled in the art.

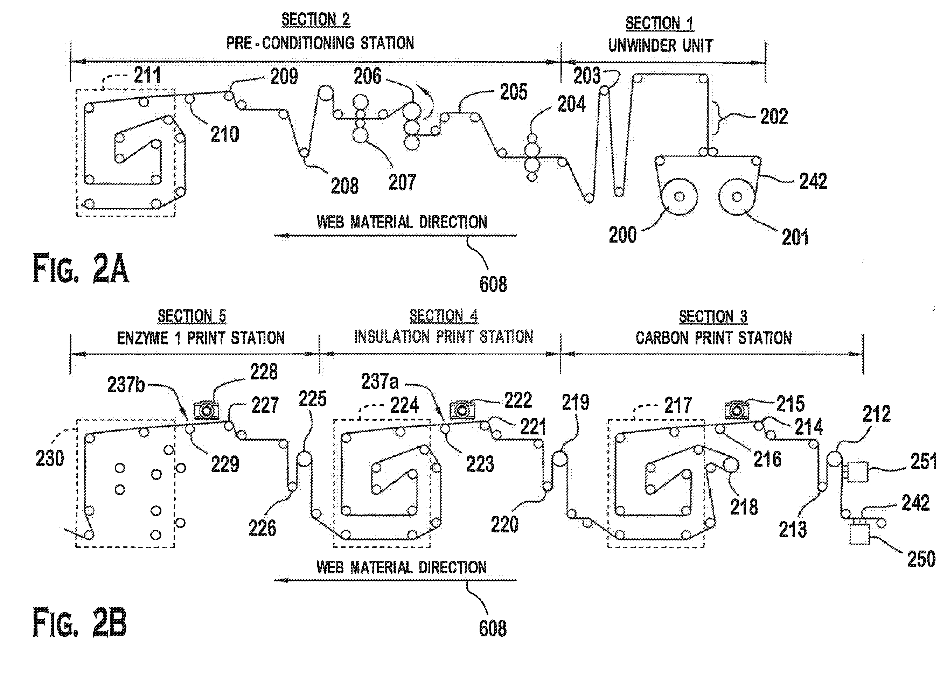

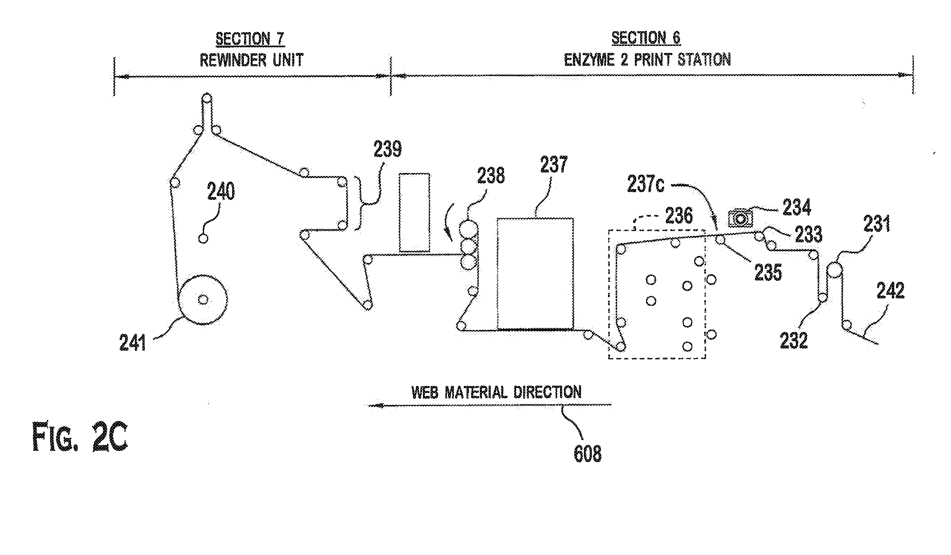

Figures 2A, 2B and 2C are schematic diagrams illustrating the path of a substrate 242 as it passes through Sections 1 to 8 of a web printing process. In an embodiment, the material used for substrate 242 is preferably in a roll form of a polyester material (trade name Melinex ST328), which is manufactured by DuPont Teijin Films. Substrate 242 is supplied in a roll of material, which may be, for example, nominally 350 microns thick by 370 millimeters wide and approximately 660 meters in length. These dimensions of thickness and width have been found to be particularly suitable for the production of electrochemical sensors by screen-printing on a web of substrate. This is because of the requirement for the material to be robust for printing yet manipulable through the apparatus and of sufficient width to accommodate a suitable quantity of sensors to render the process commercially viable. Substrate 242 may include an acrylic coating applied to one or both sides to improve ink adhesion. Polyester is a preferred material because it behaves satisfactorily at elevated temperatures and tensions used during the web process described herein. While polyester and indeed Melinex may be preferred materials in one embodiment, the use of other materials can be utilized by those skilled in the art from the description provided herein. Indeed, amongst other things, variations in material thickness, width and length can be utilized, a larger width or length offering additional capacity for the production of sensors and a variation in material thickness in some circumstances aiding the preconditioning, or registration during printing.

Figure 2A is a schematic diagram depicting section 1 and section 2 of a web printing process. Section 1 is an unwinder unit 101 that may include a first unwind arbor 200, second unwind arbor 201, first splice unit 202, and first accumulator 203. Note that an arbor can also be referred to as a mandrel. Section 2 is a preconditioning station 102 that may include a first cleaning unit 204, second splice unit 205 which typically is not used, inbound nip roller 206, second cleaning unit 207, load cell 208, first print roller 209, first drive roller 210 and first drier zone 211.

Unwinder unit 101 may be, for example, a Martin Unwinder/Automatic Splice, which is used to facilitate the continuous movement of substrate 242 into preconditioning station 102 under a tension of approximately 80N. First unwind arbor 200 holds a roll of substrate material 242 and continuously feeds substrate 242 into preconditioning station 102 of section 2. Second unwind arbor 20 holds a standby roll of substrate 242, which can be automatically spliced to the end of the roll of substrate 242 from first unwind arbor 200 ensuring a semi-continuous supply of substrate 242. This process repeats from first unwind arbor 200 to second unwind arbor 201. A substrate material accumulator 203 stores a predetermined length of substrate 242 and dispenses the stored substrate 242 into preconditioning station 102 of section 2 while the splicing operation takes place in first splice unit 202 (during which time both the first unwind arbor 200 and second unwind arbor 201 are stationary). The splice created can be a butt splice with a length of splice tape on either side of the material at the joint. In order to ensure quality, approximately 10 meters of printed substrate may be discarded on either side of the splice. First unwind arbor 200 and second unwind arbor 201 may include web edge guides (not shown) which guide substrate 242 into first splice unit 202. The web edge guides are configured to prevent substrate 242 from wandering as it is being fed into first splice unit 202.

Generally, the machine of the embodiments described herein is set up to produce between 2 and 10 and more usually 6 rolls of substrate at any one time. For those print stations connected to a continuous supply of ink, the number of rolls to be used is not usually a problem. However, for the two enzyme print stations, to which a limited amount of ink is supplied, the number of rolls to be used can be an important input parameter. Indeed the number of rolls to be used can determine the amount of ink placed on the screen prior to start of the printing process. For example, for a 6 roll run, 6 (or rather just more than 6) rolls worth of enzyme ink are placed on the screen prior to the start of printing in each of sections 5 and 6. Thus, the enzyme ink needs to be kept in readiness for printing throughout the print run to ensure consistent printing of enzyme over the whole life of the print run. A wall has been placed about the screen in the enzyme print stations to ensure that a sufficient amount of enzyme ink can be added to the screen without requiring the screen to be topped up during a run and also reducing the risk of the enzyme ink overflowing the screen and onto the web substrate running below it.

In one scenario, prior to entering carbon print station 103, substrate 242 can be exposed to a heat stabilization process, by heating the substrate up to 185 °C without placing it under significant tension to try and ensure that substrate 242 experiences minimum dimensional distortion during the web printing process where temperatures of between 140 °C and 160 °C at tensions up to 165 N may be encountered. Generally, the tension used for making test strips has been minimal, but sufficient to drive the web through the heater. However, it has been found that despite this heat stabilization process, variations in registration from print step to print step can occur causing sensor failure. Thus, a preconditioning step has been introduced immediately prior to printing that also includes applying a significant amount of tension. As will be explained hereinafter, in the preconditioning step (section 1) the substrate is heated to a temperature (typically 160 °C) that is greater than any temperature it encounters during the later printing steps. A significant amount of tension may be about 165N during the preconditioning step. Indeed in this embodiment, the combination of elevated temperature and placing under tension has greatly reduced the variations in print registration and improved the resultant product yield.

In an embodiment illustrated in Figure 2A, section 2 is a preconditioning station 102. The process of preconditioning can occur before any image is printed onto the substrate. Substrate 242 is preconditioned to reduce the amount of expansion and stretch within subsequent sections of the web process and also to aid the registration of substrate 242 through sections 3 to 6. Preconditioning station 102 can heat substrate 242 to a temperature, which is not exceeded in the subsequent print steps. For example, substrate 242 can be heated to approximately 160°C in the preconditioning zone 211, which is illustrated in Figure 2A. Generally, this takes place under tension of between 150N and 180N more typically around 165N. However, in another embodiment, preconditioning station 102 can heat substrate 242 to a temperature sufficient to remove the irreversible stretch from substrate 242, again optionally while under tension as described above.

Substrate 242 can be held under a tension of approximately 165N throughout the process in order to maintain registration of the four layers to be printed (typically the print registration tolerance is about 300 microns). The substrate 242 is also subjected to various temperatures of 140°C or less in order to dry the printed inks during each printing step. Due to this tension and temperature, there may be a tendency for substrate 242, which is not treated by the preconditioning process, to stretch or expand during the printing process and consequently fall outside the registration tolerance. Indeed the image size variation from print stage to print stage and print run to print run as well as within the print run itself was unpredictable when using substrate that was not preconditioned,

In an embodiment, preconditioning station 102 also includes additional elements, which perform functions, which facilitate proper operation of a web manufacturing process. In preconditioning unit 102, there are two web-cleaning units, a first cleaning unit 204 and a second cleaning unit 207 which clean the top and underside of substrate 242. First cleaning unit 204 and second cleaning unit 207 may use tacky adhesive coated rollers to remove particulates from substrate 242 prior to any printing step. First cleaning unit 204 may be, for example, a cleaner commercially available from KSM Web Cleaners, model number WASP400, in Glasgow, United Kingdom. Second cleaning unit 207 may be, for example, a cleaner commercially available from Teknek. Preconditioning station 102 may further includes inbound nip roller 206 and a load cell 208. Inbound nip roller 206 can be used to control the tension of substrate 242 (specifically the tension between inbound nip roller 206 and an outbound nip roller 238). Inbound nip roller 206 can be linked via a control system (not shown) to load cell 208. Substrate 242 is removed from second enzyme print station 106 in section 6 at a constant rate by an outbound nip roller 238 (see Figure 2C). Load cell 208 in section 2 measures the tension of substrate 242 when it is moving through the web process. Inbound nip roller 206 can adjust the speed in order to control the tension at a predetermined set point. A typical substrate tension in a web manufacturing process can range from about 150N to about 180N, preferably range from about 160N to about 170N, and more preferably be about 165N.

Figure 2B is a schematic diagram depicting section 3, section 4 and section 5 of a web printing process. Section 3 is carbon print station 103. Prior to printing, a cleaning system can be used (available from Meech), which cleans the top side (print side) and the underside of the substrate using a vacuum and brush system. The top brush and vacuum station 251 and bottom brush and vacuum station 250 can be offset to one another, as illustrated in Figure 2B. The top brush and vacuum station 250, can contact the substrate immediately prior to the chilled roller 212 and accumulator 213 and is the closest accessible point prior to carbon printing. The bottom brush and vacuum station 251, can contact the substrate immediately after the substrate exits the preconditioning unit 102. Carbon print station 103 can include first chilled roller 212, second accumulator 213, second print roller 214, first vision sensor 215, second drive roller 216, first drier zone 217 and second chilled roller 218. In Figure 2B, section 4 is insulation print station 104. Insulation print station 104 can include third chilled roller 219, third accumulator 220, third print roller 221, second vision sensor 222, first Y registration system (not shown) at position 237A, third drive roller 223 and second drier zone 224. In Figure 2B, section 5 is first enzyme print station 105. First enzyme print station 105 can include fourth chilled roller 225, fourth accumulator 226, fourth print roller 227, third vision sensor 228, second Y registration system, at 237b (not shown), fourth drive roller 229 and third drier zone 230.

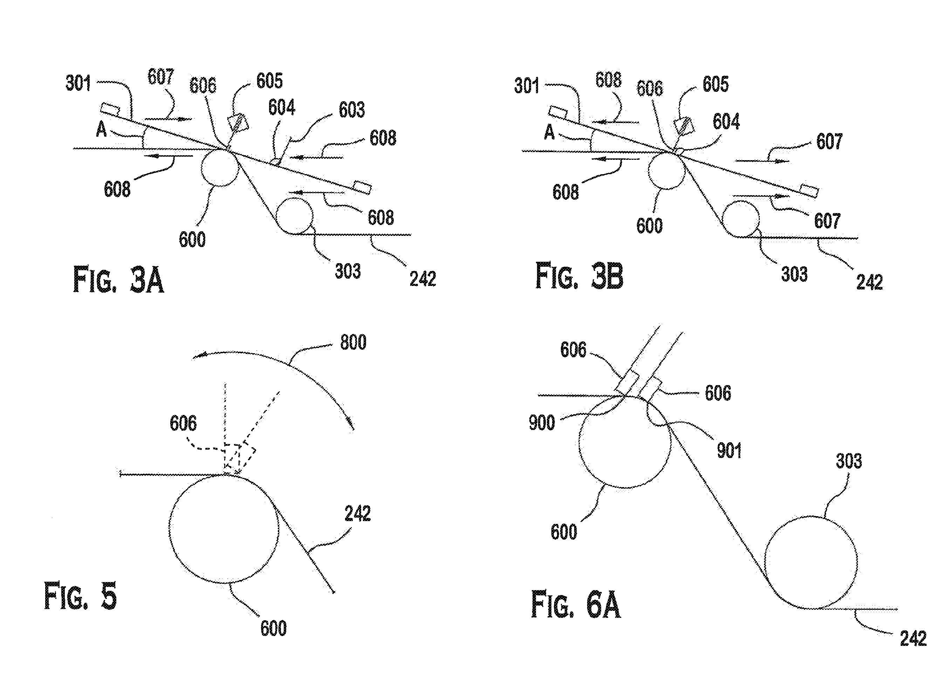

In a process according to an embodiment, section 3 of the web manufacturing process is where carbon printing takes place. Of course, as will be appreciated by those skilled in the art, the number and type of printing processes can be varied without departing from the scope of the invention. For example, two carbon prints may be provided or one or more prints with carbon with metallic particles, silver/silver chloride ink or gold or palladium based inks or any combination thereof in one or more printing steps may be used to provide an electrode layer in the electrochemical sensors. The insulation and reagent layers may also be varied in their composition, order of deposition, thickness of deposition and layout as well as in other parameters apparent to those skilled in the art from the embodiments described herein. In section 3, the carbon artwork for the electrochemical sensors may be printed utilizing screen-printing. The basic components of the carbon print station 103 are illustrated in Figures 3A and 3B. In particular, a suitable print station according to an embodiment includes a screen 301, lower print roller 303, print roller 600, a flood blade 603, a squeegee holder 605 and a squeegee 606. In carbon print station 103, print roller 600 is second print roller 214. Screen 301 is of generally flat construction and typically includes a mesh arranged to provide a negative of the artwork desired. Carbon ink is applied to the mesh and pushed through it during printing. At this stage the flat screen may be deformed slightly out of a flat shape by the weight of the ink (this is especially true for the enzyme print steps in which all of the ink to be used during the entire print run is usually deposited on the screen at the start of the print run) and the pressure from the squeegee pushing the ink through the mesh stencil.

In a flood cycle process screen 301 is charged with ink 604 by moving squeegee 606, flood blade 603, print roller 600, and lower print roller 303, in first direction 608, which corresponds to the web movement of substrate 242. Screen 301 is moved in second direction 607 opposite to first direction 608 of substrate 242 for the flood cycle where ink 604 is charged onto screen 301. As used herein, the terms "squeegee" and "blade" are used interchangeably to indicate the material in contact with the ink and the mesh screen.

In a subsequent print cycle process as illustrated in Figure 3B, squeegee 606 transfers ink 604 through the screen 301 and onto substrate 242. During the print cycle, the squeegee 606, flood blade 603, print roller 600, and lower print roller 303 all move in second direction 607 which is opposite to the web movement of substrate 242. Screen 301 is moved in first direction 608, which corresponds to the web movement of substrate 242 for the print cycle where ink 604 is pushed through screen 301 and deposited on substrate 242. Thus during the print cycle the screen 301 moves in the same direction as the web substrate at the same or very nearly the same speed as the substrate. The screen 301 is substantially flat when at rest although in use it is pushed by the squeegee 606 towards the web becoming slightly distorted as this happens and substantially returning to it's original shape once the squeegee 606 is removed. The screen 301 then moves in the opposite direction to the substrate as it is reloaded with ink 604 ready for the next print cycle. When the ink is loaded onto the screen 301 the weight of the ink may ever so slightly bend the screen. The screen 301 is at an angle to the direction of travel 608 of the web as it leaves the print station. This arrangement (the angle being typically around 10 to 30 degrees and more specifically around 15 degrees) improves ink release from the screen onto the substrate improving print definition and reproducibility. The screen to substrate angle, squeegee angle, screen to squeegee distance, squeegee to print roller position, snap-off distance, relative speeds of substrate and screen and squeegee pressure can all be used to control and optimize the resultant print definition and consistency across a card. One embodiment of a screen-printing mechanism is described in more detail in issued US patent 4,245,554, which is incorporated by reference herein.

In a particular embodiment, in carbon print station 103, the ink in question is carbon ink. An example of a suitable carbon ink is set forth herein below. In this embodiment of the current invention, screen 301 is flooded with ink 604 prior to using squeegee 606 to transfer the ink 604 through the screen and onto substrate 242. The printed carbon artwork deposited on substrate 242 is then dried using, for example, hot air at 140°C directed onto the printed surface of the substrate using four separate drying banks within the first drier zone 217, which is illustrated in Figure 2B.

Suitable ink for use in carbon print station include, but is not limited to, carbon with metallic particles, silver/ silver chloride, gold based, and palladium based conductive printable inks. In one embodiment, prior to the carbon printing process and immediately after drying, substrate 242 is passed over a first chilled roller 212, which is designed to rapidly cool substrate 242 to a predetermined temperature, typically room temperature (around 19-21 °C and typically 19.5 °C +/- 0.5 °C), In one embodiment of the web manufacturing process according to an embodiment the surface of first chilled roller 212 is approximately 18°C. First chilled roller 212 may be cooled to an appropriate temperature using, for example, factory chilled water at around 7°C. The temperature of the roller can be controlled by controlling the flow rate and/or the temperature of the factory chilled water. After the printed carbon patterns are deposited in the printing process, substrate 242 is passed over second chilled roller 218. Reducing the temperature of substrate 242 and maintaining the temperature of substrate 242 is beneficial because cooler temperatures reduces the probability of ink drying on the screens during printing and creating blocks in the mesh. The use of chilled rollers in a web manufacturing process according to an embodiment is also beneficial because it reduces the amount of stretch in substrate 242, reducing registration problems and the need to modify the process on the fly to compensate for such problems.

In one embodiment, the temperature of the chilled rollers is controlled dynamically by a feedback loop measuring the temperature of the chilled roller and controlling the water flow/temperature. Other methods of chilling the rollers can be utilized by those skilled in the art from the embodiments described herein, for example, electrically powered refrigeration units.

In a process according to an embodiment, section 4 of the web manufacturing process is where insulation printing takes place. In section 4, the insulation artwork for the electrochemical sensors is printed utilizing screen-printing utilizing a generally flat screen. The basic components of the insulation print station 104 are illustrated in Figures 3A and 3B. In particular, a suitable print station according to an embodiment includes a screen 301, lower print roller 303, print roller 600, a flood blade 603, a squeegee holder 605 and a squeegee 606. In insulation print station 104, print roller 600 is third print roller 221.

In a flood cycle process screen 301 is charged with ink 604 by moving squeegee 606, flood blade 603, print roller 600, and lower print roller 303, in first direction 608 which corresponds to the web movement of substrate 242. Screen 301 is moved in second direction 607 opposite to first direction 608 of substrate 242 for the flood cycle where ink 604 is charged onto screen 301.

In a subsequent print cycle process as illustrated in Figure 3B, squeegee 606 transfers ink 604 through the screen 301 and onto substrate 242. During the print cycle, the squeegee 606, flood blade 603, print roller 600, and lower print roller 303 all move in second direction 607 which is opposite to the web movement of substrate 242. Screen 301 is moved in first direction 608, which corresponds to the web movement of substrate 242 for the print cycle where ink 604 is pushed through screen 301 and deposited on substrate 242. One embodiment of the screen-printing mechanism is described in more detail in issued US patent 4,245,554, which is incorporated by reference herein.

**[0216]** - As used herein, the terms "squeegee" and "blade" are used interchangeably to indicate both the holder of the squeegee material and the squeegee material in contact with the ink, or the squeegee material in contact with the ink.

In movable flat screen printing, during printing a generally flat screen has a component of its motion, which is in the same direction and at approximately the same speed as the substrate. Generally, in each of the print stations, the substantially flat screen is at an acute angle to the substrate as the screen and substrate move away from a printing position. Varying the relative speed of the substrate and the screen varies the size of the printed image in the direction of travel of the substrate, i.e. the X-direction.

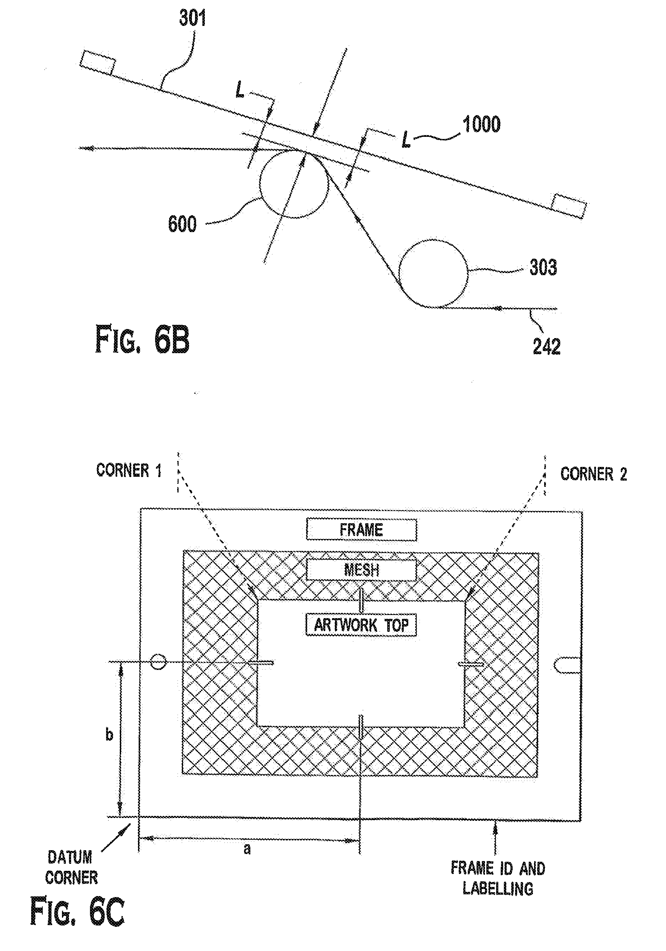

The stencil screen used in each of the print stations typically consists of a resiliently deformable polyester or steel mesh stretched and attached to a rigid frame such as one shown here in Figure 6C. One embodiment uses a polyester screen supplied by DEK Machinery, Weymouth, UK. The mesh is coated with a UV sensitive coating and in conjunction with a film positive the screen is exposed to a UV light source, developed and dried so that the coating dries on the screen to form a negative of the desired artwork image. With the aid of a squeegee, ink is passed through the open areas of the stencil and onto the substrate (giving a positive image formed by the ink on the substrate). The frame provides a means of mounting the mesh, and withstanding the forces imposed by the stretched mesh with minimum distortion and with standing the additional forces produced during printing.

In a particular embodiment, for insulation print station 104, the ink in question is an insulation ink. An example of a suitable insulation ink is set forth herein below. In this embodiment of the current invention, screen 301 is flooded with ink 604 prior to using squeegee 606 to transfer ink 604 through the screen and onto substrate 242. The printed insulation artwork deposited on substrate 242 is then dried using, for example, hot air at 140°C directed onto the printed surface of the substrate using four separate drying banks within second drier zone 224, which is illustrated in Figure 2B. An example of suitable ink for use in insulation print station in a web manufacturing process according to an embodiment is Ercon E6110-116 Jet Black Insulayer Ink, which may be purchased from Ercon, Inc. In one embodiment, insulation artwork is registered to the carbon artwork in the X direction (along the machine) and the Y direction (across the machine) utilizing the techniques described herein. Other types of insulation ink may be utilized as will be understood by those skilled in the art from the description herein.

Furthermore, different layers or different orders of layers can be used to provide a different order of layers and therefore different construction in the electrochemical sensors produced. In one embodiment, before the insulation printing process and immediately after drying, substrate 242, including printed carbon and insulation patterns, is passed over third chilled roller 219 which is designed to rapidly cool substrate 242 to a predetermined temperature typically room temperature (around 17-21 °C and typically 19.5 °C +/- 0.5 °C). In one embodiment of the web manufacturing process, the surface temperature of the third chilled roller is approximately 18 °C. Third chilled roller 219 may be cooled to an appropriate temperature using, for example, factory chilled water at around 7 °C. Reducing the temperature of substrate 242 and maintaining the temperature of substrate 242 is beneficial because cooler temperatures reduces the probability of ink drying on the screens and creating blocks in the mesh. The use of chilled rollers in a web manufacturing process according to an embodiment is also beneficial because it reduces the amount of stretch in substrate 242, reducing registration problems and the need to modify the process on the fly to compensate for such problems.

In a process according to an embodiment, section 5 of the web is where the first enzyme printing takes place. In section 5, the enzyme ink artwork for the electrochemical sensors is printed utilizing screen-printing and a movable generally flat screen as herein before described. The basic components of the first enzyme print station 105 are illustrated in Figures 3A and 3B. In particular, a suitable print station according to an embodiment includes a screen 301, lower print roller 303, print roller 600, a flood blade 603, a squeegee holder 605 and a squeegee 606. In first enzyme print station 105, print roller 600 is fourth print roller 227.

In a flood cycle process screen 301 is charged with ink 604 by moving squeegee 606, flood blade 603, print roller 600, and lower print roller 303, in first direction 608, which corresponds to the web movement of substrate 242. Screen 301 is moved in second direction 607 opposite to first direction 608 of substrate 242 for the flood cycle where ink 604 is charged onto screen 301.

In a subsequent print cycle process as illustrated in Figure 3B, squeegee 606 transfers ink 604 through the screen 301 and onto substrate 242. During the print cycle, the squeegee 606, flood blade 603, print roller 600, and lower print roller 303 all move in second direction 607 which is opposite to the web movement of substrate 242. Screen 301 is moved in first direction 608, which corresponds to the web movement of substrate 242 for the print cycle where ink 604 is pushed through screen 301 and deposited on substrate 242. One embodiment of the screen-printing mechanism is described in more detail in issued US patent 4,245,554, which is incorporated by reference herein.

In a particular embodiment, for first enzyme print station 105, the ink in question is an enzyme ink. An example of a suitable enzyme ink is set forth herein below. In this embodiment, screen 301 is flooded with ink 604 prior to using squeegee 606 to transfer the ink 604 through the screen and onto substrate 242. The printed enzyme artwork deposited on substrate 242 is then dried using, for example, hot air at 50°C directed onto the printed surface of the substrate using two separate drying banks within the third drier zone 230, which is illustrated in Figure 2B.

In one embodiment, after the first enzyme printing process and immediately after drying, the substrate 242, including printed carbon and insulation patterns, is passed over fourth chilled roller 225 which is designed to rapidly cool substrate 242 to a predetermined temperature typically room temperature (around 17-21°C and typically 19.5 °C +/- 0.5 °C). In one embodiment of the web manufacturing process, the surface of fourth chilled roller 225 is approximately 18 °C. Fourth chilled roller 225 may be cooled to an appropriate temperature using, for example, factory chilled water at around 7°C. Reducing the temperature of substrate 242 and maintaining the temperature of substrate 242 is beneficial because cooler temperatures reduces the probability of ink drying on the screens and creating blocks in the mesh. The use of chilled rollers in a web manufacturing process according to an embodiment is also beneficial because it reduces the amount of stretch in substrate 242, reducing registration problems and the need to modify the process on the fly to compensate for such problems. Additionally, due to the high water content of the enzyme ink and the airflow due to the movement of the screen, it is crucial to ensure that the enzyme ink does not dry into the screen. The relative flow of air encountered by the moving screen dries the ink on the screen in a manner not normally observed in flat bed screen printers (such as Thieme flat bed printers) since the screen itself does not move within the machine, unlike the various embodiments described herein. As well as the chilled roller alleviating this by ensuring the substrate is cooled to around 18 °C before it encounters the enzyme screen-printing step, the screen loaded with enzyme ink is humidified during printing. In one embodiment, humidification is substantially continuous. There may be topside, underside and/or side screen humidification and indeed all three may be provided. An arrangement of pipes provides a substantially constant stream of humidified air above, below and sideways onto the screen respectively, ensuring the water content of the ink, is maintained at a constant level. The amount and arrangement of humidification (typically pipes carrying humidified air) will depend, amongst other things, upon the amount of humidification required, the water content of the ink, the humidity and temperature of the surrounding air, the temperature of the substrate as it approaches the enzyme print station, the temperature of the print roller, the size of the screen and the exposure of the screen to the surrounding (unhumidified air), In one embodiment, a pipe having one or more rows of holes delivers humidified air across the whole underside of the screen during one stroke of the screen back and forth. Pipes (not shown) above and to the operator side of the machine deliver humidified airflow.

Typically, all the enzyme ink required for that print run is placed on the screen at or prior to the start of the print run. Alternatively, enzyme ink can also be supplied in a continuous manner from a reservoir. Since the enzyme ink is composed of a large part of water (typically between 55% and 65% by weight, more typically around 60% by weight), the ink is prone to drying out over the lifetime of the run. This risk can be alleviated by providing humidification around the screen loaded with enzyme ink. Alternatively, or more typically, in addition the substrate can be chilled prior to encountering the enzyme (or indeed any) print station by the use of chilled rollers as herein described. Typically, the temperature of the substrate is controlled to be less than or equal to the temperature of the room. However, the temperature of the substrate is kept above the dew point for the atmosphere in the room. If the room is at 60% humidity then the dew point may be. 15 °C.

If the temperature of the substrate falls below this, then condensation can occur on the substrate potentially compromising any subsequent print run, especially any subsequent print run with water-soluble ink such as enzyme ink. Control of the substrate temperature, for example between the limits of room temperature and dew point, may therefore be important for a successful print run. Control of temperature of and/or time passing over chilled rollers 212,219, 225, and 231 is important in controlling substrate temperature. A feedback control loop can be used to measure the substrate temperature for example relative to the room temperature and/or dew point (given the room's humidity) to control the temperature of the chilled rollers and the temperature of the substrate as it leaves the roller and approaches the next print station.

Figure 2C is a schematic depicting section 6 and section 7 of the web printing process according to an embodiment. In Figure 2C, Section 6 is second enzyme print station 106. Second enzyme print station 106 includes fifth chilled roller 231, fifth accumulator 232, fifth print roller 233, fourth vision sensor 234, fifth drive roller 235, fifth drier zone 236, Y registration system 237 and outbound nip roller 238. In the embodiment of the invention illustrated in Figure 2C, section 7 is rewinder unit 107.

Rewinder unit 107 includes steering mechanism 239, first rewind arbor 240 and second rewind arbor 241. In a process according to one embodiment of the present invention, section 6 of the web manufacturing process is where the second enzyme printing takes place. In section 6, the enzyme ink artwork for the electrochemical sensors manufactured in accordance with the present invention is printed utilizing screen-printing. The purpose of applying two coatings of the enzyme ink is to ensure complete coverage of the carbon electrodes and so that the electrodes are substantially even and free of voids. The basic components of the second enzyme print station 106 are illustrated in Figures 3A and 3B. In particular, a suitable print station according to the present invention includes a screen 301, lower print roller 303, print roller 600, a flood blade 603, a squeegee holder 605 and a squeegee 606. In second enzyme print station 106, print roller 600 is fifth print roller 233.

In a subsequent print cycle process as illustrated in Figure 3B, squeegee 606 transfers ink 604 through the screen 301 and onto substrate 242. During the print cycle, the squeegee 606, flood blade 603, print roller 600, and lower print roller 303 all move in second direction 607 which is opposite to the web movement of substrate 242. Screen 301 is moved in first direction 608, which corresponds to the web movement of substrate 242 for the print cycle where ink 604 is pushed through screen 301 and deposited on substrate 242. One embodiment of the screen-printing mechanism is described in more detail in issued US Patent No. 4,245,554, which is incorporated by reference herein.

In particular, in second enzyme print station 106, the ink in question is an enzyme ink. In this embodiment of the current invention, screen 301 is flooded with ink 604 prior to using squeegee 606 to transfer the ink 604 through the screen and onto substrate 242. The printed enzyme artwork deposited on substrate 242 is then dried using, for example, hot air at 50 °C directed onto the printed surface of the substrate using two separate drying banks within a fourth drier zone 236, which is illustrated in Figure 2C. An example of a suitable ink for use in second enzyme print station 106 is the same as the enzyme ink used in first enzyme print station, which is described in the Table at page 21 of WO 2004/040285, which is incorporated by reference herein.

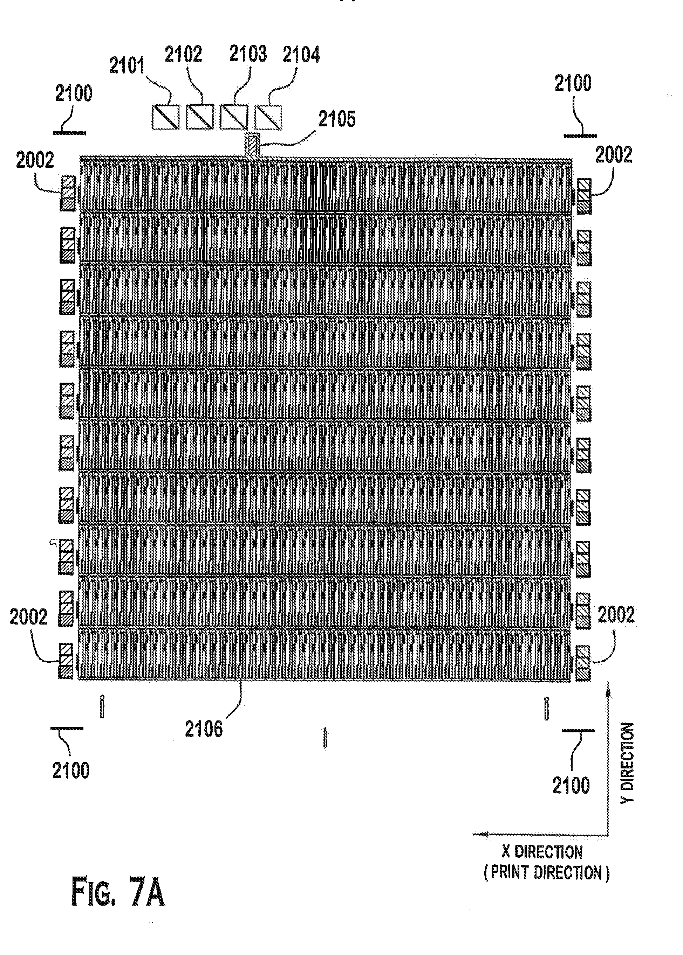

Second enzyme print station 106 may include outbound nip roller 238, inspection system 237 for inspecting registration, third Y registration system at 237C (not shown) and barcode station (not shown). Outbound nip roller 238 helps control the tension of substrate 242 (specifically the tension between inbound nip roller 206 and outbound nip roller 238). Substrate 242 is removed from second enzyme print station 106 at a constant rate by outbound nip roller 238. The Y registration system (not shown) at positions 237A, 237 B and 237C controls the Y registration (i.e. across the web) of each print cycle during printing by utilizing the first Y registration marks 2101, second Y registration marks 2102, third Y registration marks 2103, fourth Y registration marks 2104 which are illustrated in Figure 7A. In one embodiment of the invention, first Y registration marks 2101, second Y registration marks 2102, third Y registration marks 2103, and fourth Y registration marks 2104 may correspond, respectively, to the Y registration of carbon print station 103, insulation print station 104, first enzyme print station 105, and second enzyme print station 106. Each Y registration marks includes 2 triangles that are juxtaposed in an orientation that approximates a rectangle. In one embodiment the Y registration system located at positions 237A, 237B and 237C can be implemented by an Eltromat DGC650 from Eltromat Gmbh in Leopoldshöhe, Germany.

Registration issues in the Y dimension (which can be altered during printing by the registration system (not shown) which is located at 237A, 237B and 237C and/or inspected by inspection system 237 after all print stages are complete) may be ascribed to variations in web tension or non-uniform distortions to the substrate 242. In an embodiment of the invention, the barcode station includes the following commercially available components barcode printer (model number A400 from Domino UK Ltd. in Cambridge, United Kingdom), barcode traverse system (Scottish Robotic Systems in Perthshire, Scotland), and barcode reader (RVSI Acuity CiMatrix in Canton, MA). The barcode station (not shown) labels each row of the sensor sheet 2106 with a 2 dimensional bar code. This provides each row of sensors a unique identifier code, batch/lot number identification, the sensor sheet number, and row number. The barcode station also reads the barcode immediately after printing to verify that the barcode has printed properly and provides a visual indicator to the machine operators. The barcode and process information from sections 2 to 6 are stored in a database and used later to identify and subsequently reject/accept cards for future process. Rewinder unit 107 consists of, for example, a Martin Automatic Rewind System as shown in section 7 in schematic form in Figure 2C.

Figure 5 is a schematic diagram depicting 2 different squeegee angles, which includes a substrate 242, print roller 600, and squeegee 606. The angle of the squeegee 800 can be varied to optimize the definition of the print area. In an embodiment of the invention the angle of the squeegee can be 15 +/- 5 and preferably +/- 1 to 2 degrees. Note that the contact point of the squeegee 606 to print roller 600 is the same for every squeegee angle 800.

Figure 6A is a schematic diagram depicting 2 different squeegee positions which includes substrate 242, print roller 600 lower print roller 303, squeegee 606, first squeegee position 900, and second squeegee position 901. The squeegee position is the position of the squeegee relative to the center of the print roller 600. The squeegee position can have a major effect on the thickness of printed ink. The position of the squeegee can be varied to optimize the definition of the print area.

Figure 6B is a schematic diagram depicting a screen snap distance (1000), which includes substrate 242, print roller 600, lower print roller 303, and screen 301. In one embodiment of the invention, screen snap distance (1000) is the closest distance between screen 301 and substrate 242. In a preferred embodiment of this invention, screen snap setting (1000) may be approximately 0.7mm. If the screen snap setting (1000) is set too high, squeegee 606 cannot sufficiently deflect screen 301 to transfer ink 604 onto substrate 242 with sufficient print definition. If the screen snap setting (1000) is set too low, screen 301 will smear ink 604 from a previous print cycle causing insufficient print definition. An exemplary stencil screen and mesh is shown in Figure 6C.

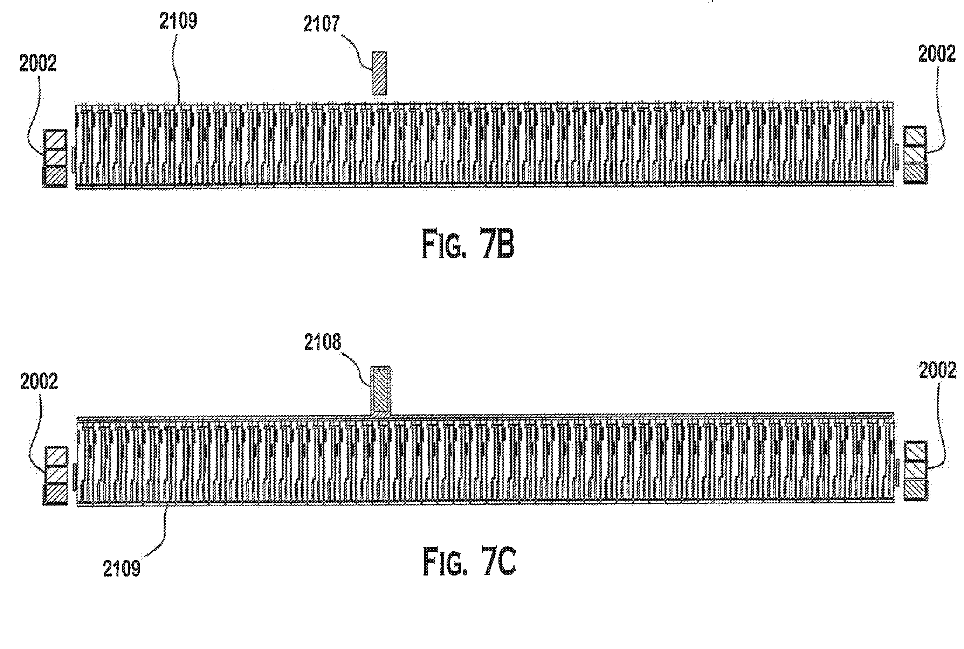

Figure 7A is an example of a sensor sheet with a first view guide 2100 and second view guide 2002, first Y registration marks 2101, second Y registration marks 2102, third Y registration marks 2103, and fourth Y registration marks 2104; and X registration marks 2105. Note that X registration marks 2105 includes carbon X registration mark 2107 and insulation X registration mark 2108. Figure 7B is an exploded view of one row within sensor sheet 2106 with a carbon X registration mark 2107 and second view guide 2002. Figure 7C is an exploded view of one row within sensor sheet 2106 with an insulation X registration mark 2108 and second view guide 2002. Insulation X mark 2108 entirely overcoats carbon X registration mark 2107 as illustrated in Figure 7C and in doing so provides a trigger point (left hand edge say of mark 2108) in advance of that of the original carbon mark 2107. This means that any subsequent layers are printed in relation to the second printed layer (in this case the insulation layer) rather than the carbon layer. This can be useful say if the second and subsequent screen artwork dimensions are longer in the X direction (along the web) than the first screen artwork dimension in the X direction.

As illustrated in Figures and 2, at the end of the process, substrate 242, including the sensors printed thereon is rewound by rewinder unit 107 and is then fed into punch 108, which may be, for example, a Preco punch which is located within a low humidity environment. The Preco Punch is a CCD X, Y, Theta, Floating Bolster Punch. The Preco Punch registration system uses a CCD vision system to look at "Preco Dots" which are printed on the Carbon print station, these allow the punch to adjust to the carbon print and enable the punch to "punch" the cards out square. The output of Punch 108 is a set of punched cards such as those illustrated in Figure 7A. Punched cards are ejected from punch 108 onto a conveyer belt, this conveyer belt transports the cards under a barcode reader which reads two of the barcodes on each card to identify whether the card is accept or reject in relation to the Web Database. Automatic or manual extraction of rejected cards can be carried out. The cards are then stacked on top of one another in preparation for the next manufacturing step.

At carbon print station 103, insulation print station 104, first enzyme print station 105, and second enzyme print station 106 all have a mechanism to visually inspecting the registration immediately after the printing process step using first vision sensor 215, second vision sensor 222, third vision sensor 228, fourth vision sensor 234, respectively.

For each section in the web printing manufacturing process-Section 3, 4, 5 and 6-there are Web Viewer camera systems located immediately after the printing process step as illustrated in Figures 2B and 2C.

The printing guides are illustrated indicated on Figure 7A. For carbon print alignment, second view guide 2100 is used to indicate the carbon print position in relation to the edge of substrate 242 as it runs through carbon print station 103. There is a leading line and a trailing line as illustrated in Figure 7A. The carbon print is adjusted until the lines indicate that the print is square to the substrate edge. Registration of the individually printed layers is required in the X direction (along the length of the machine) and the Y direction (across the width of the machine) See Figure 7A. X direction registration is controlled by the internal registration system of the machine. This utilizes the printed areas indicated on Figure 7A, B and C. On the Carbon print cycle a carbon X registration mark 2107 is printed in this area. The Insulation printing cycle is registered to the Carbon print using sensors which use carbon X registration mark 2107 to allow the insulation screen to adjust in order to print the insulation ink in the correct position. The carbon X registration mark 2107 used for this purpose is then over printed with insulation X registration mark 2108 and is utilized in the same manner to correctly register first enzyme layer 2000 and second enzyme layer 2001 with the insulation print. Y direction registration is controlled by Y registration system (not shown) located at positions 237A, 237B and 237C, which in one embodiment of the invention may be an Eltromat registration system, model number DGC650 from Leopoldshöhe, Germany. This utilizes the printed areas 2101 to 2104 indicated in Figure 7A. On each print cycle - Carbon, Insulation, Enzymel and Enzyme2 - these marks are printed in order that the subsequent print is registered, via sensors, in the Y direction. The Web Database records process information during printing. Formation recorded in the database can be traced back to each individual card via a barcode, in one embodiment a 2D barcode is used.

In one embodiment, the output of the web manufacturing process is cards printed with artwork that includes Carbon, Insulation and two identical Enzyme layers printed in register with one another to form strips each containing an electrochemical sensor and associated contact electrodes for detecting Glucose in a blood sample. The strips are used for self-monitoring of blood glucose in conjunction with a meter. Alternative uses for such strips can be envisaged within the scope of the invention such as detecting ketones, glucose, cholesterol, fructosamine and other analytes or indicators in any body fluid or derivative such as blood, interstitial fluid, plasma, urine, etc. Productions of several designs of strips are utilized. At present the web is designed to produce "One Touch Ultra" strips for use in the One Touch Ultra meter, which is available from LifeScan, Inc. A schematic diagram sample of the artwork produced is in Figure 7A. This illustrates one complete printed card, which contains 10 "Rows" of 50 "Strips." There are a total of 500 "Strips" per card. Print orientations are also indicated. By printing rows 0 to 9 (each of 50 strips) parallel to the direction of print, the process can be easily extended to inclusion of a cutting step separating one row from another. Furthermore this means that any defective rows resulting from cross web variation in print quality (perpendicular to the direction of print) can be identified easily. Each row is allocated a number (identified by a barcode) and therefore specific rows from specific sheets on the web can later be identified with reference to the database and eliminated without the need to reject the whole sheet. This increases the yield of usable product from the process and renders the whole process more efficient.

The movable substantially flat screen copes well with the types of ink (solid/liquid combinations) used in the printing of electrochemical sensors. The use of a movable flat screen can enable better control of print definition and the deposition of the thicker layers of ink needed in electrochemical sensors than may be allowed by rotogravure or cylinder screen-printing. A variety of types of screen (with different mesh, diameter of thread in the mesh, thread separation, thickness, mesh count) are readily commercially available to cope with the different requirements of different types of ink in the continuous web printing process (carbon, insulation, enzyme).

Because of the arrangement of the flat screen print roller, substrate and a squeegee urging the screen towards the substrate, a variety of parameters are available to be manipulated (screen to substrate angle, squeegee angle, screen to squeegee position, squeegee to print roller position, snap distance, relative speeds of substrate and screen and squeegee etc) to optimize the print process for electrochemical sensors.

To summarize (Figures 3-6), a screen-printing device 103 is provided to transfer or print images from a screen mask onto a substrate 242 with carbon ink 604. The device 103 includes rollers 303 and 600, metallic screen mesh 301, carbon ink 604, and a squeegee 606. The rollers 303 and 600 are configured to support and transport the substrate 242 while the screen mesh has an image mask of electrode tracks formed thereon, the screen mesh being in contact with the substrate proximate the roller. The carbon ink is dispensed onto the mesh 301 before being forced through the screen 301 by the squeegee 606. The carbon ink may include a carbon black and graphite mixture with a viscosity of about 10,000 centistokes per second to about 40,000 centistokes per second. Carbon ink having varying physical characteristics can.be purchased from DuPont UK LTD located at Wedgwood Way, Stevenage, Hertfordshire, England, LRH LTD located at Monmouth House, Mamhilad Park, Pontypool, UK or Fujifilm-Sericol UK LTD, Pysons Road, Broadstairs, UK.

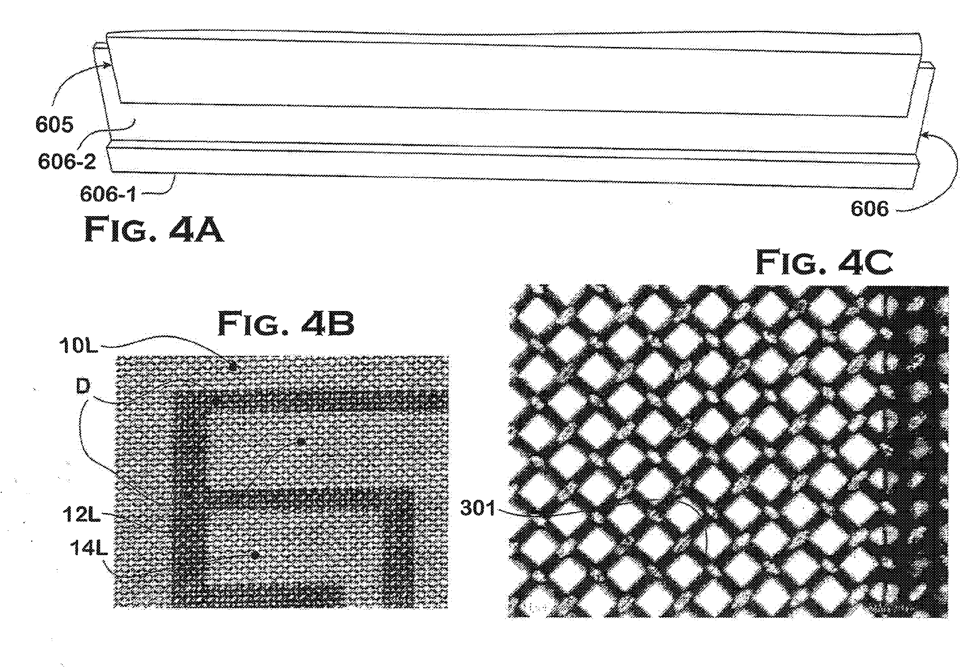

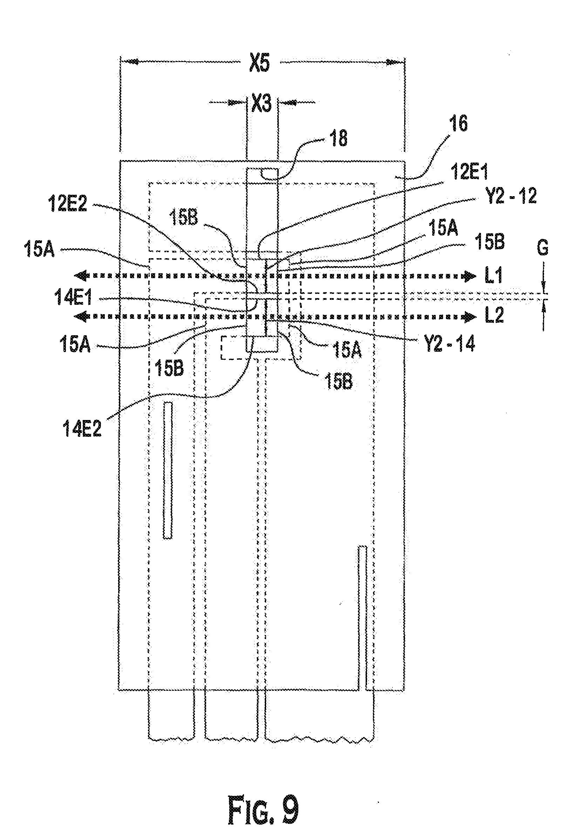

The squeegee blade 606, shown here in Figure 4A, includes a suitable material having a Shore A hardness characteristic greater than 55. The blade 606 is mounted on a holder 605. The blade has two parts, a lower wider portion 606-1 and an upper substantially planar portion 606-2, an upper section of which fits into a recess in holder 605. The lower wider portion 606-1 is typically about 6-10 mm wide and more typically about 8 mm wide $\pm$ 0.6 mm. The upper planar portion is typically about 1.7 mm wide. The blade 606 is configured in a generally planar configuration to force the carbon ink 604 through the screen mesh 301 by application of pressure to the squeegee 606 greater than 4 bars of pressure (up to the machine limit or within a range greater than 4 bar to about 6.5 bar or between about 4 to about 6 bar) where 1 bar is approximately equal to 14.5 pounds per square inch applied on the exemplary squeegee blade. The machine here includes the screen, the frame, the squeegee and the mechanical apparatus for applying pressure to the screen with the squeegee. In one example embodiment, a pressure of greater than 270N per meter of squeegee length is used, for a squeegee of width about 8 mm. The pressure is applied to the squeegee blade of about 370 mm in length. In other words, the force applied to the squeegee blade is greater than 270 Newtons per meter. The blade 606 causes the ink 604 to flow through the mesh screen 301 (Figure 4C) to form an image of the electrode tracks on the substrate 242, for example, Figure 9, such that any variations in a length Y2-12 or Y2-14 of the carbon working electrode tracks 12 and 14 as measured along a virtual line perpendicular to a longitudinal axis L1 or L2 between two side edges 12E1 and 12E2 or 14E1 and 14E2 of a carbon electrode track 12 or 14, respectively in a strip is less than about 3.5% or less than about 2.5% from a predetermined length and that any minimum gap G between any two working electrode tracks 12 and 14 do not vary by more than about 30% from a predetermined gap. In the preferred embodiments, the predetermined length is approximately 0.80, 0.82, 0.84 or 0.86 millimeters and the predetermined gap is approximately 150, 200, 250 or 300 microns. Note that the values given are exemplary because any values can be used as long as the change in values does not vary more than the respective percentage changes.

Referring to Figures 4B and 4C, an image of the carbon electrodes 10, 12, and 14 can be seen on a portion of the screen mesh screen 301. In particular, the dark areas D blocks the flow of carbon ink through the mesh while the light areas 10L, 12L, and 14L allow the carbon ink to flow through thereby forming electrode tracks 10, 12, and 14 of a carbon conductive material. A close up portion of the metallic mesh screen 301 is shown in Figure 4C, which shows, in one embodiment, individual wires of preferably 0.03 mm in diameters interwoven at a mesh angle of about 45 degrees to provide a mesh count of 125 per centimeters with a mesh opening of about 50 micrometers for an open area of about 39% and a mesh thickness of about 47 micrometers. By virtue of the components and systems described and illustrated herein for manufacturing electrochemical sensors, the web expands or stretches as it is heated up and placed under tension during the process. The printing stations (for example carbon, insulation, two enzyme) typically each are followed by a drying station. In order to dry the inks efficiently the drier stations operate at quite high temperatures (50-140 degrees centigrade). Furthermore to aid registration of the web through each printing station, the web is placed under tension.

The substrate has to be kept under tension to control registration within the process, as a result, whenever the substrate is heated for example to dry the inks after printing, the substrate will stretch unpredictably causing image size variation in subsequent prints. The size of the image printed at each print station is determined by several factors (stencil size, ink viscosity, relative web and stencil/screen speed and substrate stretch at that point (both reversible and irreversible stretch), etc. The image size variation (between different printing steps) when looked at the end of the process was found to vary.

It was unpredictable and higher than expected, significantly reducing yields. If the mismatch between image sizes between layers is greater than 300microns along the web (x-direction), the product will not work. The excessive image size variation was thought to be due to excessive and unpredictable stretching (due to heating and tension) and shrinking of the web substrate.

The problem of stretch and tension does not cause the same problems in flat bed printing. To solve the problem in the web process, pre-shrunk substrate was tried. The substrate was heated to around 185 degrees centigrade before being used in the web process. However, the variation in image size remained a problem, and caused reduced yields. The current proposal for the web process is the use of high temperatures in a first drier or rather preconditioned at a sufficiently high temperature so that in one example, irreversible stretch is substantially removed from the substrate, prior to an image being printed on the substrate.

In a first processing station in the web machine, a drier bank heats the substrate up to 160 degrees centigrade. The temperatures encountered by the substrate later in the process, typically do not exceed 140 degrees. In Figure 2A, the first heater bank that the unprinted substrate encounters is a hot plate, This can be a Tetlon coated plate, which lifts and contacts the substrate during motion of the web. The heat is introduced to the back face of the substrate. This is currently running at a set point of 160°C with a specification of +/- 4 °C. The 160 °C set point statistically provided the best dimensional control. The calculated mean is about 161°C. In Bank 2 hot air is introduced to the front face of the substrate at a set point of 160 °C with a specification of+/-4 °C. The calculated mean is about 161.3 °C. In Bank 3 hot air is introduced to the front face of the substrate at a set point of 160 °C with a specification of+/- 4 °C. The calculated mean is about 161.2 °C. In Bank 4 hot air is introduced to the front face of the substrate at a set point of 160 °C with a specification of+/- 4 °C. The calculated mean is about 160.1 °C.

As a result of the web tension and the heat introduced in the drier, the web substrate is stretched by approximately 0.7 mm per artwork repeat. This was one of the primary reasons for utilizing Station 1 as a preconditioning unit to stabilize the substrate prior to subsequent printing stations. The use of Station 1 to precondition the substrate improves the stability of Carbon and Insulation Row Length since much of the material stretch has been removed from the substrate prior to printing.

In one embodiment, high temperatures are used in a first drier at a sufficiently high temperature so that irreversible stretch is substantially removed from the substrate prior to any image being printed on the substrate (i.e. prior the substrate reaching any print stations). In a first processing station, a drier bank heats the substrate to a first temperature, which is substantially higher than any temperature the substrate, will encounter during the printing process. For example, if the highest temperature the substrate will encounter during the printing process is approximately 140 degrees centigrade, the first temperature may be on the order of approximately 160 degrees centigrade.

As a result of the web tension and the heat introduced in the drier, the web substrate is preconditioned, thus reducing the stretching in subsequent process steps in a continuous manufacturing process.

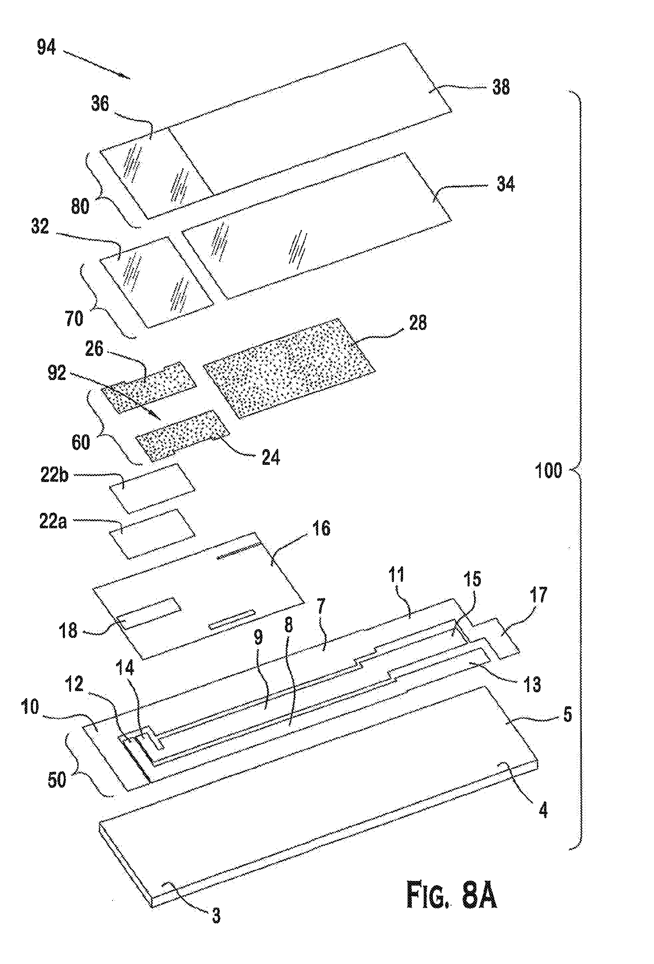

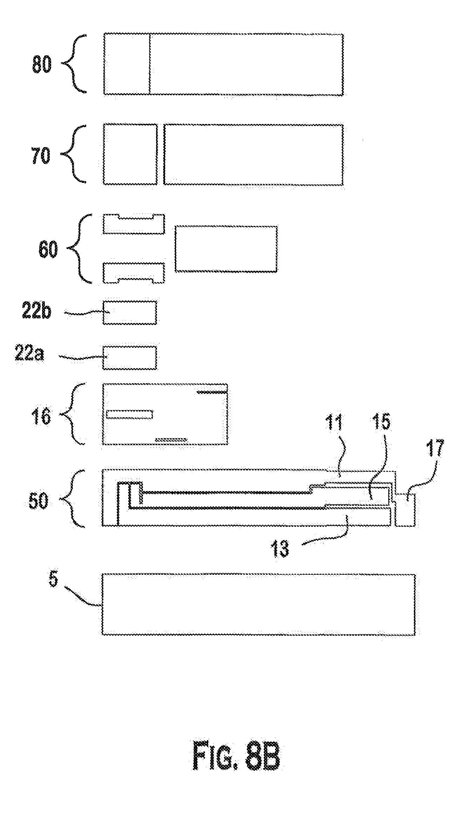

Figure 8A is an exemplary exploded perspective view of a test strip 100, which may include seven layers disposed on a substrate 5. Figure 8B is an exemplary top plan view of the individual layers of Figure 8A. The seven layers disposed on substrate 5 can be a conductive layer 50 (which can also be referred to as electrode layer 50), an insulation layer 16, two overlapping reagent layers 22a and 22b, an adhesive layer 60, a hydrophilic layer 70, and a top layer 80. Test strip 100 can be manufactured in a series of steps where the conductive layer 50, insulation layer 16, reagent layers 22, adhesive layer 60 are sequentially deposited on substrate 5 using, for example, a screen-printing process. Hydrophilic layer 70 and top layer 80 can be disposed from a roll stock and laminated onto substrate 5 as either an integrated laminate or as separate layers. Test strip 100 has a distal portion 3 and a proximal portion 4 as shown in Figure 8A.

Test strip 100 may include a sample-receiving chamber 92 through which a blood sample may be drawn. Sample-receiving chamber 92 can include an inlet at a proximal end and an outlet at the side edges of test strip 100, as illustrated in Figure 8A. A blood sample 94 can be applied to the inlet to fill a sample-receiving chamber 92 so that glucose can be measured. The side edges of a first adhesive pad 24 and a second adhesive pad 26 located adjacent to reagent layer 22 each define a wall of sample-receiving chamber 92, as illustrated in Figure 8A. A bottom portion or "floor" of sample-receiving chamber 92 may include a portion of substrate 5, conductive layer 50, and insulation layer 16, as illustrated in Figures 8A and 8B. A top portion or "roof of sample-receiving chamber 92 may include distal hydrophilic portion 32, as illustrated in Figures 8A and 8B.

For test strip 100, as illustrated in Figures 8A and 8B, substrate 5 can be used as a foundation for helping support subsequently applied layers, Substrate 5 can be in the form of a polyester sheet such as a polyethylene tetraphthalate (PET) material (Hostaphan PET supplied by Mitsubishi). Substrate 5 can be in a roll format, nominally 350 microns thick by 370 millimeters wide and approximately 60 meters in length.

A conductive layer is required for forming electrodes that can be used for the electrochemical measurement of glucose. Conductive layer 50 can be made from a carbon ink that is screen-printed onto substrate 5. In a screen-printing process, carbon ink is loaded onto a screen and then transferred through the screen using a squeegee. The printed carbon ink can be dried using hot air at about 140°C. The carbon ink can include VAGH resin, carbon black, graphite (KS15), and one or more solvents for the resin, carbon and graphite mixture. More particularly, the carbon ink may incorporate a ratio of carbon black: VAGH resin of about 2.90:1 and a ratio of graphite: carbon black of about 2.62: 1 in the carbon ink.

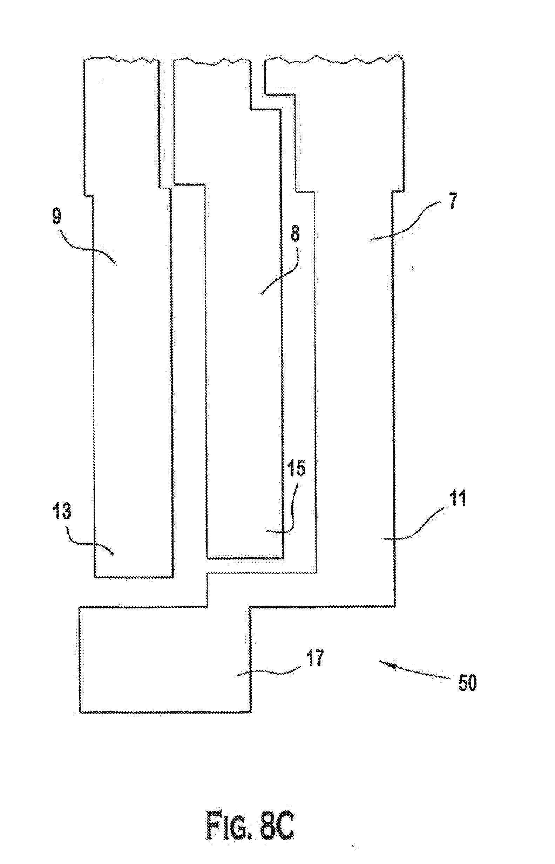

For test strip 100, as illustrated in Figures 8A, 8B and 8C, conductive layer 50 may include a reference electrode 10, a first working electrode 12, a second working electrode 14, a first contact pad 13, a second contact pad 15, a reference contact pad 11, a first working electrode track 8, a second working electrode track 9, a reference electrode track 7, and a strip detection bar 17. The conductive layer may be formed from carbon ink. First contact pad 13, second contact pad 15, and reference contact pad 11 can be adapted to electrically connect to a test meter. First working electrode track 8 provides an electrically continuous pathway from first working electrode 12 to first contact pad 13. Similarly, second working electrode track 9 provides an electrically continuous pathway from second working electrode 14 to second contact pad 15. Similarly, reference electrode track 7 provides an electrically continuous pathway from reference electrode 10 to reference contact pad 11. Strip detection bar 17 is electrically connected to reference contact pad 11. A test meter can detect that test strip 100 has been properly inserted by measuring a continuity between reference contact pad 11 and strip detection bar 17, as illustrated in Figures 8A, 8B and 8C.

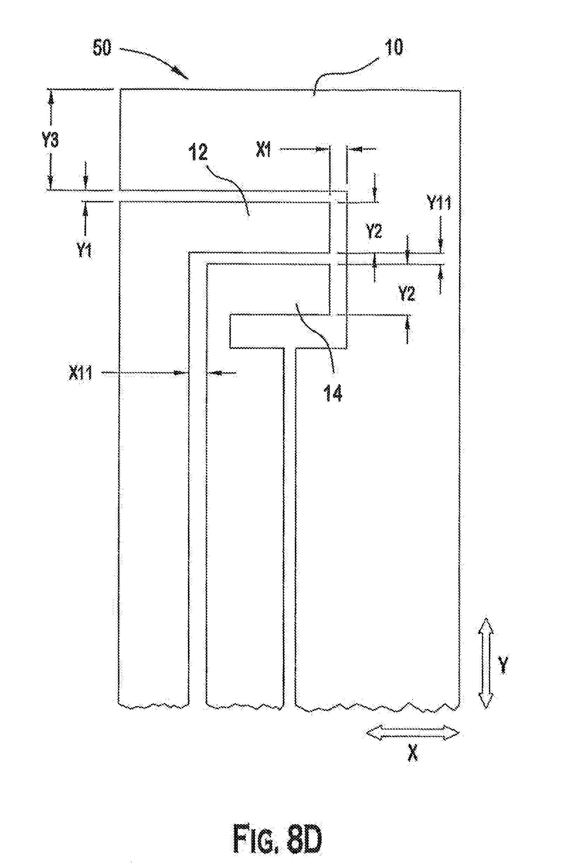

Figure 8D illustrates an exemplary portion of conductive layer 50 at proximal portion 4 of test strip 100. In the X-direction, reference electrode 10 is separated from each of first working electrode 12 and second working electrode 14 by a gap distance X1, as illustrated in Figure 8D. In addition, first working electrode 12 is separated from second working electrode 14 by gap distance X11 in the X-direction, as illustrated in figure 8D. The gap distances X and X11 may be about 300 microns and may or may not be equal. In the Y-direction, reference electrode 10 is separated from first working electrode 12 by a gap distance Y1, as illustrated in Figure 8D. In addition, first working electrode 12 is separated from second working electrode 14 by gap distance Y11 in the Y-direction as illustrated in Figure 8D. The gap distances Y1 and Y11 may be about 100-300 microns, or more preferably 125-200 microns, or more preferably about 180 microns and may or may not be the same. Typically, the nominal dimension of the gap, Y11 (referred to in later embodiments as gap G) on the mesh may be around 200 microns whereas the actual print dimension is nearer 150 microns. It will be appreciated by those skilled in the art that the separation of the reference electrode from the first working electrode and the separation of the working electrodes from each other (in the Y-direction) may be substantially the same (e.g. Y1 = Y11) although this need not necessarily be the case. First working electrode 12 and second working electrode 14 can each have a length Y2 that is about 0.8 millimeters, as illustrated in Figure 8D. Typically, the length of the working electrodes will be substantially the same although this need not necessarily be the case (e.g. Y2 for electrode 12 = Y2 for electrode 14). Reference electrode 10 can have a length Y3 that is about 1.6 millimeters, as illustrated in Figure 8D.

The gap distances X1 and/or X11 can be designed to be sufficiently large to reduce the likelihood of smearing conducting material that causes electrode bridging. It should be noted that increasing the gap distances X1 and/or X11 does not increase the volume of the sample-receiving chamber 92 of test strip 100. In one embodiment, the gap distances Y1 and/or Y11 can be designed to be smaller than gap distances X1 and/or X11. This can be beneficial since larger gap distances Y1 and/or Y11 would increase the volume of the sample-receiving chamber and hence the volume of body fluid required.

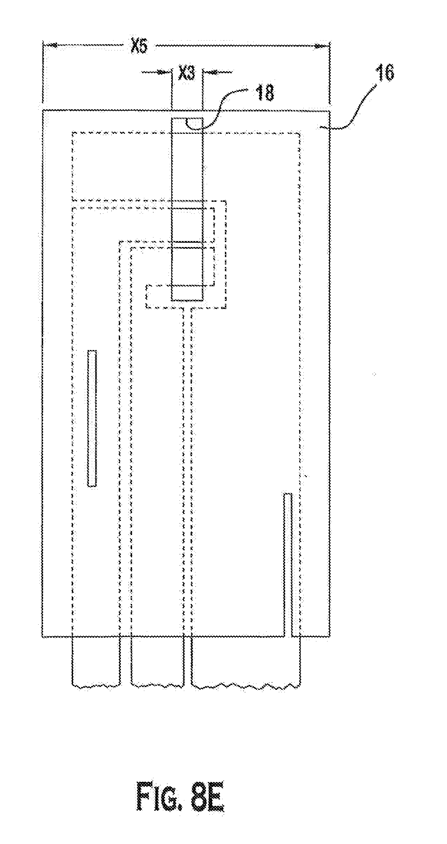

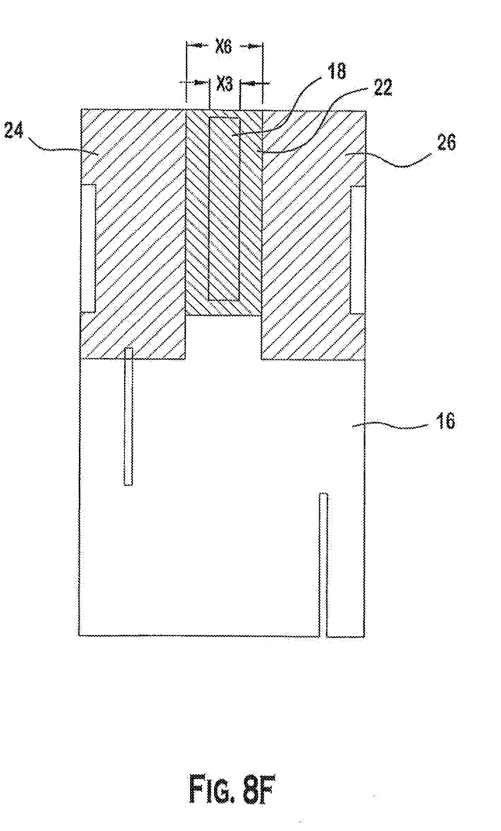

As illustrated in Figures 8E, 8F and 9, insulation layer 16 may include an aperture such as a rectangular aperture 18 that exposes a portion of reference electrode 10, first working electrode 12, and second working electrode 14, to define an enzyme working area of the first and second working electrodes which can be wetted by exposure to a liquid sample, for example, by the insulation aperture 18. The enzyme working area, depending on the calibration input desired, may or may not have the calculated amount of reduced mediator as described herein. The length Y2-12 for the first working electrode 12 and the length Y2-14 of the second working electrode 14 are preferably determined from this working area. The width of the rectangular aperture 18 is X3. Other shapes of aperture are envisaged within the scope of the invention such as square, rhomboid, triangular, circular, ovoid, polygonal, etc. Determination of the working electrode area is relatively simple in the present exemplary embodiment being (X3 x Y2-12) or (X3 x Y2-14).

A gap between a lower peripheral edge of first working electrode 12 is separated by a distance G from the upper peripheral edge of the second working electrode 14 (labeled Y11 in Figure 8D). In addition to defining an electrode area, insulation layer 16 prevents a liquid sample from touching the electrode tracks 7, 8, and 9. It is believed to be important to accurately define the functional area of a working electrode because the magnitude of the test current is directly proportional to the effective area of the electrode. As an example, insulation layer 16 may be Ercon E6110-116 Jet Black Insulayer™ ink that can be purchased from Ercon, Inc (Waltham, Massachusetts).

The test strip 100 is typically elongate and in this exemplary embodiment is substantially rectangular and planar.

Other sizes and shapes of test strips are envisaged such as circular, square, non-planar, etc. For simplicity, in this case of an elongate test strip, dimensions along the test strip are referred to as lengths and dimensions across the test strip are referred to as widths. This is not intended to be limiting except where the context dictates. Furthermore, as stated already, a test strip may be any shape, and whilst typically will be adapted for single use (in other words disposable), such as for self monitoring of blood glucose (SMBG), continuous test strips may also be envisaged within the context of this invention for double, several or true continuous use.

Reagent layer 22 is disposed on a portion of conductive layer 50, substrate 5, and insulation layer 16 as illustrated in Figures 8A and 8B. Reagent layer 22 may include chemicals such as an enzyme and an oxidized mediator that react with glucose. An example of an enzyme may be glucose oxidase and an example of a mediator may be ferricyanide. In one embodiment, reagent layer 22 may include glucose oxidase (Biozyme Laboratories), tri-sodium citrate, citric acid, poly vinyl alcohol (Sigma Aldrich), hydroxyethylcellulose (Natrosol 250 G), potassium ferricyanide, DC 1500 (Antifoam BDH/Merck Ltd), Cabosil TS 610 (Cabot Corp., Billerica, Massachusetts, 01821-7001, U.S.A.), poly vinyl pyrrolidone vinyl acetate) (PVP-VA S-630, ISP Company Ltd), and analar water (BDH/Merek Ltd). Cabosil TS-610 is surface treated fumed silica having hydrophilic and hydrophobic groups. An alternative to Cabosil is believed to be a similar silica having the trade name of Wacker HDK15 (commercially available from Wacker Chemie AG. 81737 Munchen, Germany).

Examples of enzymes suitable for use may include either glucose oxidase or glucose dehydrogenase. More specifically, the glucose dehydrogenase may have a pyrrolo-quinoline quinone co-factor (abbreviated as PQQ or may be referred to its common name which is methoxatin) or a flavin adenine dinucleotide co-factor (abbreviated as FAD). Examples of oxidized mediators suitable for use may include either ferricyanide or ruthenium hexamine trichloride ([Ru$^{III}$(NH$_3$)$_6$]Cl$_3$ and may also be simply referred to as ruthenium hexamine). A proportional amount of reduced mediator can be generated, through the reactions involving enzyme, mediator, and substrate, which is then electrochemically measured for calculating a glucose concentration.

Reagent layer 22 may be formed from reagent ink, which is disposed onto a conductive layer 50, typically also overlapping insulation layer 16 and dried. Note that the reagent ink may also be referred to as an enzyme ink or reagent formulation. Reagent ink typically contains a liquid, such as a buffer, for dispersing and/or dissolving materials used for the electrochemical detection of an analyte such as glucose. In one embodiment, two successive reagent layers 22a and 22b may be screen-printed on conductive layer 50, typically also overlapping slightly insulation layer 16. Reagent ink can be loaded onto a screen until it is flooded. Next, a squeegee can be used to transfer the reagent ink through the screen and onto conductive layer 50. After the deposition, the reagent ink can be dried using hot air at about 50°C.

The area of reagent layer 22 can be sufficiently large to cover the entire area of rectangular aperture 18, i.e., the enzyme working area. Reagent layer 22 can have a width and a length that is sufficiently large to at least account for the largest electrode area that can be used in test strip 100. Width of reagent layer 22 may be about 2 millimeters, which is more than double a largest width X3 of rectangular aperture 18. Width X3 is illustrated in Figure 9 and will be discussed below.

Referring now to Figure 9, working electrodes 12 and 14 have side edges 15A covered (in a complete strip) by insulation layer 16. The exposed areas of working electrodes 12 and 14 have side edges 15B. Two axes L1 and L2 can be defined with respect to side edges 15A or 15B. In the case of square or rectangular working electrodes side edges 15A and 15B are substantially parallel. The lengths Y2-12 and Y2-14 of working electrodes 12 and 14 respectively can be defined as the length of each working electrode in a direction substantially perpendicular to axes L1 and L2. In the case of an end fill strip, the direction of blood can flow from edge 12E1 to edge 12E2 and then to edge 14E1 and edge 14E2 of working electrodes 12 and 14. Insulation aperture width X3 is, in this exemplary embodiment, the distance between side edges 15B of exposed areas of working electrodes 12 and 14 in the direction of axes L1 and L2.

For test strip 100, adhesive layer 60 may include first adhesive pad 24, second adhesive pad 26, and third adhesive pad 28, as illustrated in Figures 8A to 8F and 9. Adhesive layer 60 can be deposed on test strip 100 after the deposition of reagent layer 22. First adhesive pad 24 and second adhesive pad 26 can be aligned to be immediately adjacent to, touch, or partially overlap with reagent layer 22. Adhesive layer 60 may include a water based acrylic copolymer pressure sensitive adhesive which is commercially available from Tape Specialties LTD, which is located in Tring, Herts, United Kingdom (part#A6435). Adhesive layer 60 is disposed on a portion of insulation layer 16, conductive layer 50, and substrate 5. Adhesive layer 60 binds Hydrophilic layer 70 to test strip 100.

Hydrophilic layer 70 may include a distal hydrophilic portion 32 and proximal hydrophilic portion 34, as illustrated in Figures 8A and 8B. Hydrophilic layer 70 may be a polyester having one hydrophilic surface such as an anti-fog coating, which is commercially available from 3M.

The final layer to be added to test strip 100 is top layer 80, as illustrated in Figures 8A and 8B. Top layer 80 may include a clear portion 36 and opaque portion 38, as illustrated in Figures 8A and 8B. Top layer 80 is disposed on and adhered to hydrophilic layer 70. Top layer 80 may be a polyester that has an adhesive coating on one side. It should be noted that the clear portion 36 substantially overlaps distal Hydrophilic portion 32, which allows a user to visually confirm that the sample-receiving chamber 92 may be sufficiently filled. Opaque portion 38 helps the user observe a high degree of contrast between a colored fluid such as, for example, blood within the sample-receiving chamber 92 and the opaque portion 38.

Before moving on to detailed embodiments of various further aspects of the invention, a short description of calibration is appropriate. A lot of test strips (typically one roll of cards or batch from a run, singulated, perforated or cut into test strips) is calibrated as follows. Typically around 1500 strips are selected at random from the lot or batch. Body fluid from donors is spiked to various analyte levels, typically six glucose concentrations. Typically, blood from 12 different donors is spiked to each of the six levels. Eight strips are given blood from identical donors and levels so that a total of 12 x 6 x 8 = 576 tests are conducted for that lot. These are benchmarked against actual analyte level (e.g. blood glucose concentration) by measuring these using a standard laboratory analyzer such as Yellow Springs Instrument (YSI). A graph of measured glucose concentration is plotted against actual glucose concentration (or measured current versus YSI current), and a formula y = mx+c least squares fitted to the graph to give a value for batch slope m and batch intercept c for the remaining strips from the lot or batch.

Now that test strip 100 has been described, the following will illustrate an embodiment for preparing test strips that have a predetermined target slope and predetermined target intercept value that may include the use of at least one and preferably two variables. The first variable is the adjustment of a working electrode area so that the test strip lot has a batch slope substantially equal to the predetermined target batch slope. The second variable is the addition of a predetermined amount of reduced mediator to the reagent ink so that the test strip lot has a batch intercept substantially equal to the predetermined target batch intercept. Thus, using the following method of adjusting the working electrode area and/or adding reduced mediator to the reagent ink, a test strip lot can be prepared that has the predetermined target batch slope and intercept.

In one embodiment, the area of the working electrode can be adjusted by varying the area of rectangular aperture 18, which may range from about $0.48 \text{ mm}^2$ to about $0.64 \text{ mm}^2$. Alternatively, the width X3 of rectangular aperture 18 for defining the width of the working electrode can be varied to range from about 0.6 mm to about 0.8 mm. Adjusting the working electrode area proportionally changes the batch slope and the batch intercept because the magnitude of the measured test current is directly proportional to the working electrode area. The proportional change in test current resulting from a change in working electrode area is ascribed to both Faradaic and capacitance pathways.

A Faradaic current is a current attributed to the oxidation of reduced mediator whereas a capacitance current is attributed to the accumulation of charge at the electrode. An increase in working electrode area causes the Faradaic current to proportionally increase, which in turn causes the batch slope to increase proportionally because more reduced mediator can be oxidized with a larger electrode area per unit glucose concentration. Figure 21 confirms that the batch slope $M_{cal}$ increased proportionally with an increasing width X3 of rectangular aperture 18 of insulation layer 16. Because the width X3 is proportional to the electrode area, the proportional relationship between batch slope $M_{cal}$ and electrode area $A_{elec}$ can be defined by Equation 3. In Equation 3 and the following equations and discussion, the term "$A_{elec}$" and the phrase "electrode area" can include the area of the working electrode(s) covered with reagent and exposed to a test fluid such as blood. Where two or more working electrodes are provided, the term $A_{elec}$ can, in one exemplary embodiment, be the total working electrode area of the strip including contributions from each working electrode and the following description should be read accordingly.

$$\text{Eq. 3} \quad M_{cal} = m_{slope} \times A_{elec}$$

The term $m_{slope}$ is a glucose sensitivity per unit area for a given reagent layer, which is a value proportional to the rate of generating reduced mediator in response to a glucose concentration. The glucose sensitivity per unit area $m_{slope}$ can be calculated as a slope based on a plurality of batch slopes measured at a plurality of electrode areas. Factors that may influence the glucose sensitivity include the reagent layer thickness, the enzyme activity, the amount of oxidized mediator, the distribution of the components of the reagent layer, and the interfacial electron exchange rate. Under certain conditions, components of the preferred reagent formulation such as ferricyanide, surface treated fumed silica (such as Cabosil TS 610 or Wacker H15), PVP-VA S-630, and glucose oxidase may dry as a heterogeneous layer that can affect the generation rate of ferrocyanide. The interfacial electron exchange rate refers to the ability of a carbon electrode to rapidly oxidize ferrocyanide at particular activation energy. When using Equation 3, it is assumed that all of the reagent layers printed on the electrode batches use the same materials and will have the same performance characteristics (i.e., glucose sensitivity) in regards to generating reduced mediator in response to glucose. Thus, the inventors have appreciated that Equation 3 becomes particularly useful when a manufacturing process is controlled sufficiently well such that other factors are relatively stable, enabling reproducible results to be produced when the area is adjusted. For example, a common carbon and/or a common reagent lot may be used and/or a density of reagent ink can be held relatively constant. These aspects will be discussed in more detail later. The glucose sensitivity per unit area may range from about 15 nA / mg / dL / mm$^2$ to about 45 nA / mg / dL / mm$^2$. In one embodiment, the glucose sensitivity per unit area is about 25 nA / mg / dL mm$^2$.

An increase in working electrode area also causes the capacitance current to proportionally increase. It should be noted that the capacitance current decays rapidly with time, and thus, a current measurement at about 5 seconds should have a relatively small capacitance current when compared to the magnitude of the Faradaic current, Figure 22 confirms that the batch intercept $B_{cal}$ increased proportionally with an increasing width X3 of rectangular aperture 18. The applicants have appreciated that, because the width X3 is proportional to the electrode area, the proportional relationship between batch intercept $B_{cal}$ and electrode area $A_{elec}$ can be defined by Equation 4.

$$\text{Eq. 4} \quad B_{cal} = k_1 \times C \times A_{elec}$$

The term $k_1$ is a constant having units of mm nA / mole, C is a molar density of reduced mediator in units of mole / mm$^3$ in a reagent layer in a batch of strips, and $A_{elec}$ is the electrode area in units of mm$^2$ of the working electrode in a batch of strips. Thus, the molar density of reduced mediator in the reagent layer and the area of the working electrode in the strip contribute directly to the intercept. The magnitude of the term $k_1$ depends on a fractional flux of reduced mediator that can be oxidized at the electrode surface and also the diffusion coefficient of the reduced mediator initially stored in the enzyme layer. The magnitude of the term C is the amount of reduced mediator per unit volume in the reagent layer in a batch of strips before adding glucose. In one instance, C may be used to account for the molar density of reduced mediator that is present as an impurity in the reagent layer. An aggregate term $k_1 \times C$ can be calculated as a slope based on a plurality of batch intercepts measured at a plurality of electrode areas. The aggregate term $k_1 \times C$ may range from about 100 nA / mm$^2$ to about 1000 nA / mm$^2$, and preferably range from about 400 nA / mm$^2$ to about 1000 nA / mm$^2$.

Reduced mediator can be added to the reagent ink to increase the batch intercept. The reduced mediator may be in the form of ferrocyanide, ferrocene and its derivatives, hydroquinone, ruthenium hexamine, osmium bipyridyl complexes. When the reduced mediator in the reagent ink is potassium ferricyanide, the reduced mediator may be less than about 0.2% (by weight) of the reagent ink. Alternatively, a percentage of the potassium ferricyanide may be less than about 0.8% (by weight) of the total amount of mediator present in the reagent ink. The total amount of mediator present in the reagent layer can be the combined weight of potassium ferrocyanide and potassium ferricyanide together. Based on a stoichiometric percentage, the reagent ink may be less than about 0.5% (by mole percent) of ferrocyanide with respect to the total mole amount of mediator present in the reagent ink.

As stated in Equation 4, the batch intercept $B_{cal}$ is directly proportional to the molar density of reduced mediator C in the reagent layer. Hence, the batch intercept $B_{cal}$ can be increased by fortifying the reagent layer with more reduced mediator. Figure 23A shows that the batch intercept increased in a linear manner with an increasing amount of added ferrocyanide. To account for the source of the reduced mediator, Equation 4 can be modified to be more specific as shown in Equation 5.

$$\text{Eq. 5} \quad B_{cal} = k_1 \times A_{elec} \times C_{mat} + k_1 \times A_{elec} \times C_{add}$$

The term $C_{mat}$ represents the molar density of reduced mediator present in the reagent layer that is ascribed to impurities in the oxidized mediator from impurities present in the oxidized mediator original source material and from impurities due to subsequent processing. The term $C_{add}$ represents the molar density of reduced mediator present in the reagent layer ascribed to the addition of reduced mediator. The slope of the line in Figure 23A corresponds to the aggregate term $k_1 \times A_{elec}$, which can be determined based on a plurality of batch intercepts measured with a range of added amounts of reduced mediator. It should be noted that the aggregate term $k_1 \times A_{elec} \times C_{mat}$ is a value representative of the contribution of impurities to the original batch intercept where no reduced mediator was added. The molar density of the reduced mediator, $C_{mat}$, due to impurities can be further divided into a contribution from reduced mediator present as an impurity in the original source material used to form the reagent ink, $C_{imp}$, (e.g. reduced mediator such as ferrocyanide present in oxidised mediator material such as ferricyanide) and a varying contribution due to impurities formed during processing from variation in the process, $C_{var}$, etc as will be described in more detail below. Thus, the actual intercept may also include a contribution from a further background intercept, $B_0$, from the reduced mediator contained in $C_{var}$, which can vary randomly about a base value and which is independent of the presence of reduced mediator as an impurity in the original material. It has been appreciated by the applicants that the background intercept, $B_0$, is also a function of working electrode area.

Figure 23B shows the batch intercepts $B_{cal}$ obtained from a plurality of test strip lots manufactured using a common material lot, here a common ferricyanide Lot... 28 as a function of total ferrocyanide loading. Total ferrocyanide loading includes ferrocyanide present as an impurity in the ferricyanide lot $C_{imp}$, added ferrocyanide, $C_{add}$, and ferrocyanide developed as a result of processing, $C_{var}$. Points are an average of 69 lots with 0.2g added, 61 lots with 1.2g added and 52 lots with 3.3g added. Where applicable, the batch intercept has been normalized for insulation window width before averaging.

As shown in Figure 23B, an aggregate term $k_1 \times A_{elec}$ can be calculated as a slope based on a plurality of amounts of reduced mediator per unit volume. The weight of ink is directly proportional to unit volume of ink, see x-axis units of Figure 23B. In Figure 23B, the electrode was of fixed area with a fixed length Y2 and a fixed width X3 = 700 microns. Extrapolating the graph to zero on the x-axis (zero added reduced mediator and zero added impurities) enables a baseline intercept, $B_0$ to be determined for a given area (or insulation window width, assuming a fixed electrode area). Here, baseline intercept $B_0$ is 258nA. Thus, the baseline intercept $B_0$ represents the intercept developed due to the varying amounts of ferrocyanide provided in the ink during processing resulting in a variable molar density of reduced mediator impurities from this source in the reagent layer $C_{var}$ as described above.

The addition of reduced mediator causes a constant bias in the test current that does not depend on the glucose concentration. Thus, an additional amount of reduced mediator provides a relatively constant offset that does not increase with increasing glucose concentration. Figure 24 confirms that the batch slope was essentially unaffected with an increasing amount of added reduced mediator.

Now that two variables for adjusting the batch slope and batch intercept have been described, the following will describe how to determine the electrode area and/or the amount of reduced mediator to use in a subsequent test strip lot for providing a relatively high percentage of test strip lots falling within predetermined target slope and intercept ranges or having predetermined target slope and intercept values. In an embodiment, a predetermined target slope range may be from about 18 nA/mg/dL to about 21 nA/mg/dL, or a predetermined target slope value may fall within that range, and a predetermined target intercept range may be from about 430 nA to about 510 nA, or a predetermined target intercept value may fall within that range. In a preferred embodiment, a predetermined target slope may be about 20.25 nA/mg/dL, and a predetermined target intercept may be about 436 nA, 487 nA or 505 nA. However, under certain circumstances, it is possible that an occasional test strip lot may have a batch slope and batch intercept that is different than the predetermined target values. For such a situation where the test strip lot is produced that is not within the desired specification, steps should be taken to ensure that the next test strip lot will have a batch slope and intercept value that is sufficiently close to the predetermined target values.

For example, a first test strip lot can be manufactured where each test strip has a working electrode having a first area. Note that only one working electrode is described here for purposes of simplicity and this should not be construed as an exclusive limitation. One, or more than one, working electrode(s) may be provided, and the method(s) adapted appropriately as provided for in this disclosure. Next, the first test strip lot can be calibrated to give a first batch slope and a first batch intercept value. If for any reason, the first batch slope is substantially different than the predetermined target batch slope, then steps can be taken to adjust the manufacturing process before starting to make a second test strip lot.

In one embodiment, a second area can be calculated based on the first batch slope and predetermined target slope value. More specifically, the second area can be calculated based on the difference between the first batch slope and the predetermined target slope value. Yet more specifically, the second area can be calculated based on the difference between the predetermined target slope $M_{target}$ and the first batch slope $M_{cal}$ value divided by a glucose sensitivity value per unit area $m_{slope}$, as shown in Equation 6.

$$\text{Eq. 6} \quad \Delta A_{elec} = (M_{target} - M_{cal}) / m_{slope}$$

The term $\Delta A_{elec}$ represents the change in electrode area.

EXAMPLE 1

A first test strip lot was calibrated to have a batch slope of about 18 nA/mg/dL and a batch intercept of about 320 nA, as illustrated by a triangle in Figures 30 and 31. The first test strip lot had an electrode width X3, defined by the insulation aperture width, of about 0.7 mm and no added ferrocyanide to the reagent layer. Next, seven test strip lots were prepared where each test strip lot had a different electrode width X3. The electrode widths X3 employed were 0.56, 0.62, 0.66, 0.70 and 0.84 mm. Each of the seven test strip lots had about one gram of ferrocyanide added to the reagent ink (in a nominal 6kg (e.g. 6.004, 6.017, 6.024, 6.027, 6.034 or 6.037 kg) batch of ink containing nominal 1.4kg (e.g. 1.365, 1.375, 1.385 or 1.395 kg) of ferricyanide). An actual batch slope and batch intercept was determined through a calibration with blood samples having a known glucose concentration. The actual batch slope and batch intercept values for the test strip lots having a range of electrode widths are illustrated by diamonds in Figures 30 and 31. In addition, a predicated batch slope and batch intercept was calculated using Equations 5 and 6, as illustrated by squares in Figures 30 and 31. In both Figures 30 and 31, the predicted batch slope and batch intercept were relatively close to the estimated batch slope and batch intercept values.

Thus, in one aspect of the invention in this example embodiment, the inventors have appreciated that defining a width of a working electrode by an aperture in an insulation layer enables easy adjustment of the working electrode width by adjusting the aperture in the insulation layer.

Alternatively (to Equation 6), the second area can be calculated by multiplying the predetermined target slope times the first area and then dividing by the batch slope, as shown in Equation 7.

$$\text{Eq. 7} \quad A_{elec2} = A_{elec1} \times (M_{target} / Mcal)$$

The terms $A_{elec1}$ and $A_{elec2}$ represent the first and second working areas, respectively, of the working electrodes. Typically, $A_{elec1}$ will represent the average working area of the working electrode for the first batch. For example only, this dimension, as indeed for any other dimension described herein, may be determined by measuring the working area of the working electrode for a number of strips e.g. 10 strips on each of a number of cards e.g. 10 cards throughout each roll of a run and taking an average. In one exemplary embodiment, as will be described hereinafter, an average first batch slope based on the average of a plurality of first batch slopes may be used. For example, this may be determined by measuring the slope for 10 strips on each of 10 cards on each roll of a run and taking an average.

In the following description and elsewhere, target slope and intercept values will be referred to for simplicity. It is to be understood that, in the following discussion, where the target slope or intercept values are referred to these may each be a value with an error bar associated therewith or a range of values, with an error bar associated with each end thereof.

Once the second area is calculated, a second test strip lot can be manufactured where each test strip may include a working electrode having the calculated second area. Next, the second test strip lot can be calibrated to give a second batch slope and a second batch intercept, which is substantially equal to the predetermined target slope and predetermined target intercept values.

Under certain circumstances where a first test strip lot has a first batch intercept $B_1$ that is substantially less than the predetermined target intercept, adjusting the working electrode area may not be sufficient to give a test strip lot having the predetermined target intercept value. For instance, an estimate of anticipated original batch intercept $B_1^*$ can be calculated that adjusts for the use of the second area $A_{elec2}$ using Equation 8. Note that Equation 8 can be used for determining whether adjusting the area alone causes $B_1^*$ to be substantially equivalent to the predetermined target intercept. If this occurs no further action (other than adjusting from $A_{elec1}$ to $A_{elec2}$ e.g. by changing insulation aperture X3) may be necessary.

$$\text{Eq. 8} \quad B_1^* = B_1 \times [A_{elec2} / A_{elec1}]$$

Thus, $B_1^*$ is the estimate of the anticipated batch intercept, if the working area of the electrode is changed from $A_{elec1}$ to $A_{elec2}$. If $B_1^*$ is significantly less than the predetermined target batch intercept, then steps can be taken to increase the predicted batch intercept.

Rectangular aperture 18 can be prepared by the process of screen-printing. A screen having the appropriated geometry must be selected before being able to screen print insulation layer 16 with the adjusted electrode area. The process of screen-printing has limited resolution based on the size of the screen openings. Thus, in one embodiment, the width X3 can be changed in increments of about 25 microns or greater when using a screen-printing process. In many situations, the calculated second area will not correspond exactly with an area provided by one of the screens having discrete area values that increment based on a changing electrode width of 25 microns. When there is not an exact match, there will be two increments in screen size that provide the closest area values to the calculated second area. In one embodiment, the increment that gives a larger area can be selected because the larger area will provide a larger test current. In general, a larger test current has a better signal to noise ratio and can be more accurate in the presence of endogenous interferences. However, in another embodiment, the increment that gives a smaller area can be selected because the smaller area causes the batch intercept to be smaller. In general, smaller intercepts may be preferred because the batch intercept can be increased through the addition of reduced mediator.

In a further aspect, one solution for increasing the batch intercept is to add a predetermined amount of reduced mediator to the reagent layer. For example, if a first test strip lot is manufactured that has a first batch slope and a first batch intercept value that is substantially different than the predetermined target slope and the predetermined target intercept value, a second test strip lot can be prepared that uses a calculated second area with an added amount of reduced mediator.

Previously in this disclosure, the amount of mediator has been discussed in relation to the molar density of extant reduced mediator in the reagent layer ($C_{mat} = C_{imp} + C_{var}$, due to impurities and $C_{add}$ due to purposely added reduced mediator).

The following discussion will relate the molar density of reduced mediator in the dried reagent layer, to the amount of mediator required to be added during manufacturing (e.g. to a predefined quantity of reagent ink) to enable a desired molar density to be achieved in the dried reagent layer in a batch of test strips.

In one embodiment, the second area can be calculated based on a target slope and a previous batch slope, as described earlier by using either Equations 6 or 7. The previously made test strip batch can be calibrated to provide the previous batch slope. In one embodiment, the previously made test strip batch can be one that was most recently made or at least contemporaneous in time with the about to be made test strip batch.

As an alternative or in addition to adjusting the working area of an electrode, an added amount of reduced mediator can be calculated based on the following factors: (1) target intercept, (2) a percent reduced mediator impurity, and (3) a background intercept. In an exemplary embodiment, the added amount of reduced mediator may be calculated without taking into account factors (2) a percent reduced mediator impurity, in other words assuming a zero impurity and/or factor (3) a zero background intercept $B_0$.

Referring now to Figure 23C, this shows the baseline intercepts $B_0$ for 300 batches over 4 cycles. Each cycle represents a number of runs for which the carbon lot is the same. Each point represents one run of 7 or 8 rolls (approximately). The X-axis shows the sequential lot number. The Y-axis shows the baseline intercept $B_0$ in nA. The diamonds represent cycle 11 in which the insulation aperture width X3 was set to be 725mm and $F_{add}$ was set to be 1.2g per ink batch. The squares represent cycle 12 in which X3 was 750 microns and $F_{add}$ was 0.9g and then 1.2g per ink batch. The circles represent cycle 14 in which X3 was 725 microns and $F_{add}$ was 1.2g per ink batch. Each point represents a batch comprising a 7 or 8 roll run for which a baseline intercept $B_0$ has been deduced by adjusting the batch intercept to a standard working electrode area, subtracting the amount of ferrocyanide added and the amount of ferrocyanide present as an impurity in the ferricyanide material lot (established by measurement). The baseline intercepts, $B_0$, vary widely and apparently randomly between around 225nA and just below 400 nA. Nevertheless, the distribution of the baseline intercepts is centred around 300 nA.

Equation 5 can be rewritten as

$$\text{Eq. 5A} \qquad B_{cal} = k_1 A_{elec} \times (C_{imp} + C_{add} + C_{var})$$

For practical reasons, it is more convenient to work with grams of ferrocyanide in a batch of reagent ink than in molar density, C, of ferrocyanide in the reagent layer in a final strip. These quantities are related. The inventors have appreciated that the quantity of water added to the reagent ink components to enable the formation of a liquid suitable for printing, is subsequently removed in its entirety and therefore can be ignored. As an aside, the processing steps involving water may contribute to $C_{var}$ although this can be taken into account another way using historical data to estimate the corresponding associated baseline intercept $B_0$ and subtracting this as described elsewhere herein. Thus, the molar density of reduced mediator in the dried reagent layer, C, is related to the amount, F of reduced mediator (here, ferrocyanide) in the batch of reagent ink by the relationship:

$$\text{Eq. 5B} \qquad C = K_{ink}\, F$$

where C is molar density in moles/mm$^3$, F is amount of ferrocyanide in grams per batch of ink and $K_{ink}$ is a constant relating grams per batch of ink to molar density in a final strip in moles/mm$^3$. Then Equation 5 can be rewritten again as

$$Eq.\ 5C \qquad B_{target} = k_2 A_{elec} F_{imp} + k_2 A_{elec} F_{add} + k_2 A_{elec} F_{var}$$

where $k_2 = k_1 \times K_{ink}$, $B_{target}$ is the target batch intercept and $F_{imp}$ is the impurities present in the component material ferricyanide in grams per ink batch. The term $k_2 A_{elec} F_{var}$ represents the baseline intercept, $B_0$ i.e. the contribution to intercept due to varying transformation to ferrocyanide, from the abundant ferricyanide, during processing. Thus, Equation 5C can be rearranged as follows

$$Eq.\ 5D \qquad B_{target} - B_0 = k_2 A_{elec} (F_{imp} + F_{add})$$

It has already been shown that $B_0$ can be derived from historical data (for a small number of preceding batches in relation to Figure 23B, or a larger number in Figure 23C). $F_{imp}$ can be measured as described elsewhere herein.

Thus, in a preferred embodiment, the added amount of reduced mediator can be determined by calculating a difference between the target intercept and the background intercept, dividing by a constant, and then subtracting the amount of reduced mediator impurity. This is a very practical approach from a manufacturing viewpoint because it gives the amount of reduced mediator to add to a batch of ink, rather than a molar density of reduced mediator required in a dried reagent layer in a batch of strips.

The added amount of mediator is not necessarily dependent on the first batch intercept $B_1$. Surprisingly, this method has been shown to give a plurality of batch intercept values of low variation of about $\pm$ 15%. Thus yet in a more preferred embodiment, the added amount of reduced mediator $F_{add}$ is generally defined by Equation 9A.

$$Eq.\ 9 \qquad F_{add} = \frac{B_{target} - B_0}{K_{int}} - F_{imp}$$

The terms $B_{target}$ represents the target intercept, $B_0$ represents the background intercept, $K_{int} = k_2 A_{elec}$ represents a constant for converting current to an amount of reduced mediator, and $F_{imp}$ represents an amount of reduced mediator associated with the oxidized mediator as an impurity. The terms $F_{add}$ and $F_{imp}$ can be in units of gram ferrocyanide in a batch of reagent ink. The total amount of reduced mediator in a batch of reagent ink can include both $F_{add}$ and $F_{imp}$.

The constant $K_{int}$ can be an empirically derived constant that converts the total ferrocyanide content in the reagent ink into a change in batch intercept. For example, $K_{int}$ may be about 65.5 nA grams of ferrocyanide for test strip batches having a working electrode width of about 700 microns. The constant $K_{int}$ should be normalized to the electrode width being used for the next test strip batch that is about to be made. For example, the next test strip batch could be made with an electrode having about a 725 microns width (with an unchanged electrode length). In such a case, $K_{int}$ can be multiplied by a ratio of 725/700 to give a normalized $K_{int}$ for a test strip batch having an electrode width of about 725 micron.

An alternative method of determining the appropriate added amount of reduced mediator, such as ferrocyanide, is to use the graph in Figure 32 based on the same principles as Equation 9. Here plots are made of the added amount of ferrocyanide required in grams per ink batch versus the amount of ferrocyanide present as an impurity in ferricyanide for a number of different working electrode areas. Typically, an ink batch of nominally 6kg having nominally 1.4 kg of ferrocyanide present. By measuring the amount of ferrocyanide impurity in the ferricyanide, a position on the x axis can be identified. Once an insulation aperture width is selected (based on the target slope), one of the lines on Figure 32 can be identified and an amount of added ferrocyanide required to target in grams per ink batch, can be identified. Here the working electrodes are assumed to have the same length Y2, and only the insulation aperture width, X3 is adjusted to vary the area. Here the target intercept is 487 nA. Other target intercepts including, but not limited to, 436 nA. or 505 nA. are also envisaged within the scope of this invention. As an aside, Figure 32 also shows the expected ferrocyanide impurity level range based on manufacturers specification, Q and the actual ferrocyanide impurity range for the raw material used (derived from measurements).

The amount of reduced mediator associated as an impurity of the oxidized mediator $F_{imp}$ is proportional to the percent reduced mediator impurity. For example, ferrocyanide is a reduced mediator and can be associated as an impurity in an oxidized mediator such as ferricyanide. Ferricyanide is an example of an oxidized mediator that can be used in reagent ink. Depending on the source, quality, and storage conditions of a ferricyanide reagent lot, there can be an amount of ferrocyanide present in the ferricyanide reagent lot as an impurity. It should be noted that the amount of reduced mediator present as an impurity is equal to the percent reduced mediator impurity times the amount of oxidized mediator in the reagent ink batch. The percent ferrocyanide impurity can be measured using a wide variety of analytical techniques such as, for example, UV-Visible spectrophotometry or redox titrations. Appropriate analytical techniques for determining ferrocyanide impurity can be found in "AnalaR Standards for Laboratory Chemicals" (BDH, 1984, ISBN 0-9500439-4-X), which is incorporated by reference herein.

The background intercept $B_0$ represents the aggregate of several factors other than the amount of added reduced mediator $F_{add}$ and the amount of reduced mediator as an impurity $F_{imp}$. Factors that contribute to the background intercept besides that of added reduced mediator $F_{add}$ and the amount of reduced mediator as an impurity $F_{imp}$, include, for example, reduced mediator that can be generated during the reagent ink mixing process, the storage time between reagent ink preparation and the printing process, the reagent ink printing process, and the reagent ink drying process as well as the working electrode area. In addition to the generation of reduced mediator during the processing steps, other factors that can affect background intercept $B_0$, are the reagent enzyme layer thickness and the presence of oxidisable species present in blood during the test strip calibration process. In general, a thicker reagent layer will have in total more reduced mediator than a thinner reagent layer which will have less reduced mediator. Oxidisable species present in blood (e.g., ascorbate, urate, and acetaminophen) can be oxidized directly at the working electrode or indirectly. Indirect oxidation occurs when the oxidisable species reduces the oxidized mediator to a reduced mediator, which can then be oxidized at the working electrode.

As discussed herein, there are a large number of factors that can affect the magnitude of the background baseline intercept $B_0$. Thus, a sufficiently large number of test strip batches should be used, which are representative of the above-mentioned factors, when calculating background intercept $B_0$. In an embodiment, about 200 or more test strip batches may be averaged together when calculating background intercept $B_0$, for example, using data such as that shown in Figure 32. The about 200 or more test strip batches should be manufactured during a suitable time period in which the manufacturing process is relatively stable. Batch intercept values that can be designated as an outlier using statistical techniques and/or can be ascribed to a special cause variation should be excluded from the calculation of the background intercept $B_0$. When averaging batch intercept values together to calculate a background batch intercept $B_0$ that can be representative of the general background signal, each batch intercept value should be normalized to account for the contributions due to the working electrode area, the added amount of reduced mediator, and, the percent reduced mediator impurity, which can vary for each test strip batch. Even greater quantities of historical data, such as those seen in Figure 23C, can also be used.

The batch intercept value can be normalized for the electrode area by multiplication by a ratio of electrode areas. For example, if the batch intercept is obtained for a test strip batch having a working electrode that is 725 microns wide and the batch intercept needs to be normalized for a 700 micron wide working electrode (assume both electrodes have the same length), then the batch intercept should be multiplied by a ratio 700/725.

The batch intercept value can also be normalized for the added amount of reduced mediator by subtracting the contribution of the added amount of reduced mediator from the batch intercept. For example, if the batch intercept is obtained for a test strip batch that had 0.2 grams of ferrocyanide added, then 0.2 grams is multiplied by $K_{int}$, which in this case is 65.5 nA / gram ferrocyanide, to give 13.1 nA. Thus, to normalize the batch intercept for the effect of the added amount of reduced mediator, 13.1 nA should be subtracted from the batch intercept.

The batch intercept value can also be normalized for the percent reduced mediator impurity of the test strip batch by subtracting the contribution of the impurity from the magnitude of the batch intercept. For example, a batch intercept could be obtained for a test strip batch having a percent reduced mediator impurity of 0.1%. As a first step, the percent reduced mediator impurity can be converted to an amount of reduced mediator impurity. Reagent ink can be prepared with about 1385 grams of ferricyanide, and thus, would have about 1.385 grams of ferrocyanide if the percent reduced mediator impurity is about 0.1%. Next, the approximately 1.385 grams of ferrocyanide can be multiplied by $K_{int}$, which in this case is about 65.5 nA / gram ferrocyanide, to give about 90.7 nA. Thus, to normalize the batch intercept for the effect of the reduced mediator impurity, about 90.7 nA should be subtracted from the batch intercept.

Now that a method to calculate the added amount of reduced mediator using Equation 9A has been described, a second reagent layer (here "second" refers to a second test strip lot) can be prepared that includes the calculated amount of reduced mediator, a predetermined amount of oxidized mediator, and a predetermined amount of enzyme. The second test strip lot can then be manufactured with the second reagent layer and where each test strip includes a working electrode having the calculated second area. After calibration, the resulting second test strip lot will have a batch slope and a batch intercept that is close to and in some cases substantially equal to the predetermined target slope and the predetermined target intercept values. Surprisingly, the use of the target intercept, the percent reduced mediator impurity, and background baseline intercept $B_0$ for calculating the added amount of reduced mediator caused the resulting plurality of batch intercept values to have a low variation of about 15% or about +/- 70 nA (for a target intercept of about 490 nA). In an embodiment, about 10 batches to about 100 batches may be required to verify the low variation of the batch intercept. For each batch, about 600 test strips may be needed to perform a calibration process for determining the batch intercept. It should be noted that the addition of reduced mediator is effective for increasing the batch intercept to the predetermined target value, but is not suitable for decreasing the batch intercept.

The following will describe an example of the calculations included for determining the amount of added ferrocyanide needed to prepare a reagent ink for test strip batch having a target intercept $B_{target}$ of about 487 nA and a target slope $M_{target}$ of about 18.4 nA/mg/dL. Using either Equation 6 or 7, a calculated electrode area was found to have a width of about 700 microns. For this reagent ink, a potassium ferricyanide lot was used having percent ferrocyanide impurity of about 0.105 wt %. Also, the reagent ink batch included about 1385 grams of potassium ferricyanide. Thus, the amount of ferrocyanide impurity associated with the ferricyanide lot is $F_{imp}$ = 0.105 wt % x 1385 g of ferricyanide = about 1.45 g ferrocyanide. About 244 batch intercept values were collected over a period of time where the test strip batches included a range of electrode areas and a range of added amounts of ferrocyanide. A resulting background intercept $B_0$ of about 298 nA was determined by averaging all of the batch intercept values together and normalizing for an electrode width of about 700 microns. As mentioned earlier, the empirically derived value of $K_{int}$ is about 65.5 nA/gram ferrocyanide based on an electrode width of about 700 microns. Because $B_{target}$, $B_0$, $K_{int}$, and $F_{imp}$ have now been quantitatively defined, $F_{add}$ can be calculated using Equation 9A.

$$F_{add} = \frac{B_{target} - B_0}{K_{int}} - F_{imp} = \frac{487 - 298}{65.5} - 1.45 \cong 1.43\, grams.$$ Thus, about 1.43 grams of

ferrocyanide should be blended with the reagent ink in a batch of reagent ink before printing onto the working electrode.

EXAMPLE 2

However, if it were determined using Equations 6 or 7 that an electrode width other than about 700 microns was required, it would be necessary to normalize the background intercept $B_0$ and the empirically derived constant $K_{int}$ to another electrode width. The following example describes how to calculate $F_{add}$ if the electrode width was about 725 microns. Equations 10 and 11 show how to normalize $B_0$ and $K_{int}$ to account for an electrode width of about 725 microns.

$$Eq.\ 10 \qquad B_0\ (725) = 298\ nA * (725/700) = about\ 309\ nA$$

$$Eq.\ 11 \qquad K_{int}\ (725) = 65.5\ nA\ /\ g\ per\ ink * (725/700) = about\ 67.8\ nA\ /\ gram$$
$$ferrocyanide$$

Using the-normalized values of $B_0$ and $K_{int}$ to account for an electrode width of 725 microns, $F_{add}$ can be calculated using Equation 9A. $F_{add} = \frac{B_{target} - B_0}{K_{int}} - F_{imp} = \frac{487 - 309}{67.8} - 1.45 \cong 1.17\, grams.$ Thus, about 1,17 grams of ferrocyanide can be blended with the reagent ink when making test strip batches having an electrode width of about 725 microns. In an example embodiment, ferrocyanide of from 1 gram to 9 grams can be added to a nominal 6 kg batch of reagent ink containing a nominal amount of 1.4 kg of ferrocyanide.

Now that a method has been described for manufacturing a plurality of test strips, the following will describe a feedback process for making a plurality of test strip batches with an adjusted electrode area and/or added amount of reduced mediator so that the likelihood is reduced for making a large number of test strip batches having a batch slope or batch intercept sufficiently far from the target values.

Figures 27A and 27B show a flow chart of methods 2700 and 2701 for manufacturing a plurality of test strip batches. In one embodiment the method 2701 initially includes two paths that may be performed in parallel for determining the electrode area and the amount of added reduced mediator. In an embodiment with two levers, these may also be performed in series (method 2700, Figure 27A). In method 2700 for determining the electrode area, the method includes pre-screening a relatively small test strip batch to provide a previous batch slope (step 2704) and setting the lever for the first electrode area by performing a calculation using the previous batch slope (step 2708). For determining the amount of added reduced mediator, the method includes measuring the percent ferrocyanide impurity in the raw material lot (step 2702), estimating the background intercept from a contemporaneous first plurality of test strip batches (step 2703), and setting the lever for intercept by calculating a first amount of added reduced mediator (step 2709). Step 2709 uses the impurity level, the background baseline intercept $B_0$ and the selected working electrode area (from step 2708) to set the lever for the intercept using Equation 9A. Thus, in step 2709 the baseline intercept $B_0$ is adjusted using the new working electrode area, typically by adjusting for a new insulation window width from step 2708. Also, in step 2709, the constant $K_{int}$ (see Equation 9A) is adjusted using the working electrode area, typically the insulation aperture window width. Also, in step 2709, a target intercept $B_{target}$ is selected and $B_0$, $K_{int}$ and $B_{target}$ are used to calculate the amount of reduction mediator to add ($F_{add}$).

Now that the factors or levers affecting intercept and slope have been set, a verification run can be performed (step 2710). A second plurality of test strip batches can be prepared during the verification run to verify that the lever settings provide batch slopes and batch intercepts substantially equal to the target values. It should be noted that the pre-screening batch can include about 150,000 test strips and that the verification run can include about 7,000,000 test strips. The second plurality of test strips can be calibrated to provide a plurality of second batch slopes and a plurality of second batch intercepts.

The lever settings can be confirmed (step 2712) by determining if the second batch slopes and the second batch intercepts are substantially equal to the target values. If the second batch slopes and second batch intercepts are substantially equal to the target values, then the methods will move forward and prepare large-scale production batches (step 2714). A third plurality of test strip batches can be prepared during the large-scale production batches using the first calculated working electrode area and the first added amount of reduced mediator.

However, if the second batch slope is not substantially equal to the target slope, then a second working electrode area can be calculated based on a difference between the second batch slope and the target slope. If the second batch intercept is not substantially equal to the target intercept, then a second added amount of reduced mediator can be calculated based either on a difference between the second batch intercept and the target intercept using Equation 8 or based on recalculating the amount of ferrocyanide to add using Equation 9A, or Figure 33, using the second working electrode area (step 2711). The second calculated working electrode area and/or the second added amount of reduced mediator can be implemented in steps 2708, 2709, 2710 to prepare a fourth plurality of test strip batches to verify that the modified lever settings provide batch slopes and batch intercepts substantially equal to the target values. This can be repeated as necessary. Selecting a high target intercept can be useful in ensuring that there is almost always the ability to change the intercept towards the target by adding reduced mediator.

**[0331]** - Method 2701 (Figure 27B) is similar to method 2700 (Figure 27A) except that the lever for intercept 2706 is set without reference to the lever for the slope 2708. A further alternative is to use a method based on Equation 8 to target an intercept rather than one based on a background baseline intercept, $B_0$ and a measured impurity level (e.g. as per Equation 9A).

In an embodiment, a pre-test strip screening process can be performed to reduce the number of test strips that could be wasted if the batch slope and batch intercept are not substantially equal to the target values. A sub-assembly of a test strip can be prepared during the verification run and the large-scale production batches that are in the form of a card or a roll. Once the sub-assembly is made, a fraction of them can be converted into fully assembled test strips and then calibrated to confirm that the lever settings are correct. Typically, this takes place after the verification run in step 2710. However, this approach could be used alternatively or in addition in pre-screen batch step 2704 or production batch step 2714. If the lever settings are correct, then the remaining sub-assemblies can be converted into fully assembled test strips. If the lever settings are not correct, then the remaining sub-assemblies can be discarded and a new batch of sub-assemblies can be made with modified lever settings.

In one embodiment, the sub-assembly can be in the form of a pre-test strip card. The pre-test strip card can include a substrate coated with the conductive layer, the insulation layer, and the reagent layer, but does not include the adhesive layer, the hydrophilic layer, and the top layer. A web or roll format of the sub-assembly can be cut into cards having a plurality of test strips such as, for example, about 500 test strips. For example, 7,000,000 test strips made during the verification run can first be made in the form of pre-test strip cards. Next, a small sampling of a plurality of test strip cards can be converted into about 600 fully assembled test strips by applying the adhesive layer, the hydrophilic layer, and the top layer, and then cutting the cards into individual test strips. A calibration process can be performed with a plurality (typically 600) of test strips to determine whether the batch slope and batch intercept are substantially equal to the target values. If the batch slope and batch intercept are substantially equal to the target values, the remaining pre-test strip cards can be converted into fully assembled test strips. If the batch slope and batch intercept are not substantially equal to the target values, the remaining pre-test strip cards can be discarded. Discarding pre-test strips cards that do not have a batch slope and a batch intercept substantially equal to the target values saves time and material because several steps are avoided such as laminating the adhesive layer, the hydrophilic layer, and the top layer, and singulation into test strips.

In an alternative embodiment, instead of discarding pre-test strip cards that do not have a batch slope and a batch intercept substantially equal to the target values, the pre-test strip cards can be fully assembled for use with test meters that require a calibration code to be inputted. The test strip batches, that have a batch slope and a batch intercept substantially equal to the target values, can be used with test meters that do not require a calibration code to be inputted.

It should be noted that the large-scale production batches can include about 100,000,000 or more test strips, which is substantially more than the about 7,000,000 test strips used in the verification run. Thus, it is desirable to use the verification run to confirm that the lever settings provide the target slope and target intercept values before moving forward with the large-scale production batches. In summary, the use of a feedback process in methods 2700 and 2701 that involves the confirmation of the lever settings reduces the likelihood of creating a large amount of test strips that do not have batch slopes and batch intercepts that are substantially equal to the target values.

Other factors, including but not limited to examples, such as, conductive (e.g. carbon) ink lot, oxidized mediator lot, density of enzyme ink, mixing time, mixing process, standing time, squeegee hardness, squeegee pressure, preconditioning of substrate, mesh type, mesh deformability, working electrode length, working electrode separation and snap distance, that affect slope and/or intercept can be adjusted as part of the process as illustrated and described herein. Alternatively, these can be controlled so as to be sufficiently identical during each run such that these do not significantly affect slope and/or intercept, allowing levers for slope and intercept to be adjusted as required. In one exemplary embodiment, a common conductive (e.g.carbon) ink lot can be used and/or the density of enzyme ink controlled, for example, by the method outlined herein. This allows the levers to be more effectively used to target a desired slope and/or intercept. Typically, the lever for the slope is set before the lever for the intercept. This is because when the area is adjusted to affect the slope, it also affects intercept whereas the addition of reduced mediator in an ink batch only affects intercept not slope.

In a further aspect, the following will illustrate embodiments for preparing reagent formulations that have a targeted density. In one embodiment for preparing the reagent formulation, a first solution can be prepared that includes at least one rheological control agent. Next, the first solution can be supplemented with a mediator and an enzyme to form the reagent formulation or enzyme ink.

A rheological control agent is a material that generally increases the viscosity of the reagent formulation and/or modifies the flow properties of the reagent formulation. The rheological properties of the reagent formulation can influence the thickness of a printed reagent layer when using the process of screen-printing or other deposition technique such as, for example, a non-contact printing, e.g., ink-jet printing. In addition, the rheological properties of the reagent formulation can influence the morphology of the dried reagent layer such as, for example, the porosity of the dried reagent layer.

## EXAMPLE 3

The first solution can be prepared by mixing together a buffered polymer solution with silica having hydrophilic and hydrophobic groups. More specifically, approximately 675 grams Cabosil TS-610 (surface treated fumed silica having hydrophilic and hydrophobic groups) or Wacker H15 Silica can be mixed with approximately 9000 grams of buffered polymer solution. The buffered polymer solution contains a weight % of the following ingredients of approximately 0.46% DC 1500 Antifoam, approximately 0.91% PVP-VA S-630, approximately 0.83% citric acid, approximately 2.74% tri-sodium citrate, approximately 0.91% PVP-VA S-630, approximately 4.62% Natrosol 250 G, and approximately 89.52% water. The Cabosil TS-610 can be dispersed in the buffered polymer solution using a Dispermat mixer for about 16 minute mixing time at approximately 3,000 rotations per minute. Note that various embodiments described herein are not limited to mixing using a propeller blade and that other forms of mixing such as homogenization, dispersion, and blending could be used to combine components of the reagent formulation. For example, sonication or ultrasonic mixing may be used as an alternative to the mixing technique described herein.

Applicants have discovered that the density of the first solution can have a large amount of variation. The first solution could show a variation of density values ranging from about 0.8 g/cm$^3$ to about 0.95 g/cm$^3$. The cause of the variation in density is believed to be a variable in the content of air in the dispersion containing silica and the buffered polymer solution. In addition, the density of the first solution was found to have an effect on the test strip response current when measuring an analyte. Figure 25 is an exemplary graph illustrating the effect of the first solution on a batch slope. It should be noted that the density of the reagent formulation is similar in magnitude to the first solution. The density of the first solution is prepared without enzyme and mediator so that the mixing time with the enzyme and the mediator is reduced. In general, the enzyme and mediator are chemically less stable when being mixed. The graph in Figure 25 shows that there is a linear relationship between batch slope and the density of the reagent formulation, which can be quantitatively described in Equation 12.

$$\text{Eq. 12} \quad \rho = \frac{M_{eal} - k_2}{k_3}$$

The term p is the targeted density, $M_{eal}$ is the batch slope, $k_2$ is a second constant, and $k_3$ is a third constant. Note that the term p is in units of weight per unit volume, unlike the molar density C, referred to elsewhere in this disclosure, which is in moles per unit volume. The targeted density of the first solution may range from about 0.7 grams per $cm^3$ to about 1.1 grams per $cm^3$, and preferably range from about 0.92 grams per $cm^3$ to about 0.96 grams per $cm^3$ or, more preferably, within a range of about 1.00 + or - about 0.015 grams per $cm^3$ or less, or more preferably within a range of +/- 0.015 grams per $cm^3$ or less of a target density value, such as any value between about 0.7 grams per $cm^3$ and 1.1 grams per $cm^3$. The batch slope may range from about 16 nanoamperes per milligram per deciliters to about 30 nanoamperes per milligram per deciliters. The second constant $k_2$ may range from about 7 nanoamperes per milligram per deciliters to about 10 nanoamperes per milligram per deciliters. The third constant $k_3$ may range from about 10 nanoamperes/milligram/deciliters/grams/$cm^3$ to about 12 nanoamperes per milligram per deciliters/grams/$cm^3$.

<u>EXAMPLE4</u>

Figure 26 is an exemplary graph illustrating the effect of mixing time on a density of the first solution where several first solutions were prepared that contained different lots of Cabosil TS-610. Over a time period of about 10 minutes to about 30 minutes, the first solution shows an approximately linear increase in density with mixing time. Figure 26B is an exemplary graph illustrating the effect of mixing time on a density of a lot of a first solution prepared using an alternative grade of surface treated fumed silica (Wacker H15). The triangles illustrate the mean density, the circles the minimum density and the squares the maximum density in grams per $cm^3$. Proposed values for upper and lower specification units are shown as horizontal lines.

As an experiment, a plurality of first solutions were prepared using a fixed mixing time of about 16 minutes. When using a fixed mixing time, the first solution had a density of any value from about 0.83 grams/$cm^3$ to about 0.95 grams/$cm^3$. In another experiment, a plurality of first solutions were prepared using a variable mix time so that the first solution could achieve a targeted density of any value from about 0.92 grams/$cm^3$ to about 0.96 grams/$cm^3$. When using a variable mixing time, the mixing time is any duration from about 4 minutes to about 30 minutes or more preferably about from 16 minutes to about 30 minutes. Thus, the use of a variable mix time can substantially reduce the resulting variability in the density of the first solution.

In one embodiment, a method of manufacturing a reagent formulation includes mixing a first solution containing a suitable rheological component for a predetermined amount of time. The rheological control agent can include a silica having hydrophilic and hydrophobic groups, hydroxyl ethyl cellulose, or a combination thereof. The mixing step can be performed with a propeller at about 3000 rotations per minutes. The predetermined amount of time for mixing may be about 16 minutes. The mixing process can cause the rheological components to hydrate with water to modify the viscosity and fluid properties of the first solution.

Next, an aliquot of the first solution can be removed to measure its density. The density can be measured with a Cole Parmer 11.5 ml Grease Pycnometer (Cole Parmer Instrument Co. Ltd). Essentially, a fixed volume of the first solution can be removed and then weighed to determine the mass, which allows for the density to be calculated. If the density is not greater than a threshold, then the first solution can be mixed for another period of time sufficient to increase the density to be about equal to or greater than the threshold. The threshold may be about 0.87 grams/$cm^3$. Further mixing of the first solution can further the equilibration of the rheological components with water. In addition, the mixing can cause trapped air to be removed from the first solution causing the density to increase. The predetermined amount of time for further mixing may be about 4 minutes. It should be noted that the density of the first solution does not change to a significant degree when stored in a quiescent state. Thus, in the absence of mixing, the density of the first solution is a relatively constant value for a prolonged period of time such as, for example, about a week. Upon the density being about equal to or greater than the threshold, a mediator and an enzyme can be blended with the first solution to form the reagent formulation.

In an alternative embodiment, the mixing step can include subjecting the first solution to a reduced pressure for facilitating the mixing process and removing air.

In another embodiment, a method of manufacturing a plurality of test strips can include adjusting a density of a colloidal suspension to a targeted density. The targeted density can be calculated based on the targeted batch slope. For example, Equation 12 and associated constants can be used for calculating the targeted density. The density can be adjusted by changing a duration of a mixing time. For example, the duration of the mixing time may range from about 10 minutes to about 30 minutes. Alternatively, the density can be adjusted by adding an added amount of a suitable rheological control agent such as, for example a silica having hydrophilic and hydrophobic groups. The colloidal suspension can be dispersion of rheological control agents in a buffer.

The targeted density may be of any value from about 0.7 grams per cm$^3$ to about 1.1 grams per cm$^3$, and preferably from about 0.92 grams per cm$^3$ to about 0.96 grams per cm$^3$. Next, a mediator and an enzyme can be added to the colloidal suspension to form a reagent formulation. The reagent formulation can then be disposed on a working electrode for each test strip of the plurality of test strips by a suitable deposition technique, as described earlier. The test strips can be calibrated using a plurality of samples having a known glucose concentration to determine a batch slope. As a result of adjusting the density of the colloidal suspension, the resulting batch slope is substantially equal to a targeted batch slope. This method of adjusting or controlling the density to be constant can be used in addition to or as an alternative to other methods of adjusting batch slope described and illustrated herein.

In another embodiment, a method of manufacturing a reagent formulation can be obtained by achieving a density that has a targeted range instead of being greater than or equal to a threshold value. In this method, density is bounded by a lower limit and an upper limit for density. This method includes mixing a solution that contains a rheological control agent for a predetermined amount of time. Next, a density of the solution is measured. If the density is not within a targeted range, the solution is further mixed for a predetermined amount of time such that the density is within the targeted range. Upon the density being within the targeted range, a mediator and an enzyme can then be blended with the solution to form the reagent formulation. For example, the targeted density range may be of any value from about 0.7 grams per cm$^3$ to about 1.1 grams per cm$^3$, and preferably from about 0.92 grams per cm$^3$ to about 0.96 grams per cm$^3$.

In an exemplary embodiment, a first solution can be made to a targeted density, as herein described, and put aside until required. Immediately prior to use, e.g., about 4 to about 6 hours before use (or even up to 12 or 24 hours before use) a mediator and enzyme can be added to complete the preparation of reagent formulation ready for use.

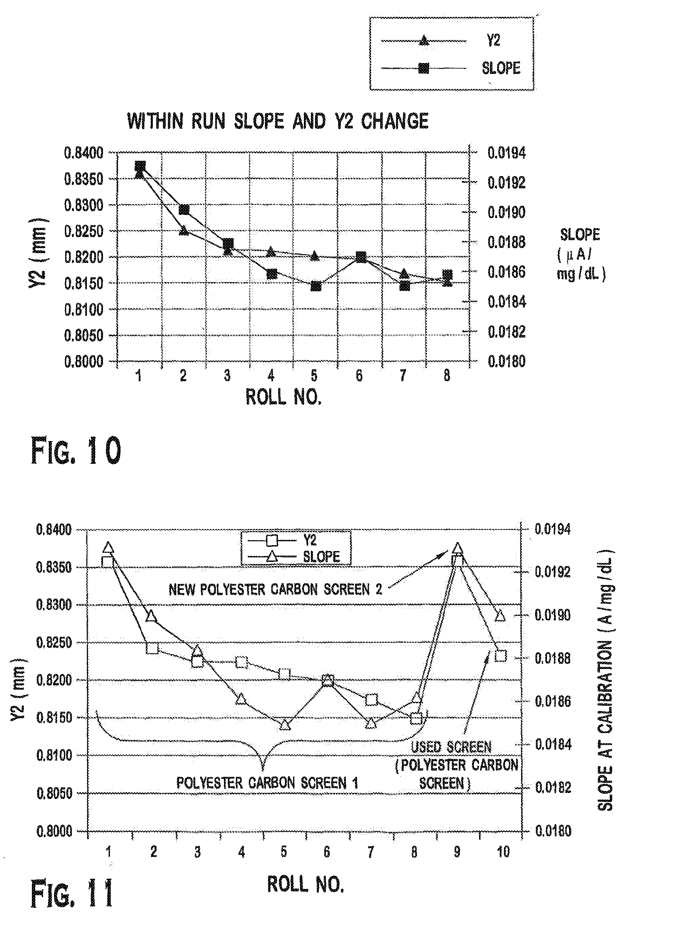

In a further aspect, under certain circumstances, a test strip lot-to-lot variation can be observed when making a large number of test strips such as a run of one or more rolls of substrate. In making these runs, each swipe of the squeegee on the mesh screen produces a group of approximately 500 images to provide one "card" of test strips and each roll of substrate, can be used to print out 1800 to 2000 cards or approximately one million images of the electrodes to form approximately the same amount of test strips. Applicants have observed that, during a manufacturing of a current test strip with the same batch of carbon ink and enzyme ink (i.e., a manufacturing run of 6 - 10 rolls of substrate), a length of each working electrode may change over the number of times the image has been transferred to the substrate. As shown in Figure 10, the average length of the first working electrode or Y2-12 changes over the span of an eight-roll screen-printing runs from 0.835 millimeters to about 0.815 mm. This change in the average length Y2 is also reflected in the change of the slope response and also the intercept of the resulting test strips, leading to a change in the calibration of the resulting test strips. Similar variations in the average length of the second working electrode Y2-14 have also been observed that correspond to the variations in Y2-12.

For brevity, the discussion hereafter will be limited to one working electrode but it should be understood that the discussion is equally applicable to the second working electrode or a plurality of electrodes. The average length Y2 of the first working electrode of a plurality of strip samples can be obtained by flagging five different cards from the same roll of substrate, and measuring the length Y2 for approximately 150 images of each card. That is, for each roll, approximately 750 strips are measured. The average length Y2 for each card is then added to the number of cards sampled and a final average length Y2 is determined for that particular roll of substrate. Subsequent rolls are then measured using the same procedures and the average length Y2 is plotted as shown in Figure 10.

EXAMPLE 5

In order to determine if the change in the length Y2 was due to the use of a standard polyester screen, an experiment was conducted. Figure 10 shows a plot of a 10-roll run where it can be seen that the average length Y2 steadily decreases in magnitude starting from roll 1 to roll 8 with the standard polyester screen. Thereafter, the polyester screen was replaced with a new polyester screen after the 8th roll. It can be seen that the average length Y2 immediately reverts back to its starting value of approximately 0.837 mm. The newly installed screen was then switched back to the previously used polyester screen for the 10th roll. While the average length Y2 did not revert back to its value at the 8th roll, the average length Y2 did show an immediate decline for the 10th roll, which tend to lend credence to applicants' hypothesis that the change in the average length was somehow related to the polyester mesh screen. In determining the average length, a total of 5250 strips were sampled out of a possible 7,000,000 strips for the experiments.

Applicants have discovered that by replacing the polyester screen with a metallic screen that has different parameters, applicants were able to substantially alleviate this reduction in the average length Y2-12 and Y2-14 over a manufacturing run of 7-10 rolls. Table I is a list of the differences between the existing polyester screen and the metallic screen.

**TABLE I**

| PARAMETERS | Existing Screen | New Screen |
|---|---|---|
| **Material** | Polyester | Metallic - e.g., stainless steel |
| **Mesh count per cm** | 95 | 125 |
| **Mesh count per inch** | 240 | 325 |
| **Thread (Wire) diameter (mm)** | 0.048 | 0.030 |
| **Open area (%)** | 22.5 | 39 |
| **Mesh thickness ($\mu$m)** | 81 $\pm$ 4 | 47 $\pm$ 2 |

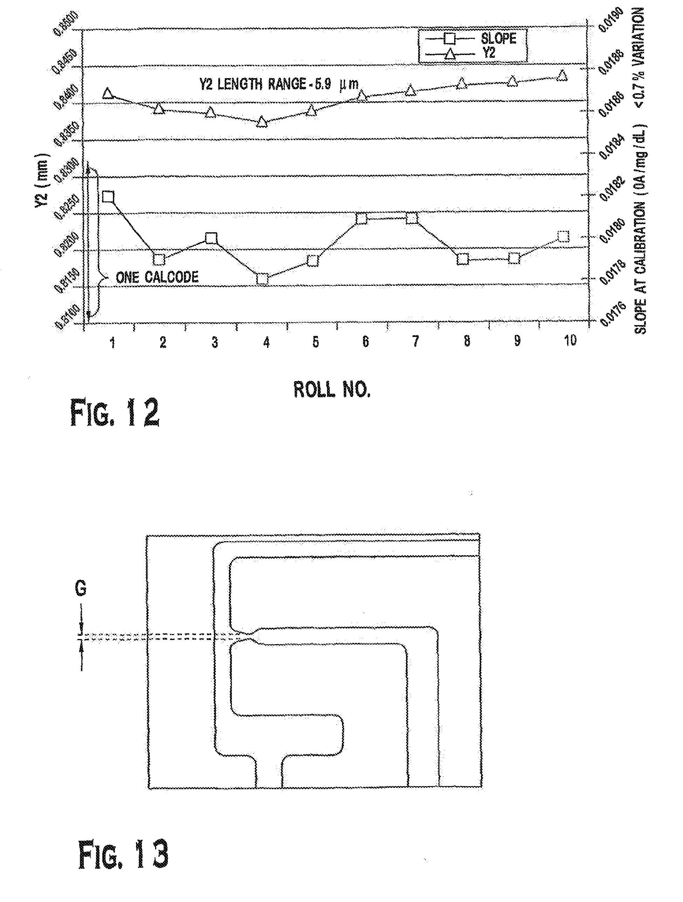

By applicants' particular selection of the physical parameters of the new screen, applicants were able to control this tendency of each of the carbon tracks to decrease in width over a manufacturing run to less than 2.5% and in many cases to 1% or less. For example, as shown in Figure 12, over a 10-roll run, the average length Y2 was confined to a range of 5.9 micrometer from the preferred length of approximately 0.84 mm, as denoted by the line connected by the solid triangle symbol "▲." One surprising benefit of controlling the length decrease of the carbon track was that the slope change as sampled for 7500 completed test strips during the entire 10-roll run (or 10 million strips) was confined to a single calibration code as shown in the line connected by the solid square symbol "■." Thus, this method of controlling batch intercept and/or slope by providing a metallic screen, such as a stainless steel screen, can be used in addition or as an alternative to any other method of adjusting batch slope and/or intercept described and illustrated herein, While the preferred embodiments include a metallic screen such as, for example, a stainless steel screen of stainless steel 304, other types of stainless steel, such as, for example, type 316, 316L, 409, 411 or 416, can be utilized. Alternatively, other materials that do no irreversibly deform under squeegee pressure can also be utilized. Further, while the preferred length of about 0,84 mm is utilized, any length can be used for one or more working electrodes (even different lengths for each) in conjunction with the various aspect of the present invention to mitigate the tendency of the length during a screen printing run to be reduced.

However, the resulting test strips printed with the metallic screens began showing an anomalous print defect, exemplified here in the micro-photograph of Figure 13, as denoted by the arrow towards a narrowed gap G between the two working electrodes. Further, the print defect tended to appear on portions of the substrate near the end of the print stroke by the squeegee on the substrate, This narrowed gap thus reduces the desired gap of approximately 150 microns to a much less desirable value. The print defect was a cause for concern because such narrowed gap may cause bridging of the carbon electrodes leading to a non-functional test strip.

EXAMPLE 6

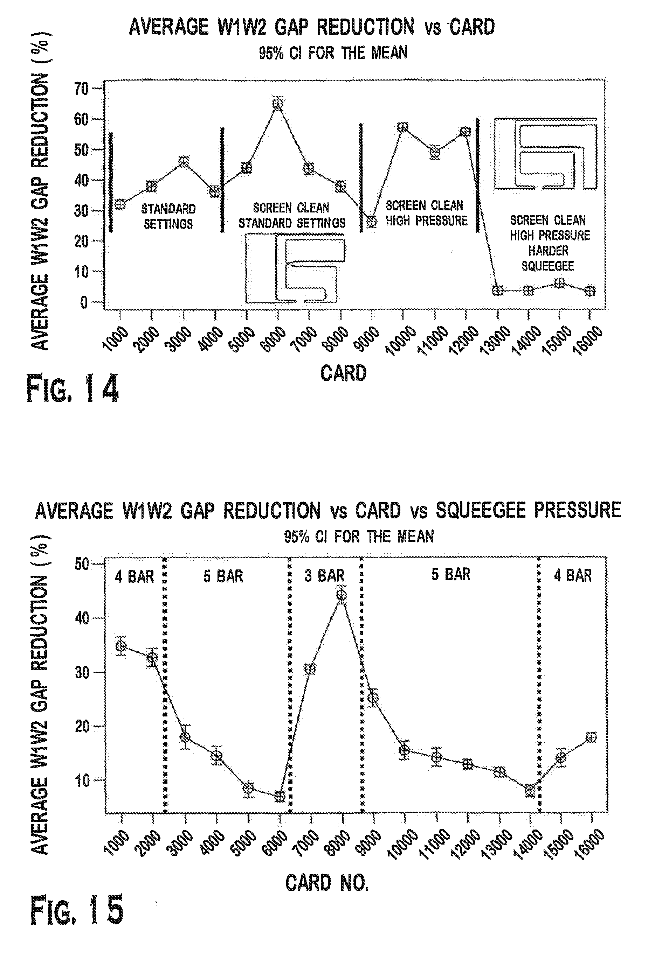

Several experiments were conducted to determine the source of the print defect. As shown in Figure 14, an average gap reduction, denoted as a percentage of gap reduction by subtracting the actual measured gap from the desired gap of about 150 microns and dividing the result by the desired gap (i.e., ((150 - actual gap)/150*100)) is shown over a range of card where each card is generated per one printing stroke of the squeegee on the substrate. From a manufacturing standpoint, gap reduction should not be above 10% to ensure that gap bridging could not occur. As shown in Figure 14, with the standard settings using the existing squeegee and pressure of 4 bars, the minimum gap between the electrodes was substantial, starting at 30% and became closer, as shown by the increase in percent gap reduction from 30% to about 45% over the number of cards printed. Cleaning the metallic screen did not help as the gap reduction was mainly in the range of 20% to 65%. It was noted that these test strips with the print defect were made with the existing squeegee operated at a pressure of approximately 4 bars and usually no higher than this limit. Too high a squeegee pressure, e.g., over 4 bars, was known to result in the following issues: (1) the squeegee can bend and change the squeegee angle; (2) cause the mask or stencil to break down prematurely; (3) stretch the mesh resulting in the image size increasing; (4) wear the squeegee prematurely while also changing the squeegee angle at the tip of the squeegee; (5) increasing flow of ink due to premature wear of the tip of the squeegee. As expected, increasing the pressure on the existing squeegee did not resolve this print defect, as can be seen in the card range of 9000 to 12,000 in Figure 14.

Surprisingly, however, it has been discovered that by replacement of the existing squeegee with different physical parameters and in conjunction with a higher squeegee pressure than the accepted value of 4 bars, applicants were able to significantly and in most cases eliminate this print defect. In particular, the existing squeegee was replaced with a new squeegee with different physical parameters, set forth below in Table II.

**TABLE II**

| Parameter | Test specification | Units | Current Squeegee | New Squeegee |
|---|---|---|---|---|
| Blade material type | N/A | N/A | Polyurethane Plei-Tech22 | Polyurethane Vulkollan 18/40 |
| Shore hardness A/D | DIN 53505 | ShA | 55 | 65 |
| Stress at 100% strain | DIN 53504 | MPA | N/A | 2.5 |
| Stress at 300% strain | DIN 53504 | MPA | N/A | 4 |
| Tensile strength | DIN 53504 | MPA | 18 | 34 |
| Elongation at break Tear | DIN 53504 | % | 800 | 520 |
| propagation resistance | DIN 53515 | KN/m | 11 | 15 |

EXAMPLE 7

Specifically, applicants were able to establish that with the use of the new squeegee in conjunction with higher squeegee pressure for the metallic screen, the magnitude of the average gap can be controlled. For example, as shown in Figure 15, the squeegee pressure was varied through a run of approximately 16,000 swipes of the squeegees. When the pressure applied to the squeegee was held at 4 bars, the gap reduction was about 30% (card 1000 to 2000) yet when the pressure was increased to 5 bars (card 3000 to 6000) a definitive trend can be seen where the gap reduction was minimized from about 20% to less than 10%. The squeegee pressure was reduced to less than 3 bars to determine the effect on the gap reduction, which showed an immediate jump to about 30% and higher, which was undesirable. Once the higher squeegee pressure of 5 bars was reapplied, a definitive decrease in the gap reduction can be seen from card 9000 to 140000. That is, at the higher pressure, the tendency of the gap to be reduced (i.e., gap reduction) is smaller as compared to when a lower squeegee pressure was used. A preferred pressure range is therefore greater than about 4 bars up to the equipment limit. Another preferred range is above about 4 bars to about 7 bars. Another preferred range is above about 4 bars to below about 6.5 bars.

Subsequent experiments confirmed this surprising phenomenon identified by applicants.

EXAMPLE 8

In the experiments, a total of 16,000 cards were made with 8 different batches or split of the cards in the amount of 2000 cards per split. Two new squeegees were used: one at 65 Shore Hardness A and another at 75 Shore Hardness A. Results of the experiments were correlated to the average gap, pressure, and hardness, shown here in Figure 16. The data points 16A indicated that for the squeegee of 65 Shore A with a pressure of 5 bars, the gap was substantially reduced from the intended design gap of about 150 micrometers with the average gap distributed widely from about 140 to about 110, which is undesirable. On the other hand, when the pressure for the squeegee was increased to 6 bars, the improvement was dramatic with the average gaps of the printed cards being clustered near the design gap at around 145 micrometers. Increasing the hardness of the squeegee at 5 bars shows a slight improvement with clustering of data points 16C near the design gap of 150 micrometers. Further increase in the pressure to 6 bars showed yet again more improvements with the clustering of data points 16D near the design gap, of again about 150 micrometers.

EXAMPLE 9

To ensure that the improved gap minimization via increased squeegee pressure was not at the expense of the thickness of the carbon deposited on the substrate, the average thickness of the deposited ink was measured for each of the 8 splits of the 16,000 card and plotted and compared with data for existing polyester screen at the standard pressure of about 4 bars. As shown in Figure 17, the data for the metallic screen, in this case, a stainless steel screen, indicated that deposited ink thickness was well within the intended range of 8-16 microns.

In an embodiment, the squeegee blade 606 can be a made of a material that does not appreciably absorb solvents contained within the conductive ink. If more than appreciable amount of solvents could absorb into the squeegee, it is believed that there could be a decrease in the hardness of the squeegee during the print process. It is believed that a time dependent change in squeegee hardness could cause an undesirable variation in print quality. Experiments could be performed to determine whether the squeegee hardness decreased after being exposed to conductive ink for about 1 to 21 hours, In general, the squeegee hardness is believed to be more stable to the exposure of conductive ink when using a 65 Shore A hardness squeegee (PolyurethaneVulkollan 18/40) instead of a 55 Shore A hardness squeegee (PolyurethanePlei-Tech 22).

EXAMPLE 10

Experiments have been performed to measure a weight gain in the squeegee caused by the absorption of solvents in the conductive ink. The 55 Shore A hardness squeegee (PolyurethanePlei-Tech 22) shows a weight gain of about 3% over a one hour period and a weight gain of about 13% over a 21 hour period. The 65 Shore A hardness squeegee PolyurethaneVulkollan 18/40) shows a weight gain of about 2% over a one hour period and a weight gain of about 8% over a 21 hour period. Thus, the 65 Shore A hardness squeegee (PolyurethaneVulkollan 18/40) absorbs solvents from the conductive ink at a lower rate and in a lower appreciable amount than the 55 Shore A hardness squeegee (PolyurethanePlei-Tech 22). In an exemplary embodiment, experiments can be conducted to identify a material for use in a squeegee having a weight gain of less than about 10% over 24 hours.

Visual inspection of the images indicated satisfactory print definitions with only two instances of defects. Print quality or definition was considered by applicants to be very good for the 65 Shore A scale squeegee in Figures 18A-18D while the print definition was considered to be excellent with the 75 Shore A scale squeegee at either 5 or 6 bars in Figures 18E-18H. Whilst it is difficult to see in reproductions of Figures 18A to 18H, the edge of definition of the carbon areas is clearly better in Figures 18E to 18H than in 18A to 18D when seen in the original with the naked eye. Edge definition can be ascertained by the variation in average gap distance, as indicated in Figure 16.

EXAMPLE 11

Additional experiments were conducted to further confirm the viability of the newly discovered print technique and components. In these experiments, the substrates were printed with carbon ink using the new techniques and manufactured to completion instead of only to the carbon ink stage. Specifically, one run of 7 rolls were utilized with the last card rolls, 1, 3 and 7 printed in carbon only, resulting in 15,700 completed strips for calibration.

As shown in Figure 19, the data collected from the carbon only print from rolls 1, 3, and 7 show that the average gap was between 140 and 145 micrometers or a gap reduction of ranging from about 7% to about 3%. As seen in Figure 20, for the lengths Y2-12, Y2-14 and insulation aperture width X3, the range of variation was approximately 6 micrometers for the 7-roll run.

Table III indicates that the calibration code of the test strips produced in this series of experiments all passed with 6 out of 7 rolls being within a single calibration code, code 38. Each calibration code corresponds to a particular slope and intercept.

**Table III**

| Results Of Calibration Testing For The Batches Printed In The Verification 7 Roll Run | | | |
|---|---|---|---|
| **Lot** | **Within lot precision** | **Assigned Calcode** | **Batch status** |
| ----058 | 1.66 | 38 | PASS |
| ----059 | 1.53 | 38 | PASS |
| ----060 | 2.13 | 33 | PASS |
| ----061 | 1.69 | 38 | PASS |
| ----062 | 1.86 | 38 | PASS |
| ----064 | 1.78 | 38 | PASS |
| ----065 | 1.87 | 38 | PASS |

Table IV indicates that the percentage of strips within range was very high with 6 lots being within 100% and one at 99%.

**TABLE IV**

| Results Of Range Setting For The Batches Printed In The Verification 7 Roll Run. | | | | |
|---|---|---|---|---|
| Lot | Calibration Code | Control solution level | Percentage Within range | Final result |
| ---- 058 | 38 | Mid | 100 | Pass |
| ----059 | 38 | Mid | 100 | Pass |
| ----060 | 33 | Mid | 99 | Pass |
| ----061 | 38 | Mid | 100 | Pass |
| ----062 | 38 | Mid | 100 | Pass |
| ----064 | 38 | Mid | 100 | Pass |
| ----065 | 38 | Mid | 100 | pass |

EXAMPLE 12

Another experiment was conducted to determine the effect of snap-off distance and roller position on carbon ink deposition such as during a manual run set up and squeegee pressure variations. The snap-off distance is defined as the distance between the surface of the substrate and the surface of the mesh screen. If the snap is set too high for a given squeegee pressure the squeegee will struggle to deflect the screen and the outer extremes of the artwork will be missing (often on every 2nd print). If the snap is set too low there may be smudging of the previous print (this is also dependent upon ink loading and squeegee print stroke length). As the snap height increases the size of the screen deflection also increases and, as a direct result, the print marginally increases both across and down the screen. Table V indicated that while calibration codes from the various lots were no longer concentrated in a single code, the calibration was spread out within one of two calibration codes depending on the squeegee position, snap off and pressure settings.
| Lot | Squeegee position (mm) | Snap-off (mm) | Squeegee pressure (bar) | Split size | Within lot precision | Assigned Calcode | Batch status | Percentage within range |
|---|---|---|---|---|---|---|---|---|
| ----718 | 1.2 | 0.65 | 5.0 | 500 cards | 1.75 | 33 | PASS | 100 |
| ----721 | 1.2 | 0.65 | 6.0 | 500 cards | 1.83 | 33 | PASS | 100 |
| ----722 | 1.6 | 0.65 | 5.0 | 500 cards | 2.24 | 33 | PASS | 99 |
| ----723 | 1.6 | 0.65 | 6.0 | 500 cards | 1.93 | 38 | PASS | 100 |
| ----724 | 1.4 | 0.70 | 5.5 | 500 cards | 1.91 | 33 | PASS | 100 |
| ----725 | 1.2 | 0.75 | 5.0 | 500 cards | 1.84 | 33 | PASS | 100 |
| ----726 | 1.2 | 0.75 | 6.0 | 500 cards | 1.98 | 33 | PASS | 100 |
| ----727 | 1.6 | 0.75 | 5.0 | 500 | 2.15 | 38 | PASS | 99 |
| ----341 | 1.6 | 0.75 | 6.0 | 500 cards | 1.86 | 38 | PASS | 100 |

Figures 19 and 20, along with Tables III, IV, and V confirmed the viability of the new techniques and components in controlling the variation of the carbon electrode tracks, which techniques and components are believed to lead to stricter control of the calibration code for the test strips.
Figure 28 illustrates a test meter 2800, for testing glucose levels in the blood of an individual with a test strip produced by the methods and techniques illustrated and described herein. Test meter 2800 may include user interface inputs (2806, 2808, 2810), which can be in the form of buttons, for entry of data, navigation of menus, and execution of commands. Data can include values representative of analyte concentration, and/or information that are related to the everyday lifestyle of an individual. Information, which is related to the everyday lifestyle, can include food intake, medication use, the occurrence of health check-ups, general health condition and exercise levels of an individual. Test meter 2800 can also include a display 2804 that can be used to report measured glucose levels, and to facilitate entry of lifestyle related information.

Test meter 2800 may include a first user interface input 2806, a second user interface input 2808, and a third user interface input 2810. User interface inputs 2806, 2808, and 2810 facilitate entry and analysis of data stored in the testing device, enabling a user to navigate through the user interface displayed on display 2804. User interface inputs 2806, 2808, and-2810 include a first marking 2807, a second marking 2809, and a third marking 2811, which help in correlating user interface inputs to characters on display 2804.

Test meter 2800 can be turned on by inserting a test strip 100 into a strip port connector 2812, by pressing and briefly holding first user interface input 2806, or by the detection of data traffic across a data port 2813. Test meter 2800 can be switched off by removing test strip 100, pressing and briefly holding first user interface input 2806, navigating to and selecting a meter off option from a main menu screen, or by not pressing any buttons for a predetermined time. Display 104 can optionally include a backlight.

In an embodiment, test meter 2800 can be configured to not receive a calibration input for example, from any external source, when switching from a first test strip batch to a second test strip batch. Thus, in one exemplary embodiment, the meter is configured to not receive a calibration input from external sources, such as a user interface (such as inputs 2806,2808, 2810), an inserted test strip, a separate code key or a code strip, data port 2813. Such a calibration input is not necessary when all of the test strip batches have a substantially uniform calibration characteristic. The calibration input can be a set of values ascribed to a particular test strip batch. For example, the calibration input can include a batch slope and a batch intercept value for a particular test strip batch. The calibration input, such as batch slope and intercept values, may be preset within the meter as will be described below,

Referring to Fig. 29, an exemplary internal layout of test meter 2800 is shown. Test meter 2800 may include a processor 2900, which in some embodiments described and illustrated herein is a 32-bit RISC microcontroller. In the preferred embodiments described and illustrated herein, processor 2900 is preferably selected from the MSP 430 family of ultra-low power microcontrollers manufactured by Texas Instruments of Dallas, Texas. The processor can be bi-directionally connected via I/O ports 2914 to a memory 2902, which in some embodiments described and illustrated herein is an EEPROM. Also connected to processor 2900 via I/O ports 214 are the data port 2813, the user interface inputs 2806, 2808, and 2810, and a display driver 2936. Data port 2813 can be connected to processor 2900, thereby enabling transfer of data between memory 2902 and an external device, such as a personal computer. User interface inputs 2806, 2808, and 2810 are directly connected to processor 2900. Processor 2900 controls display 2804 via display driver 2936. Memory 2902 may be pre-loaded with calibration information, such as batch slope and batch intercept values, during production of test meter 2800, This pre-loaded calibration information can be accessed and used by processor 2900 upon receiving a suitable signal (such as current) from the strip via strip port connector 2812 so as to calculate a corresponding analyte level (such as blood glucose concentration) using the signal and the calibration information without receiving calibration input from any external source.

In embodiments described and illustrated herein, test meter 2800 may include an Application Specific Integrated Circuit (ASIC) 2904, so as to provide electronic circuitry used in measurements of glucose level in blood that has been applied to a test strip 100 inserted into strip port connector 2812. Analog voltages can pass to and from ASIC 2904 by way of an analog interface 2905. Analog signals from analog interface 2905 can be converted to digital signals by an A/D converter 2916. Processor 2900 further includes a core 2908, a ROM 2910 (containing computer code), a RAM 2912, and a clock 2918. In one embodiment, the processor 2900 is configured (or programmed) to disable all of the user interface inputs except for a single input upon a display of an analyte value by the display unit such as, for example, during a time period after an analyte measurement. In an alternative embodiment, the processor 2900 is configured (or programmed) to ignore any input from all of the user interface inputs except for a single input upon a display of an analyte value by the display unit.

The following is a non exhaustive list of embodiments which are or might be claimed.

1. A method of manufacturing a test strip, the method comprising:

adjusting an amount of reduced mediator in a reagent ink, the reagent ink being disposed on a working electrode, to output a batch intercept that falls within a predetermined target batch intercept range; and
adjusting a working electrode area to output a batch slope that falls within a predetermined target batch slope range.

2. A method of manufacturing a test strip, the method comprising:

adding a predetermined amount of reduced mediator to a reagent ink, the reagent ink being disposed on a working electrode, to output a batch intercept that falls within a predetermined target batch intercept range; and adjusting a working electrode area to output a batch slope that falls within a predetermined target batch slope range.

3. A method of manufacturing a test strip, the method comprising:

adding a predetermined amount of reduced mediator to a reagent ink, the reagent ink being disposed on a working electrode, to output a batch intercept value that is substantially equal to a predetermined target batch intercept value; and adjusting a working electrode area to output a batch slope value that is substantially equal to a predetermined target batch slope value,

4. The method of embodiment 1, in which the working electrode area is adjusted by modifying a width of the working electrode.

5. The method of embodiment 1, in which the reduced mediator in the reagent ink is not greater than 0.2% by weight of the reagent ink.

6. The method of embodiment 1, in which the reagent ink comprises the reduced mediator and an oxidized mediator where the reduced mediator is not greater than about 0.6% by weight of a sum of the reduced mediator and the oxidized mediator.

7. The method of embodiment 1, in which the width of the working electrode is from about 0.6 millimeters to about 0.8 millimeters.

8. The method of embodiment 1, in which the area of working electrode is from about 0.48 mm$^2$ to about 0.64 mm$^2$.

9. A test strip comprising:

a first and second working electrode both having a width of about 0,55 millimeters to about 0.85 millimeters; and a reagent layer disposed proximate the working electrode, the reagent layer comprising an oxidized mediator, a reduced mediator, and an enzyme, in which the reduced mediator is not greater than about 0.6% by weight of a sum of the reduced mediator and the oxidized mediator, so that the test strip has a predetermined target batch slope and predetermined target batch intercept.

10. A test strip comprising:

a first and second working electrode both having an area from about 0.48 mm$^2$ to about 0.64 mm$^2$; and a reagent layer disposed proximate the working electrode, the reagent layer comprising an oxidized mediator, a reduced mediator, and an enzyme, in which the reduced mediator is not greater than 0.8% by weight of a sum of the reduced mediator and the oxidized mediator, so that the test strip has a predetermined target batch slope and predetermined target batch intercept.

11. A method of manufacturing a test strip batch, each test strip comprising a plurality of layers the method comprising:

computing a working electrode area based on a target slope and a previous batch slope, the previous batch slope obtained from a previously made test strip batch; adjusting the working electrode area to be the computed working electrode area by in process adjustment of one layer of the plurality of layers.

12. A method of manufacturing a test strip batch, the method comprising:

calculating an added amount of reduced mediator based on a target intercept, a percent reduced mediator impurity and a background intercept; and adding the amount of reduced mediator to a reagent ink.

13. A method of manufacturing a test strip batch, the method comprising:

computing a working electrode area based on a target slope and a previous batch slope, the previous batch slope obtained from a previously made test strip batch;
adjusting the working electrode area to be the calculated working electrode area;
calculating an added amount of reduced mediator based on a target intercept, a percent reduced mediator impurity, and a background intercept; and
adding the amount of reduced mediator to reagent ink.

14. The method of embodiment 12 or 13, in which the background intercept comprises an average based on a plurality of batch intercepts from previously made test strip batches.

15. The method of embodiment 11 or 13, in which the working electrode area is adjusted by printing an insulation layer on a working electrode to form the adjusted working electrode area.

16. The method of embodiment 13, in which the calculating comprises determining the added amount of reduced mediator based on the target intercept, the percent reduced mediator impurity, the background intercept, and the calculated working electrode area.

17. The method of embodiment 13 further comprising calibrating the test strip batch where a resulting batch slope is substantially equal to the target slope and a resulting batch intercept is substantially equal to the target intercept.

18. The method of embodiment 13, in which the added amount of reduced mediator is determined by calculating a difference between the target intercept and the background intercept, dividing by a constant, and then subtracting the amount of reduced mediator impurity.

19. The method of embodiment 13, in which the amount of reduced mediator impurity comprises an amount generally equal to an amount of oxidized mediator in the reagent ink multiplied by the percent reduced mediator impurity.

20. The method of embodiment 13, in which the added amount of reduced mediator $F_{add}$ is generally defined by a relationship of, where $B_{target}$ is the target intercept, $B_0$ is the background intercept, $K_{int}$ is a constant, and $F_{imp}$ is an amount of reduced mediator associated with the oxidized mediator as an impurity.

21. The method of any one of embodiment 18 or embodiment 20, in which the added amount of reduced mediator also accounts for an offset due to the calculated working electrode area.

22. A method of manufacturing a plurality of test strips, each test strip comprising a a plurality of layers, the method comprising:

manufacturing a first plurality of test strips, each test strip comprising a working electrode having a first area;
calibrating the first plurality of test strips to determine a first slope and a first intercept;
calculating a second area based on the first slope and a predetermined target slope;
manufacturing a second plurality of test strips, each test strip comprising a working electrode having the calculated second area by in process adjustment of one layer of the plurality of layers.

23. The method of embodiment 22, in which each test strip, of the first plurality of test strips, further comprises:

a first reagent layer disposed proximate the working electrode, the first reagent layer comprising a predetermined amount of oxidized mediator and a predetermined amount of enzyme, the method further comprising:

calculating an amount of reduced mediator based on the first intercept and a predetermined target intercept.
preparing a second reagent layer that comprises the calculated amount of reduced mediator, the predetermined amount of oxidized mediator, and the predetermined amount of enzyme;
in which each test strip, of the second plurality of test strips, further comprises the second reagent layer disposed proximate the working electrode having the calculated second area.

24. The method of embodiment 23, in which the step of calculating the amount of reduced mediator is also based on the calculated second area.

25. The method of any of embodiments 1, 2, 3,12, 13 and 23, in which the target intercept is greater than the first intercept.

26. The method of embodiment 23 further comprising:

calibrating the second plurality of test strips to determine a second slope and a second intercept, in which the second slope is substantially equal to the predetermined target slope and the second intercept is substantially equal to the predetermined target intercept.

27. The method of any one of embodiments 22 and 23, in which the second area is calculated based on the difference between the first slope and the predetermined target slope.

28. The method of any one of embodiments 22 and 23, in which the second area is calculated based on the difference between the first slope and the predetermined target slope times a value correlating to a change in area per unit slope.

29. The method of any one of embodiments 22 and 23 further comprising:

applying an insulation layer having an aperture, the aperture having an approximate shape selected from a group consisting of a rectangular and a square, on the working electrode of the second plurality of test strips to form the calculated second area.

30. The method of embodiment 29 further comprising:

adjusting a width of the shape of the aperture in increments of about twenty-five microns;
determining two increments that provide the two closest area values to the calculated second area; and
selecting the increment that gives a larger area as the calculated second area.

31. The method of embodiment 29 further comprising:

adjusting a width of the rectangular shape in increments of about twenty-five microns;
determining two increments that provide the two closest area values to the calculated second area; and
selecting the increment that gives a smaller area as the calculated second area.

32. A method of manufacturing a plurality of test strip batches, each test strip batch having a target slope and a target intercept, the method comprising:

preparing a first plurality of test strip batches over a period of time;
calibrating the first plurality of test strip batches to determine a batch slope and a batch intercept for each test strip batch of the first plurality of test strip batches;
calculating a first working electrode area based on the target slope and a previous batch slope, the previous batch slope obtained from a test strip batch of the first plurality of test strip batches;
calculating a first added amount of reduced mediator based on the target intercept, a percent reduced mediator impurity, and a background intercept;
preparing a first reagent ink that includes the first added amount of reduced mediator;
preparing a second plurality of test strips with the first calculated working electrode area and the first reagent ink;
calibrating the second plurality of test strips to determine a second batch slope and a second batch intercept;
if the second batch slope and the second batch intercept are substantially equal to the target slope and the target intercept, then preparing a third plurality of test strip batches using the first calculated working electrode area and the first reagent ink.

33. The method of embodiment 32, further comprises at least one of the following steps:

if the second batch slope is not substantially equal to the target slope, then calculating a second working electrode area based on a difference between the second batch slope and the target slope, and then preparing a fourth plurality of test strips to include the second calculated working electrode area; and
if the batch intercept is not substantially equal to the target intercept, then calculating a second added amount of reduced mediator.

34. The method of embodiment 32, further comprising:

if the second batch slope is not substantially equal to the target slope, then calculating a second working electrode area based on a difference between the second batch slope and the target slope, and then preparing a fourth plurality of test strips to include the second calculated working electrode area; and
if the second batch intercept is not substantially equal to the target intercept, then calculating a second added amount of reduced mediator based on a difference between the second batch intercept and the target intercept, and then preparing the fourth plurality of test strips to include a second reagent ink having the second added amount of reduced mediator.

35. The method of embodiment 32, further comprising:

if the second batch slope is not substantially equal to the target slope, then calculating a second working electrode area based on a difference between the second batch slope and the target slope, and then preparing a fourth plurality of test strips to include the second calculated working electrode area; and
if the second batch intercept is not substantially equal to the target intercept, then calculating a second added amount of reduced mediator based on a target intercept, a percent reduced mediator impurity and a background intercept, and then preparing the fourth plurality of test strips to include a second reagent ink having the second added amount of reduced mediator.

36. A method according to any one of embodiment 35 in which at least one of the first and second added amount of reduced mediator $F_{add}$ is generally defined by a relationship of $F_{add} = \dfrac{B_{t\,arg\,et} - B_0}{K_{int}} - F_{imp}$, where $B_{target}$ is the target intercept, $B_0$ is the background intercept, $K_{int}$ is a constant, and $P_{imp}$ is an amount of reduced mediator associated with the oxidized mediator as an impurity.

37. A method according to any one of embodiments 32, 34, 35 and 36 in which the step of calculating a second added amount of reduced mediator comprises adjusting the background intercept based on the second calculated working area.

38. A method according to embodiment 18 or 20 in which the background intercept and the coefficient constant are adjusted to take account of the second working electrode area.

39. A method according to any one of embodiments 32 to 36, in which the step of calculating a first added amount of reduced mediator comprises adjusting the background intercept to take account of the calculated first working electrode area.

40. A method according to embodiment 39, in which the step of calculating a first added amount of reduced mediator comprises adjusting the background intercept and a coefficient constant to take account of the first working electrode area.

41. A method of manufacturing a test strip batch having a target slope and target intercept, the method comprising:

(i) dispensing a conductive ink on a metallic screen;
(ii) locating a substrate proximate to the metallic screen;
(iii) transferring the conductive ink onto the substrate with a squeegee to form a conductive layer;
(iv) computing a working electrode area based on the target slope and a previous batch slope, the previous batch slope obtained from a previously made test strip batch, so that the resulting batch slope is substantially equal to the target slope;
(v) transferring an insulation ink onto the conductive layer to form a working electrode having the calculated working electrode area;
(vi) calculating an added amount of reduced mediator based on the target intercept, a percent reduced mediator impurity, and a background intercept, so that the resulting batch intercept is substantially equal to the target intercept;
(vii) preparing reagent ink that includes the calculated added amount of reduced mediator;
(viii) if the reagent ink does not have a density within a target range, adjusting the density of the reagent by mixing the reagent ink for a period of time or adding a rheological control agent; and
(ix) transferring the reagent ink onto the working electrode.

42. A method of manufacturing an enzyme ink, the method comprising:

calculating an amount reduced mediator based on a target intercept, a percent reduced mediator impurity, and a background intercept; and
adding the amount of reduced mediator to the enzyme ink.

43. A plurality of test strip batches, each test strip comprising:

a substrate;
a conductive layer disposed on the substrate; and
a reagent layer disposed on the conductive layer, the reagent layer including an added amount of reduced mediator $F_{add}$ so that a batch intercept for each test strip batch is substantially equal to a target intercept $B_{target}$,

the added amount of reduced mediator $F_{add}$ is generally defined by a relationship of $F_{add} = \dfrac{B_{target} - B_0}{K_{int}} - F_{imp}$,

where $B_0$ is a background intercept, $K_{int}$ is a constant, and $P_{imp}$ is an amount of reduced mediator associated with the oxidized mediator as an impurity.

44. A plurality of test strip batches in which each test strip comprises:

a substrate;
a conductive layer disposed on the substrate; and
a reagent layer disposed on the conductive layer, the reagent layer including an added amount of reduced mediator so that a batch intercept for each test strip batch of the plurality of test strip batches have a variation of less than about 15%.

45. The plurality of test strip batches of embodiment 44, in which the added amount of reduced mediator is based on a target intercept, a percent reduced mediator impurity, and a background intercept.

46. The plurality of test strip batches of embodiment 45, in which the background intercept is an average based on a plurality of batch intercepts from previously made test strip batches.

47. The plurality of test strip batches of embodiment 45, in which the percent reduced mediator impurity is a proportional amount of reduced mediator associated with an oxidized mediator as an impurity where the reagent layer includes an amount of the oxidized mediator.

48. The plurality of test strip batches of embodiment 45, in which the added amount of reduced mediator is determined by calculating a difference between the target intercept and the background intercept, dividing by a constant, and then subtracting an amount of reduced mediator impurity.

49. The plurality of test strip batches of embodiment 45, in which the added amount of reduced mediator $F_{add}$ is generally defined by a relationship of $F_{add} = \dfrac{B_{target} - B_0}{K_{int}} - F_{imp}$, where $B_{target}$ is the target intercept, $B_0$ is the background intercept, $K_{int}$ is a constant, and $F_{imp}$ is an amount of reduced mediator associated with the oxidized mediator as an impurity.

50. The plurality of test strip batches of embodiment 44 further comprising a working electrode, the working electrode having a calculated area based on a target slope and a previous batch slope, the previous batch slope obtained from a previously made test strip batch.

51. The plurality of test strip batches of embodiment 50, in which the added amount of reduced mediator is based on a target intercept, a percent reduced mediator impurity, a background intercept, and the calculated area.

52. The plurality of test strip batches of embodiment 51 in which the added amount of reduced mediator $F_{add}$ is generally defined by a relationship of $F_{add} = \dfrac{B_{target} - B_0}{K_{int}} - F_{imp}$, where $B_{target}$ is the target intercept, $B_0$ is the background intercept, $K_{int}$ is a constant, and $F_{imp}$ is an amount of reduced mediator associated with the oxidized mediator as an impurity and the background intercept and constant $K_{int}$ are adjusted to take account of the calculated area.

53. The plurality of test strip batches of embodiment 44, in which the plurality of test strip batches comprises from about 10 batches to about 100 batches.

54. The plurality of test strip batches of embodiment 53, in which the variation of 15% or less in batch intercepts is determined by calibrating about 600 or more test strips.

55. A plurality of test strip batches in which each test strip comprises:

a substrate; and
carbon ink disposed on the substrate by a squeegee through a metallic screen to define at least one carbon electrode track having a length as measured along a virtual line perpendicular to an axis between two side edges of the at least one track, in which any variations in the length compared to another length of another printed carbon track of at least one other test strip in the plurality of test strip batches is less than about 3.5%.

56. A plurality of test strip batches in which each test strip comprises:

a substrate; and
carbon ink disposed on the substrate by a squeegee through a metallic screen to define at least one carbon electrode track having a length as measured along a virtual line perpendicular to an axis between two side edges of the at least one track, in which any variations in the length compared to another length of another printed carbon track of at least one other test strip in the plurality of test strip batches is less than about 2.5%.

57. A method of manufacturing a reagent formulation, the method comprising:

(i) mixing a solution that includes a rheological control agent for a predetermined amount of time;
(ii) measuring a density of the solution;
(iii) if the density is not greater than a threshold, continuing to mix the reagent formulation for a predetermined amount of time such that the density is about equal to or greater than the threshold; and
(iv) upon the density being about equal to or greater than the threshold, blending a mediator and an enzyme with the solution to form the reagent formulation.

58. The method of embodiment 57, in which the rheological control agent comprises hydroxyl ethyl cellulose.

59. The method of embodiment 57, in which the rheological control agent comprises silica having hydrophilic and hydrophobic groups.

60. The method of embodiment 57, in which the rheological control agent comprises hydroxyl ethyl cellulose and a silica having hydrophilic and hydrophobic groups.

61. The method of embodiment 57, in which the mixing step includes subjecting the solution to a reduced pressure.

62. The method of embodiment 57, in which the predetermined amount of time ranges from about 4 minutes to about 30 minutes.

63. The method of embodiment 61, in which the predetermined amount of time ranges from about 16 minutes to about 30 minutes.

64. The method of embodiment 57, in which the step of mixing occurs first and the step of blending occurs substantially immediately before use printing the reagent formulation.

65. The method of embodiment 57, in which the threshold is about 0.87 grams/cm$^3$.

66. The method of embodiment 57, in which the step of mixing is performed with a propeller at about 3000 rotations per minutes.

67. A method of manufacturing a plurality of test strips, the method comprising:

adjusting a density of a colloidal suspension to a targeted density;
adding a mediator and an enzyme to the colloidal suspension to form a reagent formulation;
disposing the reagent formulation on a working electrode for each test strip of the plurality of test strips;
calibrating the plurality of test strips to determine a batch slope; and
outputting a batch slope that is substantially equal to a targeted batch slope.

68. The method of embodiment 67, in which the targeted density is calculated based on the targeted batch slope.

69. The method of embodiment 67, in which the targeted density is calculated by subtracting a second constant from the targeted batch slope and then dividing by a third constant.

70. The method of embodiment 67, in which the targeted density $\rho$ is calculated by an equation defined by

$$\rho = \frac{M_{cal} - k_2}{k_3}$$

, where p is the targeted density, $M_{cal}$ is the targeted batch slope, $k_2$ is a second constant, and $k_3$ is a third constant.

71. The method of embodiment 70, in which the targeted density $\rho$ is any value selected from one of the following ranges: from about 0.7 grams per cm$^3$ to about 1.1 grams per cm$^3$ and from about 0.985 grams per cm$^3$ to about 1.015 grams per cm$^3$.

72. The method of any one of embodiments 67 to 71, in which the targeted density is any value within $\pm$ 0.0 15 grams per cm$^3$ of a targeted density.

73. The method of embodiment 70, in which the targeted batch slope $M_{cal}$ is any value from about 16 nanoamperes per milligram per deciliters to about 30 nanoamperes per milligram per deciliters.

74. The method of embodiment 70, in which the second constant $k_2$ is any value from about 7 nanoamperes per milligram per deciliters to about 10 nanoamperes per milligram per deciliters.

75. The method of embodiment 70, in which the third constant $k_3$ is any value from about 10 nanoamperes/milligram/deciliters/grams/cm$^3$ to about 12 nanoamperes per milligram per deciliters/grams/cm$^3$.

76. The method of embodiment 67, in which the adjusting comprises by changing a duration of a mixing time.

77. The method of embodiment 67, in which the adjusting comprises adding an additional amount of rheological control agent.

78. The method of embodiment 76, in which the duration of the mixing time is any value from about 10 minutes to about 30 minutes.

79. A method of manufacturing a reagent formulation, the method comprising:

(i) mixing a solution that includes a rheological control agent, a mediator and an enzyme for a predetermined amount of time;
(ii) measuring a density of the solution; and
(iii) if the density is not greater than a threshold, continuing to mix the solution for a predetermined amount of time such that the density is about equal to or greater than the threshold.

80. The method of embodiment 79, in which the targeted density is any value from about 1 gram per cm$^3$ to about

1.25 grams per cm$^3$.

81. A reagent formulation for coating on a working electrode of a test strip, the reagent formulation comprising:

(i) a rheological control agent;
(ii) a mediator; and
(iii) an enzyme in a mixture with the agent and mediator to generally form a reagent having a density of any value from about 1 grams per cm$^3$ to about 1.25 grams per cm$^3$.

82. A method of manufacturing a reagent formulation, the method comprising:

(i) mixing a solution that includes a rheological control agent for a predetermined amount of time;
(ii) measuring a density of the solution;
(iii) if the density is not within a targeted range, continuing to mix the solution for a predetermined amount of time such that the density is within the targeted range; and
(iv) upon the density being within the targeted range, blending a mediator and an enzyme with the solution to form the reagent formulation.

83. A method of manufacturing a plurality of test strips, the method comprising:

manufacturing a first plurality of test strips, each test strip comprising a working electrode coated with a reagent formulation having a first density;
calibrating the first plurality of test strips to determine a first slope;
calculating a second density based on the first slope and a targeted slope;
manufacturing a second plurality of test strips, each test strip comprising a working electrode coated with a reagent formulation having the second density.

84. The method of embodiment 83, further comprising:

calibrating the second plurality of test strips to determine a second slope, in which the second slope is substantially equal to the predetermined target slope.

85. A method of screen-printing a conductive ink onto a substrate to form a test strip, the method comprising:

(i) dispensing the conductive ink on a metallic screen;
(ii) locating the substrate proximate to the metallic screen; and
(iii) transferring the conductive ink onto the substrate with a squeegee having a hardness greater than 55 Shores Hardness A scale.

86. The method of embodiment 85, in which the hardness comprises hardness greater than or equal to about 65 ±5 Shores Hardness A scale.

87. The method of embodiment 85, in which the hardness comprises hardness in the range from about 60 to about 75 Shores Hardness A scale.

88. The method of embodiment 85, in which the transferring of the conductive ink comprises applying the squeegee to the metallic screen with a pressure, the pressure being greater than at least one of about 5 bars and about 4 bars.

89. The method of embodiment 85 or embodiment 86, in which the transferring of the conductive ink comprises applying the squeegee to the metallic screen with a pressure, the pressure being greater than 270N of force per meter of squeegee length.

90. The method of embodiment 85, in which the squeegee comprises a material with a low absorption of solvents contained in the conductive ink.

91. The method of embodiment 85, in which the squeegee comprises a material that absorbs solvents contained in the conductive ink at a rate less than about 2% in one hour.

92. The method of embodiment 85, in which the squeegee comprises a material that absorbs solvents contained within the conductive ink at a rate less than about 8% in about twenty-one hours.

93. The method of embodiment 85, in which the squeegee comprises a material that essentially does not absorb any carbon material.

94. The method of embodiment 85, in which the squeegee material comprises polyurethane having a material hardness of 65 Shores A Scale.

95. The method of embodiment 85, in which the squeegee material comprises polyurethane having a material hardness of 75 Shores A Scale.

96. The method of embodiment 85, in which the substrate and a frame of the metallic screen are held at a fixed distance during the transferring of the conductive ink, the fixed distance ranging from about 0.65 millimeters to about 0.75 millimeters.

97. The method of embodiment-85, in which the metallic screen is coupled to a trame with a screen tension ranging from about 20 N/cm to about 30 N/cm.

98. A method of screen-printing a conductive ink onto a substrate to form a test strip, the method comprising:

   (i) dispensing the conductive ink on a screen, the screen being made of a material that does not irreversibly deform when subjected to pressures greater than 4. bars by a squeegee;
   (ii) locating the substrate proximate the screen; and
   (iii) transferring the conductive ink onto the substrate with a squeegee having a hardness greater than 55 Shores Hardness A scale.

99. The method of embodiment 98, in which the material of the screen does not irreversibly deform when in contact with solvents in the carbon ink.

100. The method of embodiment 99, in which the squeegee comprises a polymer having a material hardness of 65 Shores A Scale.

101. The method of embodiment 99, in which the squeegee comprises polyurethane having a material hardness of 75 Shores A Scale.

102. A screen-printing device to print images onto a substrate, the device comprising:

   a roller configured to support and transport the substrate;
   a metallic screen mesh having an image mask of electrode tracks formed thereon, the screen mesh being in contact with the substrate proximate the roller;
   carbon ink disposed on the mesh, the ink having a viscosity of about 10,000 centistokes per second to about 40,000 centistokes per second; and
   a squeegee comprising a material having a Shore A Scale hardness characteristic greater than 55 and configured to force the carbon ink through the screen mesh by application of pressure to the squeegee greater than 4 bars to form an image of the electrode tracks on the substrate such that any variations in a length of the carbon electrode track as measured along a virtual line perpendicular to an axis between two side edges of a carbon electrode track in a strip is less than about 3.5% from a predetermined length and that any gap between any two working electrode tracks do not vary by more than about 30% from a predetermined gap.

103. A screen-printing device to print images onto a substrate, the device comprising,

   a roller configured to support and transport the substrate;
   a metallic screen mesh having an image mask of electrode tracks formed thereon, the screen mesh being in contact with the substrate proximate the roller;
   carbon ink disposed on the mesh, the ink having a viscosity of about 10,000 centistokes per second to about 40,000 centistokes per second; and
   a squeegee comprising a material having a Shore A Scale hardness characteristic greater than 55 and configured to force the carbon ink through the screen mesh by application of pressure to the squeegee greater than 4 bars to form an image of the electrode tracks on the substrate such that any variations in a length of the carbon electrode track as measured along a virtual line perpendicular to an axis between two side edges of a carbon electrode track in a strip is less than about 2.5% from a predetermined length and that any gap between any two working electrode tracks do not vary by more than about 30% from a predetermined gap.

104. The device of embodiment 103, in which the substrate comprises a polymer in roll form having a thickness of about 350 microns by about 370 millimeters wide and about 660 meters in length.

105. The device of embodiment 104, in which the polymer comprises polyester.

106. The device of any of embodiments 102 to 105, in which the metallic screen mesh comprises a plurality of stainless steel wires with each wire having a diameter of about 0.03 millimeters interwoven at a mesh angle of about 45 degrees to form a mesh with a mesh count of 125 per centimeter with mesh opening of 50 micrometers, open area of about 39%, and a mesh thickness of approximately 47 micrometers.

107. The device of any of embodiments 102 to 105, in which the predetermined length comprises approximately 0.84 millimeters and the predetermined gap comprises approximately 150 microns.

108. An analyte test strip comprising:

a substrate; and
carbon ink disposed on the substrate by a squeegee through a metallic screen to define carbon electrode tracks with each carbon electrode track extending along a. longitudinal axis so that any variations in a length of the carbon electrode track as measured along a virtual line perpendicular to an axis between two side edges of a carbon electrode track in one strip compared to a length of a carbon electrode track in other test strips, of a predetermined sample of test strips, is less than about 3.5%.

109. An analyte test strip comprising:

a substrate; and
a plurality of carbon electrode tracks disposed on the substrate via carbon ink deposition by a squeegee of greater than 55 Shore Hardness A scale through a metallic screen so that any minimum gap between any two working electrode tracks do not vary by more than 30% from a predetermined value.

110. An analyte test strip comprising:

a substrate; and
carbon ink disposed on the substrate by a squeegee through a metallic screen to define at least one carbon electrode track having a length as measured along a virtual line perpendicular to an axis between two side edges of the at least one track, in which any variations in the length compared to another length of another printed carbon track of at least one other test strip is less than about 3.5%.

111. An analyte test strip comprising:

a substrate; and
carbon ink disposed on the substrate by a squeegee through a metallic screen to define at least one carbon electrode track having a length as measured along a virtual line perpendicular to an axis between two side edges of the at least one track, in which any variations in the length compared to another length of another printed carbon track of at least one other test strip is less than about 2.5%.

112. The test strip of any one of embodiments 108 to 111, in which the at least one track comprises two carbon tracks printed on a substrate to define a test strip with a gap between the tracks, in which the gap do not vary by more than 30% from a predetermined value.

113. The test strip of any one of embodiments 108 to 111 in which the substrate comprises a polymer substrate.

114. The test strip of embodiment 113, in which the polymer substrate comprises a polymer selected from a group consisting essentially of polyester, polyethylene terephthalate, and combinations thereof.

115. The test strip of embodiment 114, in which the substrate comprises a generally planar configuration having a thickness of approximately 0.35 millimeter, a width of about 5.5 millimeters, and a length of about 27.5 millimeters.

116. The test strip of embodiment 112, in which the predetermined value comprises approximately 150 microns.

117. A method of manufacturing a test strip, the method comprising:

(i) dispensing a conductive ink on a metallic screen;
(ii) locating a substrate proximate to the metallic screen;
(iii) transferring the conductive ink onto the substrate with a squeegee;
(iv) calculating a working electrode area that causes the batch slope to be substantially equal to a predetermined target batch slope;
(v) transferring an insulation ink onto the conductive layer to form a working electrode having the calculated working electrode area;
(vi) calculating an amount of reduced mediator that causes the batch intercept to be substantially equal to a predetermined target batch intercept; and
(vii) transferring a reagent ink onto the working electrode, the reagent ink including the calculated amount of reduced mediator.

118. The method of embodiment 117 further comprising preparing the reagent ink, the preparation of the reagent ink including:

(i) mixing a solution that includes a rheological control agent for a predetermined amount of time;
(ii) measuring a density of the solution;
(iii) if the density is not within a targeted range, continuing to mix until the density is within the targeted range; and
(iv) upon the density being within the targeted range, blending a mediator and an enzyme with the solution to form the reagent ink.

119. The method of embodiment 117, in which the conductive ink comprises carbon ink.

120. The method of embodiment 117, in which the squeegee comprises a material having a hardness greater than about 55 Shores Hardness A scale.

121. The method of embodiment 117, in which the squeegee has a hardness greater than or equal to about 65 Shores Hardness A scale.

122. The method of embodiment 117, in which the squeegee has a hardness in the range from about 60 Shores Hardness A scale to about 75 Shores Hardness A scale.

123. The method of embodiment 117, in which the transferring of the conductive ink comprises applying the squeegee to the metallic screen with a pressure, the pressure being greater than about 5 bars.

124. The method of embodiment 120 or embodiment 121, in which the transferring of the conductive ink comprises applying the squeegee to the metallic screen with a pressure, the pressure being greater than 4 bars.

125. The method of embodiment 117, in which the squeegee comprises a material with a low absorption of solvents contained in the conductive ink.

126. The method of embodiment 117, in which the squeegee comprises a material that absorbs solvents contained in the conductive ink at a rate less than about 2% in one hour.

127. The method of embodiment 117, in which the squeegee comprises a material that absorbs solvents contained within the conductive ink at a rate less than about 8% in about twenty-one hours,

128. The method of any one of embodiments 125 to 127, in which the material comprises polyurethane having a material hardness of 65 Shores A Scale.

129. The method of any one of embodiments 125 to 127, in which the material comprises polyurethane having a material hardness of 75 Shores A Scale.

130. The method of embodiment 117, in which the metallic screen is coupled to a frame, where the substrate and the frame are held at a fixed distance during the transferring of the conductive ink, the fixed distance ranging from about 0.65 millimeters to about 0.75 millimeters.

131. The method of embodiment 117, in which the metallic screen is coupled to a frame with a screen tension ranging from about 20 N/cm to about 30 N/cm.

132. A method of manufacturing a test strip, the method comprising:

(i) dispensing a conductive ink on a screen, the screen being made of a material that does not irreversibly deform when subjected to pressures greater than 4 bars;
(ii) locating a substrate proximate to the screen;
(iii) transferring the conductive ink onto the substrate with a squeegee;
(iv) calculating a working electrode area that causes the batch slope to be substantially equal to a predetermined target batch slope;
(v) transferring an insulation ink onto the conductive layer to form a working electrode having the calculated working electrode area;
(vi) calculating an amount of reduced mediator that causes the batch intercept to be substantially equal to a predetermined target batch intercept; and
(vii) transferring a reagent ink onto the working electrode, the reagent ink including the calculated amount of reduced mediator.

133. The method of embodiment 132, in which the material of the screen does not irreversibly deform when in contact with solvents in the conductive ink.

134. The method of embodiment 132 further comprises preparing the reagent ink, the preparation of the reagent ink including:

(i) mixing a solution that includes a rheological control agent for a predetermined amount of time;
(ii) measuring a density of the solution;
(iii) if the density is not within a targeted range, continuing to mix until the density is within the targeted range; and
(iv) upon the density being within the targeted range, blending a mediator and an enzyme with the solution to form the reagent ink.

135. The method of embodiment 132, in which the conductive ink is carbon ink.

136. The method of embodiment 132, in which the squeegee has a hardness greater than about 55 Shores Hardness A scale.

137. The method of embodiment 132, in which the squeegee has a hardness greater than or equal to about 65 Shores Hardness A scale.

138. The method of embodiment 132, in which the squeegee has a hardness in the range from about 60 to about 75 Shores Hardness A scale.

139. The method of embodiment 132, in which the transferring of the conductive ink comprises applying the squeegee to the screen with a pressure, the pressure being greater than at least one of about 5 bars and about 4 bars.

140. The method of embodiment 132, in which the transferring of the conductive ink comprises applying the squeegee to the screen with a pressure, the pressure being 270N of force per meter of squeegee.

141. The method of embodiment 132, in which the squeegee comprises a material with a low absorption of solvents contained in the conductive ink.

142. The method of embodiment 132, in which the squeegee comprises a material that absorbs solvents contained in the conductive ink at a rate less than about 2% in one hour.

143. The method of embodiment 132, in which the squeegee comprises a material that absorbs solvents contained within the conductive ink at a rate less than about 8% in about twenty-one hours.

144. The method of any one of embodiments 141 to 143, in which the material comprises polyurethane having a material hardness of 65 Shores A Scale.

145. The method of any one of embodiments 141 to 143, in which the material comprises polyurethane having a material hardness of 75 Shores A Scale.

146. The method of embodiment 132, in which the screen is coupled to a frame, where the substrate and the frame are held at a fixed distance during the transferring of the conductive ink, the fixed distance ranging from about 0.65 millimeters to about 0.75 millimeters.

147. The method of embodiment 132, in which the screen is coupled to a frame with a screen tension ranging from about 20 N/cm to about 30 N/cm.

148. A system configured to measure an analyte, the system comprising:

a test meter including:

a strip port connector,
a processor,
a memory, and
a display, in which the processor is coupled to the memory and the display; and

a test strip including:

a substrate;
a conductive layer disposed on the substrate; and
a reagent layer disposed on the conductive layer, the reagent layer including an added amount of reduced mediator so that a plurality of batch intercepts has a variation of less than about 15%.

149. The system of embodiment 148, in which the test meter is configured not to receive a calibration input when switching from a first test strip batch to a second test strip batch.

150. The system of embodiment 148, in which the test meter further includes user interface inputs and the processor is configured to disable all of the user interface inputs except for a single user interface input upon a display of an analyte value by the display.

151. The system of embodiment 148, in which the test meter further includes user interface inputs and the processor is configured to ignore any input from all of the user interface inputs except for a single user interface input upon a display of an analyte value by the display.

152. The system of embodiment 148, in which the added amount of reduced mediator is based on a target intercept, a percent reduced mediator impurity, and a background intercept.

153. The system of embodiment 152, in which the background intercept comprises an average based on a plurality of batch intercepts from previously made test strip batches.

154. The system of embodiment 152, in which the percent reduced mediator impurity is a proportional amount of reduced mediator associated with an oxidized mediator as an impurity where the reagent layer includes an amount of the oxidized mediator.

155. The system of embodiment 152, in which the added amount of reduced mediator is determined by calculating a difference between the target intercept and the background intercept, dividing by a constant, and then subtracting an amount of reduced mediator impurity.

156. The system of embodiment 152, in which the added amount of reduced mediator $F_{add}$ is generally defined by a relationship of $F_{add} = \dfrac{B_{target} - B_0}{K_{int}} - F_{imp}$, where is the target intercept, $B_0$ is the background intercept, $K_{int}$ is a constant, and $F_{imp}$ is an amount of reduced mediator associated with the oxidized mediator as an impurity.

157. The system of embodiment 152, in which the test strip further includes a working electrode, the working electrode having a calculated area based on a target slope and a previous batch slope, the previous batch slope obtained from a previously made test strip batch.

158. The system of any of embodiments 152 to 157, in which the test strip further includes a working electrode, the working electrode having a calculated area based on a target slope and a previous batch slope, the previous batch slope obtained from a previously made test strip batch; and in which the added amount of reduced mediator is determined by taking account of the calculated area.

159. The system of embodiment 157, in which the previous batch slope is not based on two or more batch slopes.

160. The system of any one of embodiments 152 to 156, in which the test strip further includes a working electrode, the working electrode having a calculated area based on a target slope and a previous batch slope, the previous batch slope obtained from a previously made test strip batch and in which the added amount of reduced mediator is determined by adjusting the background intercept and the constant to take account of the calculated area.

161. The system of embodiment 148, in which the plurality of test strip batches used to provide the plurality of batch intercepts comprise from about 10 batches to about 100 batches.

162. The system of embodiment 161, in which the plurality of test strip batches having a variation of 15% or less in batch intercepts is determined by calibrating about 600 or more test strips per test strip batch.

163. The system of embodiment 148, in which the added mediator comprises a reduced mediator,

164. The system of embodiment 148, in which the added mediator comprises ferrocyanide,

165. The system of embodiment 148, in which the added mediator comprises potassium ferrocyanide.

166. A method of performing an analyte measurement, the method comprising:

  inserting a test strip into a test meter, the test meter configured to not receive a calibration input, the test strip having a calculated enzyme working area and an added amount of reduced-mediator in the enzyme working area; measuring an analyte concentration upon application of a blood sample to an inlet of the test strip; and displaying an analyte concentration of the blood sample on a display of the test meter.

167. A method of performing an analyte measurement, the method comprising:

  inserting a test strip into a test meter, the test meter configured to a predetermined calibration input, the test strip having a calculated enzyme working area exposed to a blood sample and an added amount of reduced-mediator to the calculated enzyme working area so that the test strip is calibrated to the predetermined calibration input; measuring an analyte concentration upon application of a blood sample to an inlet of the test strip; and displaying an analyte concentration of the blood sample on a display of the test meter.

168. The method of any one of embodiments 166 or 167, further comprising: querying a user to select a flag to associate the flag with the analyte concentration.

169. The method of any one of embodiments 166 or 167 further comprising: disabling all of a plurality user interface inputs except for a single user interface input, the single user interface input configured to allow a user to select the flag.

170. The method of any one of embodiments 166 or 167, in which the calibration input is a set of values ascribed to a particular test strip batch.

171. The method of any one of embodiments 166 or 167, in which the calibration input comprises a batch intercept and a batch slope.

172. The method of any one of embodiments 166 or 167, in which the added amount of reduced mediator is based on a target intercept, a percent reduced mediator impurity, and a background intercept.

173. The method of any one of embodiments 166 or 167, in which the background intercept comprises an average based on a plurality of batch intercepts from previously made test strip batches.

174. The method of any one of embodiments 166 or 167, in which the percent reduced mediator impurity is a proportional amount of reduced mediator associated with an oxidized mediator as an impurity where the reagent layer includes an amount of the oxidized mediator.

175. The method of any one of embodiments 166 or 167, in which the added amount of reduced mediator is determined by calculating a difference between the target intercept and the background intercept, dividing by a constant, and then subtracting an amount of reduced mediator impurity.

176. The method of any one of embodiments 166 or 167, in which the added amount of reduced mediator $F_{add}$ is generally defined by a relationship of $F_{add} = \dfrac{B_{target} - B_0}{K_{int}} - F_{imp}$, , where $B_{target}$ is the target intercept, $B_0$ is the background intercept, $K_{int}$ is a constant, and $F_{imp}$ is an amount of reduced mediator associated with the oxidized mediator as an impurity.

177. The method of any one of embodiments 166 or 167, in which the test strip further includes a working electrode, the working electrode having a calculated area based on a target slope and a previous batch slope, the previous batch slope obtained from a previously made test strip batch,

178. The method of any one of embodiments 166 or 167, in which the previous batch slope is not based on two or more batch slopes.

179. The method of any one of embodiments 166 or 167, in which the plurality of test strip batches used to provide the plurality of batch intercepts comprise from about 10 batches to about 100 batches.

180. The method of embodiment 179, further comprising calibrating about 600 or more test strips per test strip batch to determine whether each of the 600 or more test strips has a variation of 15% or less in batch intercepts.

181. The method of any one of embodiments 166 or 167, in which the added reduced-mediator comprises potassium ferrocyanide.

182. The method of any one of embodiments 166 or 167, further comprising: prompting a user to select a flag to associate the flag with the analyte concentration.

While the invention has been described in terms of particular variations and illustrative figures, those of ordinary skill in the art will recognize that the invention is not limited to the variations or figures described. In addition, where methods and steps described above indicate certain events occurring in certain order, it is intended that certain steps do not have to be performed in the order described but in any order as long as the steps allow the embodiments to function for their intended purposes. Therefore, to the extent there are variations of the invention, which are within the spirit of the disclosure or equivalent to the inventions found in the claims, it is the intent that this patent will cover those variations as well.

**Claims**

1.  A method of manufacturing a plurality of test strips, the method comprising:

adjusting a working electrode area to output a batch slope that falls within a predetermined target batch slope range;

and/or

adjusting an amount of mediator in a reagent ink, to output a batch intercept that falls within a predetermined target batch intercept range.

2. A method according to claim 1 comprising:

adjusting a working electrode area to output a batch slope that falls within a predetermined target batch slope range;

and

adjusting an amount of mediator in a reagent ink, to output a batch intercept that falls within a predetermined target batch intercept range.

3. A method according to claim 1 or 2 in which:

the step of adjusting a working electrode area comprises adjusting a working electrode area to output a batch slope value that is substantially equal to a predetermined target batch slope value;

and/or

the step of adjusting an amount of mediator comprises adjusting an amount of mediator to output a batch intercept value that is substantially equal to a predetermined target batch intercept value.

4. A method according to any preceding claim comprising:

adding an amount of reduced mediator to a plurality of batches of test strips so that the plurality of batch intercepts has a variation of less than about 15%.

5. A method according to any preceding claim, in which the added amount of reduced mediator $F_{add}$ is generally defined by a relationship of $F_{add} = \dfrac{B_{t\arg et} - B_0}{K_{int}} - F_{imp}$ where $B_{target}$ is the target intercept, $B_0$ is the background intercept, $K_{int}$ is a constant and $F_{imp}$ is an amount of reduced mediator associated with the oxidized mediator as an impurity.

6. A method according to any preceding claim in which the added amount of mediator is adjusted to take account of the adjusted working electrode area.

7. A method according to any preceding claim in which the reduced mediator in a reagent ink is not greater than 0.2% by weight of the reagent ink.

8. A method according to any preceding claim in which the reagent ink comprises a reduced mediator and an oxidized mediator where the reduced mediator is not greater than about 0.8% by weight of a sum of the reduced mediator and the oxidized mediator.

9. A method according to claim 8 in which the reduced mediator is not greater than about 0.6% by weight of a sum of the reduced mediator and the oxidized mediator.

10. A method according to any preceding claim in which the width of the working electrode is from about 0.6mm to about 0.8mm.

11. A method according to any preceding claim in which the area of the working electrode is from about 0.44mm$^2$ to about 0.68mm$^2$.

12. A method according to any preceding claim in which at least first and second working electrodes are provided and both have a width of about 0.55mm to about 0.85mm.

**13.** A system configured to measure an analyte, the system comprising:

a test meter including a strip port connector, a processor and a memory in which the processor is coupled to the memory, and test strip manufactured according to a method of any preceding claim comprising a substrate; a conductive layer disposed on the substrate; and a reagent layer disposed on the conductive layer, the reagent layer including an amount of reduced mediator so that a plurality of batch intercepts has a variation of less than about 15%.

104
SECTION 4
INSULATION PRINT STATION

103
SECTION 3
CARBON PRINT STATION

102
SECTION 2
PRECONDITIONING STATION (NO PRINTING)

101
SECTION 1
UNWINDER UNIT

105
SECTION 5
ENZYME 1 PRINT STATION

106
SECTION 6
ENZYME 2 PRINT STATION

107
SECTION 7
REWINDER UNIT

108
SECTION 8
PUNCH

FIG. 1

FIG. 2A

SECTION 1
UNWINDER UNIT

SECTION 2
PRE-CONDITIONING STATION

WEB MATERIAL DIRECTION

FIG. 2B

SECTION 3
CARBON PRINT STATION

SECTION 4
INSULATION PRINT STATION

SECTION 5
ENZYME 1 PRINT STATION

WEB MATERIAL DIRECTION

SECTION 7
REWINDER UNIT

SECTION 6
ENZYME 2 PRINT STATION

239

238    237

237c

236    234

233

231

240

235

241

232

242

WEB MATERIAL DIRECTION

608

FIG. 2C

EP 2 284 528 A1

FIG. 3B

FIG. 3A

FIG. 6A

FIG. 5

**FIG. 4A**

605
606-2
606-1
606

**FIG. 4C**

**FIG. 4B**

10L
D
12L
14L

301

EP 2 284 528 A1

301

L

L

1000

600

303

242

**FIG. 6B**

CORNER 1

CORNER 2

FRAME

MESH

ARTWORK TOP

b

a

DATUM
CORNER

FRAME ID AND
LABELLING

**FIG. 6C**

FIG. 7A

FIG. 7B

FIG. 7C

FIG. 8A

80 {

70 {

60 {

22b

22a

16 {

11    15

17

50 {

13

5

**FIG. 8B**

FIG. 8C

FIG. 8D

FIG. 8E

FIG. 8F

FIG. 9

WITHIN RUN SLOPE AND Y2 CHANGE

FIG. 10

FIG. 11

FIG. 12

FIG. 13

AVERAGE W1W2 GAP REDUCTION vs CARD
95% CI FOR THE MEAN

FIG. 14

AVERAGE W1W2 GAP REDUCTION vs CARD vs SQUEEGEE PRESSURE
95% CI FOR THE MEAN

FIG. 15

AVERAGE W1W2 GAP vs SQUEEGEE HARDNESS AND SQUEEGEE PRESSURE

FIG. 16

THICKNESS vs SCREEN TYPE DOE 1

FIG. 17

65 shA squeegee
# FIG. 18A

65 shA squeegee
# FIG. 18B

65 shA squeegee
# FIG. 18C

65 shA squeegee
# FIG. 18D

75 shA squeegee
# FIG. 18E

75 shA squeegee
# FIG. 18F

75 shA squeegee
# FIG. 18G

75 shA squeegee
# FIG. 18H

5 Bar

5 Bar

5 Bar

6 Bar

FIG. 19

FIG. 20

FIG. 21

FIG. 22

EP 2 284 528 A1

FIG. 23A

FIG. 24

EP 2 284 528 A1

AVERAGE INTERCEPT OBTAINED AT CALIBRATION FOR ULTRA LOTS MANUFACTURED
USING FERRICYANIDE LOT ....128 AS A FUNCTION OF TOTAL FERROCYANIDE LOADING
POINTS ARE AVERAGE OF 69 LOTS WITH 0.2 g ADDED, 61 LOTS WITH
1.2 g ADDED AND 52 LOTS WITH 3.3 g ADDED.

$Y = 65.519X + 258.4$

$R^2 = 1$

$B_0 = 258$ nA

INTERCEPT / nA

TOTAL FERRO ( FERRO IMPURITY + ADDED FERRO ) / g PER INK

FIG. 23B

EP 2 284 528 A1

BASELINE INTERCEPT FOR CYCLES 11-14
(EACH POINT = 1 RUN)

FIG. 23C

FIG. 25

FIG. 26A

EP 2 284 528 A1

FIG. 26B

2700

2704

PRE SCREEN BATCH ( e.g. 150K STRIPS ≅ 300 CARDS ≅ 0.15 ROLL ) TO CALIBRATE.

2708

2711

2702

SET LEVER FOR SLOPE ( e.g. BY SELECTING WORKING ELECTRODE AREA, AND / OR WIDTH X3 AND / OR LENGTH Y2 USING EQ.6 )

MEASURE IMPURITY LEVEL IN MEDIATOR e.g. FERROCYANIDE IN POTASSIUM FERRICYANIDE

2709

SET LEVER FOR INTERCEPT ( e.g. USING WORKING ELECTRODE AREA AND / OR WIDTH X3 AND / OR LENGTH Y2 USING EQ9A. )

ESTIMATE BASELINE INTERCEPT B₀ FROM CONTEMPERANEOUS PRODUCTION DATA.

2710

VERIFICATION RUN

2703

2712

CONFIRM LEVERS

NO

YES

2714

PRODUCE BATCHES

FIG. 27A

2701

2702

2704

MEASURE FERROCYANIDE IMPURITY LEVEL IN
POTASSIUM FERRICYANIDE RAW MATERIAL.

ESTIMATE BASELINE INTERCEPT FROM
CONTEMPORANEOUS PRODUCTION DATA.

PRESCREEN BATCH ( e.g. 150 K
STRIPS ≅ 300 CARD )

2703

2706 — SET LEVER
FOR INTERCEPT

SET LEVER
FOR SLOPE — 2708

VERIFICATION RUN — 2710

CONFIRM LEVERS — 2712

PRODUCE BATCHES — 2714

FIG. 27B

FIG. 28

2800

2900 PROCESSOR

2908

CORE

2910
ROM

2912
RAM

2918
CLOCK

2916
A/D
CONVERTER

2914
I/O PORTS

2812
STRIP PORT
CONNECTOR

2904
ASIC

2905
ANALOG
INTERFACE

2902
MEMORY

2813
DATA PORT

2806, 2808,
2810
USER
INTERFACE
BUTTONS

2936
DISPLAY
DRIVER

2804
DISPLAY

FIG. 29

FIG. 30

FIG. 31

FIG. 32

Europäisches
Patentamt

European
Patent Office

Office européen
des brevets

# EUROPEAN SEARCH REPORT

**Application Number**

EP 10 18 7784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 312 042 B1 (PETYT ADRIAN [GB] ET AL) 25 December 2007 (2007-12-25) | 1,3, 10-12 | INV. G01N27/30 C12Q1/00 G01N33/487 |
| Y | * column 4, lines 21-40 * <br> * column 7, lines 44-57 * <br> * column 8, lines 19-51 * | 2,6 | |
| X | US 2004/055898 A1 (HELLER ADAM [US] ET AL) 25 March 2004 (2004-03-25) | 1,3-5, 7-9,13 | |
| Y | * paragraphs [0092], [0105], [0107], [0108], [0135], [0138] * <br> * paragraphs [0120], [0128] * | 2,6 | |
| Y | US 2007/045126 A1 (BEER GREG P [US] ET AL) 1 March 2007 (2007-03-01) <br> * paragraphs [0022], [0038] - [0040], [0043], [0045], [0048], [0049] * | 2,6 | |
| A,P | WO 2008/134561 A (ABBOTT DIABETES CARE INC [US]; KARINKA SHRIDHARA ALVA [US]; WANG YI [U) 6 November 2008 (2008-11-06) <br> * pages 16,17 * | 1-12 | |

**TECHNICAL FIELDS SEARCHED (IPC)**

G01N
C12Q

The present search report has been drawn up for all claims

| Place of search | Date of completion of the search | Examiner |
|---|---|---|
| Munich | 8 December 2010 | Stussi, Elisa |

EPO FORM 1503 03.82 (P04C01)

## ANNEX TO THE EUROPEAN SEARCH REPORT
## ON EUROPEAN PATENT APPLICATION NO.

EP 10 18 7784

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2010

| Patent document cited in search report | | Publication date | Patent family member(s) | | Publication date |
|---|---|---|---|---|---|
| US 7312042 | B1 | 25-12-2007 | CA<br>CN<br>EP<br>JP<br>US<br>WO | 2667356 A1<br>101563605 A<br>2078194 A2<br>2010507805 T<br>2008101983 A1<br>2008051407 A2 | 02-05-2008<br>21-10-2009<br>15-07-2009<br>11-03-2010<br>01-05-2008<br>02-05-2008 |
| US 2004055898 | A1 | 25-03-2004 | NONE | | |
| US 2007045126 | A1 | 01-03-2007 | NONE | | |
| WO 2008134561 | A | 06-11-2008 | AU<br>CA<br>CN<br>EP<br>JP<br>US | 2008245601 A1<br>2685370 A1<br>101715554 A<br>2147304 A1<br>2010525371 T<br>2009011449 A1 | 06-11-2008<br>06-11-2008<br>26-05-2010<br>27-01-2010<br>22-07-2010<br>08-01-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61022218 A
- US 61029301 A
- US 61043080 A
- US 61043086 A
- US 61051285 A
- US 61060353 A
- WO 2004040287 A
- WO 2004040948 A
- WO 2004040005 A
- WO 2004039600 A
- WO 2004040290 A
- WO 2004040285 A
- WO 2004039897 A
- WO 200173109 A
- US 20080066305 A
- US 20070045126 A
- US 4245554 A